(19)

Europäisches
Patentamt
European
Patent Office
Office européen
des brevets

(11) **EP 4 539 349 A1**

(12) **EUROPEAN PATENT APPLICATION**

(43) Date of publication:
**16.04.2025 Bulletin 2025/16**

(21) Application number: **24204705.8**

(22) Date of filing: **04.10.2024**

(51) International Patent Classification (IPC):
**H04B 7/024** (2017.01)    **H04W 84/12** (2009.01)
**H04W 92/20** (2009.01)    **H04B 7/06** (2006.01)

(52) Cooperative Patent Classification (CPC):
**H04B 7/024; H04W 84/12; H04W 92/20;**
H04B 7/0617

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **04.10.2023 US 202363542328 P**

(71) Applicant: **Comcast Cable Communications LLC
Philadelphia, Pennsylvania 19103 (US)**

(72) Inventors:
• ZHANG, Jiayi
  Philadelphia, 19103 (US)
• LANANTE, Leonardo Alisasis
  Philadelphia, 19103 (US)
• DINAN, Esmael Hejazi
  Philadelphia, 19103 (US)
• KIM, Jeongki
  Philadelphia, 19103 (US)

(74) Representative: **V.O.
P.O. Box 87930
2508 DH Den Haag (NL)**

(54) **SPATIAL MAPPING COORDINATION FOR MULTI-ACCESS POINT COMMUNICATION**

(57)    Multiple access points may communicate with one or more computing devices. Spatial mapping information may be shared to facilitate multiple access point communication in a network. The spatial mapping infor-mation may be updated and used, for example, for the multiple access points communicating with one or more computing devices

FIG. 17

**Description**

CROSS-REFERENCE TO RELATED APPLICATIONS

This application claims the benefit of U.S. Provisional Application No. 63/542,328, filed on October 4, 2024. The above referenced application is hereby incorporated by reference in its entirety.

BACKGROUND

One or more access points communicate with computing devices, such as stations. Data units are communicated between the one or more access points and stations.

SUMMARY

The following summary presents a simplified summary of certain features. The summary is not an extensive overview and is not intended to identify key or critical elements.

One or more access points may communicate with one or more computing devices, such as stations. A process such as a joint sounding procedure may be initiated to allow multiple access points sharing a common channel to communicate with one or more stations. Spatial mapping information, comprising an orthonormal matrix for a first access point communicating with one or more stations, may be shared in the process. An updated spatial mapping information, comprising the orthonormal matrix for the first access point and another orthonormal matrix for a second access point, may be determined and used for communicating with the stations. This method may improve reliability and reduce latency for communication between the multiple access points and stations.

These and other features and advantages are described in greater detail below.

BRIEF DESCRIPTION OF THE DRAWINGS

Some features are shown by way of example, and not by limitation, in the accompanying drawings. In the drawings, like numerals reference similar elements.

FIG. 1 shows example wireless communication networks.

FIG. 2 shows example of a station and an access point in a communication network.

FIG. 3 shows an example Medium Access Control (MAC) frame format.

FIG. 4 shows an example management frame which may be used as an action frame.

FIG. 5 shows an example control frame which may be used as a trigger frame.

FIG. 6 shows an example data frame which may be used as a Quality of Service (QoS) null frame.

FIG. 7 shows an example format of a physical layer (PHY) protocol data unit (PPDU).

FIG. 8 shows an example multi-AP network.

FIG. 9 shows an example network that includes a coordinated AP set.

FIG. 10 shows an example multi-AP operation procedure.

FIG. 11 shows an example multi-AP sounding phase.

FIG. 12 shows an example multi-AP downlink data transmission phase.

FIG. 13 shows an example multi-AP uplink data transmission phase.

FIG. 14 shows another example format of a PPDU.

FIG. 15 shows an example generation of symbols in a training field of the PPDU.

FIG. 16 shows an example of a multi-AP sounding procedure.

FIG. 17 shows an example of a spatial mapping coordination procedure for multi-AP communication.

FIG. 18 shows an example of a spatial mapping coordination procedure for multi-AP communication.

FIG. 19 shows an example of a spatial mapping coordination procedure for multi-AP communication.

FIG. 20 is shows an example of a spatial mapping coordination procedure for multi-AP communication.

FIG. 21 shows an example management frame.

FIG. 22 shows an example action frame.

FIG. 23 shows an example QoS null frame.

FIG. 24 shows an example process of spatial mapping.

FIG. 25 shows an example process of spatial mapping.

FIG. 26 shows an example process of spatial mapping.

FIG. 27 shows example elements of a computing device that may be used to implement any of the various devices described herein

DETAILED DESCRIPTION

The accompanying drawings and descriptions provide examples. It is to be understood that the examples shown in the drawings and/or described are non-exclusive, and that features shown and described may be practiced in other examples. Examples are provided for operation of wireless communication systems.

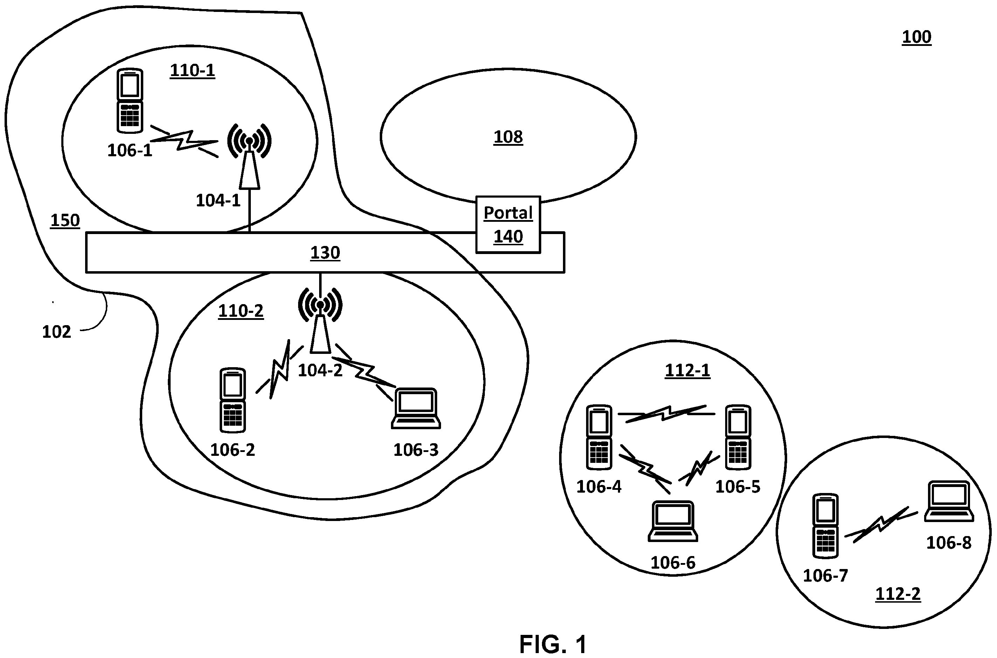

FIG. 1 shows example wireless communication networks. The example wireless communication networks may be a wireless local area network (WLAN) 102. The WLAN 102 may comprise an Institute of Electrical and Electronic Engineers (IEEE) 802.11 infra-structure network, or any other type of communication network. The WLAN 102 may comprise one or more basic service sets (BSSs) 110-1 and 110-2. BSSs 110-1 and 110-2 may each include a set of an access point (AP or AP STA) and at least one station (STA or non-AP STA). For example, BSS 110-1 includes an AP 104-1 and a STA 106-1, and BSS 110-2 includes an AP 104-2 and STAs 106-2 and 106-3. The AP and the at least one STA in a BSS may be configured to perform an association procedure to communicate with each other.

The WLAN 102 may comprise a distribution system (DS) 130. DS 130 may be configured to connect BSS 110-1 and BSS 110-2. DS 130 may enable an extended service set (ESS) 150 by being configured to connect BSS 110-1 and BSS 110-2. The ESS 150 may be a network comprising one or more Aps (e.g., Aps 104-1 and AP 104-2) that may be connected via the DS 130. The APs included in ESS 150 may have the same service set identification (SSID). WLAN 102 may be coupled to one or more external networks. For example, WLAN 102 may be connected to another network 108 (e.g., 802.X) via a portal 140. Portal 140 may function as a bridge connecting DS 130 of WLAN 102 with the other network 108.

The example wireless communication networks may also, or alternatively, comprise one or more ad-hoc networks and/or independent BSSs (IBSSs). For example, FIG. 1 shows example IBSSs, where STAs 106-4, 106-5 and 106-6 may be configured to form a first IBSS 112-1 and STAs 106-7 and 106-8 may be configured to form a second IBSS 112-2. An ad-hoc network and/or IBSS is a network that includes a plurality of STAs without a centralized communication device, such as an AP. The plurality of STAs may be configured to communicate without requiring the presence of an AP. For example, the plurality of STAs in the IBSS may communicate with each other using peer-to-peer communication (e.g., not via an AP). IBSSs do not include a centralized management entity (e.g., an AP) configured to perform a centralized management. STAs within an IBSS are managed in a distributed manner. STAs forming an IBSS may be fixed and/or mobile. The STAs (e.g., STAs 106-4, 106-5, 106-6, 106-7, 106-8) may or may not be permitted to access the DS 130 to constitute a self-contained network.

A computing device (e.g., wireless device and/or STA) may comprise one or more layers in accordance with the open systems interconnection (OSI) model. For example, STAs may comprise a medium access control (MAC) layer that may be in accordance with a defined standard (e.g., an IEEE 802.11 standard, or any other standard). A physical (PHY) layer interface for a radio medium may include the APs and the non-AP stations (STAs). The STA may comprise one or more of a computing device, a mobile terminal, a wireless device, a wireless transmit/receive unit (WTRU), user equipment (UE), a mobile station (MS), a mobile subscriber unit, and/or a user device. For example, with respect to wireless LAN communications, a device participating in uplink multi-user, multiple input, multiple output (MU-MIMO) and/or uplink orthogonal frequency division multiple access (OFDMA) transmission may be referred to as a STA. STAs may not be limited to only participating in wireless LAN communications, and may perform other types of communications, operations, and/or procedures.

A frequency band to be used for communication may include multiple sub-bands and/or frequency channels. For example, messages (e.g., data packets, physical layer protocol data units (PPDUs)) conforming to the IEEE 802.11 standard (e.g., IEEE 802.11n, 802.11ac, 802.11ax, 802.11be, etc., standards) may be sent (e.g., transmitted) over the 2.4, 5 GHz, and/or 6 GHz bands. Each of the bands may be divided into multiple 20 MHz channels. PPDUs conforming to the IEEE 802.11 standard may be sent, for example, via a physical channel with a minimum bandwidth of 20 MHz. Larger channels may be formed through channel bonding. For example, the PPDUs may be sent via physical channels with bandwidths of 40 MHz, 80 MHz, 160 MHz, 520 MHz, or any other frequency greater than 20 MHz, by bonding together multiple 20 MHz channels.

A PPDU may be a composite structure that may comprise a PHY (physical layer) preamble and a payload in the form of a physical layer convergence protocol (PLCP) service data unit (PSDU). For example, the PSDU may comprise a PLCP preamble and header, and/or one or more MAC protocol data units (MPDUs). Information indicated by the PHY preamble may be used by a receiving device to decode subsequent data in the PSDU. Preamble fields may be duplicated and sent in each of multiple component channels in a bonded channel, for example, if the PPDU is sent via the bonded channel. The PHY preamble may comprise both a legacy portion (e.g., a legacy preamble) and a non-legacy portion (e.g., a non-legacy preamble). The legacy preamble may be used for packet detection, automatic gain control and channel estimation, etc. The legacy preamble also may generally be used to maintain compatibility with legacy devices. The information provided in, and the format and coding of the non-legacy portion of the preamble may be based on the particular IEEE 802.11 protocol to be used to send the payload.

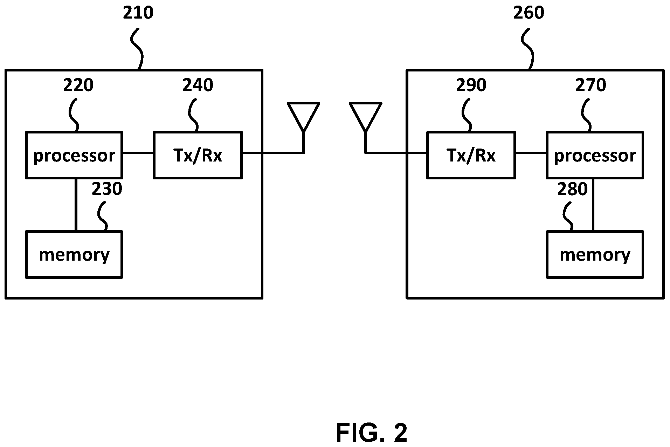

FIG. 2 shows example devices in a communication network. The communication network of FIG. 2 may comprise multiple devices (e.g., communication devices 210 and 260). The communication devices 210 and 260 may perform various functions and procedures as described herein. For example, the communication device 210 may operate as an AP (e.g., an AP STA) and the communication device 260 may operate as a STA (e.g., a non-AP STA). The communication device 210 may operate as a STA (e.g., a non-AP STA) and the communication device 260 may operate as an AP (e.g., an AP STA). Also, or alternatively, the communication device 210 and the communication device 260 may both operate as STAs (e.g., a non-AP STAs) or may both operate as APs (e.g., AP STAs).

The communication device 210 may comprise at least one processor 220, a memory 230, and/or at least one transceiver (e.g., RF unit) 240. The communication device 260 may comprise at least one processor 270, memory 280, and/or at least one transceiver (e.g., RF unit) 290. The transceivers (e.g., transceivers 240, 290) may send/receive radio signals. The transceivers may operate as a PHY layer (e.g., a PHY layer in accordance with an IEEE 802.11 protocol, a 3rd generation partnership project (3GPP) protocol, etc.). The processors (e.g., processors 220, 270) may operate as a PHY layer and/or MAC layer. The processors may be operatively connected to the transceivers, respectively. The communication devices 210 and/or 260 may be a multi-link device (MLD), that is a device capable of operating over multiple links (e.g., as defined by the IEEE 802.11be standard amendment). A MLD has multiple PHY layers. The multiple PHY layers may be implemented using one or more of transceivers 240 and/or 290. Processor 220 and/or 270 may implement functions of the PHY layer, the MAC layer, and/or a logical link control (LLC) layer of the corresponding communication devices 210 and/or 260.

The processors and/or the transceivers may comprise an application specific integrated circuit (ASIC), other chipset, logic circuit, and/or data processor. The memory (e.g., memory 230, 280) may include read-only memory (ROM), random access memory (RAM), flash memory, memory card, storage medium and/or other storage unit. The procedures described herein may be executed by modules that perform various functions described herein (e.g., in accordance with instructions stored in the memory). The modules can be stored in the memory and executed by the processor. The memory may be integrated with the processor or may be external to the processor. The memory may be operatively connected to the processor. The processor may implement the functions, processes and/or methods as described herein. For example, the processor 220 may be implemented to perform operations of the AP as described herein. For example, the processor 270 may be implemented to perform operations of the STA as described herein. The memory may store instructions that, when executed by one or more processors, cause the communication device to perform methods as described herein. For example, the memory may be a non-transitory computer-readable medium comprising instructions that, when executed by the one or more processors, cause the one or more processors to perform methods and operations described herein. For example, the memory 230 may store instructions that, when executed by the processor 220, cause the processor 220 to perform operations of the AP as described herein. For example, the memory 280 may store instructions that, when executed by the processor 270, cause the processor 270 to perform operations of the STA as described herein.

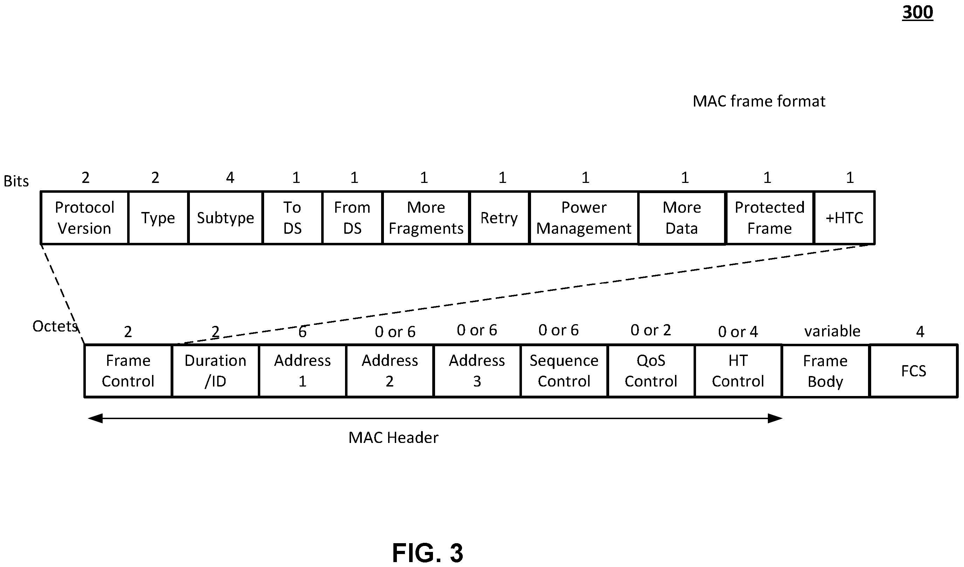

FIG. 3 shows an example format of a MAC frame 300. A STA in operation may construct a subset of MAC frames for transmission and may decode a subset of received MAC frames upon validation. The particular subsets of frames that a STA may construct and/or decode may be determined by the functions supported by the STA. A STA may validate a received MAC frame using the frame check sequence (FCS) contained in the frame and may interpret certain fields from the MAC headers of all frames. The MAC frame 300, as shown in FIG. 3, may include a MAC header, a variable length frame body, and a frame check sequence (FCS).

The MAC header may include a frame control field, an optional duration/ID field (not in PS-Poll frames), address fields, an optional sequence control field, an optional QoS control field (only in QoS Data frames), and an optional high throughput (HT) control field (only in +HTC frames). The frame control field may include the following subfields: protocol version, type, subtype, To DS, From DS, more fragments, retry, power management, more data, protected frame, and high throughput control (+HTC). The protocol version subfield may be invariant in size and placement across all revisions of the IEEE 802.11 standard. The value of the protocol version subfield may be 0 for MAC frames.

The type and subtype subfields together may identify the function of the MAC frame. There may be three frame types: control, data, and management. Each of the frame types may have several defined subtypes. Bits within the subtype subfield may be used to indicate a specific modification of the basic data frame (subtype 0). For example, in data frames, the most significant bit (MSB) of the subtype subfield, bit 7 (B7) of the frame control field, may be defined as the QoS subfield. QoS subfield may indicate a QoS subtype data frame, which is a data frame that contains a QoS control field in its MAC header. QoS subfield may indicate a QoS subtype data frame, which is a data frame that contains a QoS control field in its MAC header, for example, if the QoS subfield is set to 1. The second MSB of the subtype field, bit 6 (B6) of the frame control field may indicate a data frame that contains no frame body field. The second MSB of the subtype field, bit 6 (B6) of the frame control field may indicate a data frame that contains no frame body field, for example, if set to 1 in data subtypes. The To DS subfield may indicate whether a data frame is destined to the DS. The From DS subfield may indicate whether a data frame originates from the DS.

The more fragments subfield may be set to 1 in all data or management frames that have another fragment to follow of the MAC service data unit (MSDU) or MAC management protocol data unit (MMPDU) carried by the MAC frame. The more fragments subfield may be set to 0 in all other frames in which the more fragments subfield is present.

The retry subfield may be set to 1 in any data or management frame that is a retransmission of an earlier frame. The retry subfield may be set to 0 in all other frames in which the retry subfield is present. A receiving STA may use this indication to aid it in the process of eliminating duplicate frames. These rules may not use (e.g., apply) for frames sent by a STA under a block agreement.

The power management subfield may be used to indicate the power management mode of a STA. The More Data subfield may indicate to a STA in power save (PS) mode that bufferable units (BUs) are buffered for that STA at the AP. The more data subfield may be valid in individually addressed data or management frames sent (e.g., transmitted) by an AP to a STA in PS mode. The more data subfield may be set to 1 to indicate that at least one additional buffered BU is present for the STA.

The protected frame subfield may be set to 1 if the frame body field contains information that has been processed by a cryptographic encapsulation algorithm. The +HTC subfield may indicate that MAC frame 300 contains an HT control field. A frame that contains the HT Control field may be referred to as a +HTC frame. A Control Wrapper frame may be a +HTC frame.

The duration/ID field of the MAC header may indicate various contents depending on frame type and subtype and the QoS capabilities of the sending STA. For example, the duration/ID field, in control frames of the power save poll (PS-Poll) subtype, may carry an association identifier (AID) of the STA that sent (e.g., transmitted) the frame in the 14 least significant bits (LSB), and the 2 most significant bits (MSB) may be both set to 1. The duration/ID field, in other frames sent by STAs, may contain a duration value (in microseconds) which is used by a recipient to update a network allocation vector (NAV). The NAV may be a counter that indicates to a STA an amount of time during which it must defer from accessing the shared medium.

There may be up to four address fields in the format of MAC frame 300. These fields may be used to indicate the basic service set identifier (BSSID), source address (SA), destination address (DA), transmitter address (TA), and receiver address (RA). Certain frames might not contain some of the address fields. Certain address field usage may be specified by the relative position of the address field (1-4) within the MAC header, independent of the type of address present in that field. Specifically, the address 1 field may identify the intended receiver(s) of the frame, and the address 2 field, where present, may identify the transmitter of the frame.

The sequence control field may include two subfields, a sequence number subfield and a fragment number subfield. The sequence number subfield in data frames may indicate the sequence number of the MSDU (if not in an Aggregated MSDU (A-MSDU)) or A-MSDU. The sequence number subfield in management frames may indicate the sequence number of the frame. The fragment number subfield may indicate the number of each fragment of an MSDU or MMPDU. The fragment number may be set to 0 in the first or only fragment of an MSDU or MMPDU and may be incremented by one for each successive fragment of that MSDU or MMPDU. The fragment number may be set to 0 in a MAC protocol data unit (MPDU) containing an A-MSDU, or in an MPDU containing an MSDU or MMPDU that may not be fragmented. The fragment number may remain constant in all retransmissions of the fragment.

The QoS control field may identify the traffic category (TC) or traffic stream (TS) to which MAC frame 300 belongs. The QoS control field may also indicate various other QoS related, A-MSDU related, and mesh-related information about the frame. This information can vary by frame type, frame subtype, and type of sending (e.g., transmitting) STA. The QoS control field may be present in all data frames in which the QoS subfield of the subtype subfield is equal to 1.

The HT control field may be present in QoS data, QoS null, and management frames as determined by the +HTC subfield of the frame control field. The control frame subtype for which HT control field may be present is the control wrapper frame. A control frame described as +HTC (e.g., a request to send (RTS)+HTC, clear to send (CTS)+HTC, block acknowledgment (BlockAck) +HTC or block acknowledgment request (BlockAck-Req)+HTC frame) may imply the use of the control wrapper frame to carry that control frame.

The frame body field may be a variable length field that contains information specific to individual frame types and subtypes. The frame body field may include one or more MSDUs or MMPDUs. The minimum length of the frame body may be 0 octets.

The FCS field may contain a 32-bit Cyclic Redundancy Check (CRC) code. The FCS field value may be calculated over all of the fields of the MAC header and the frame body field.

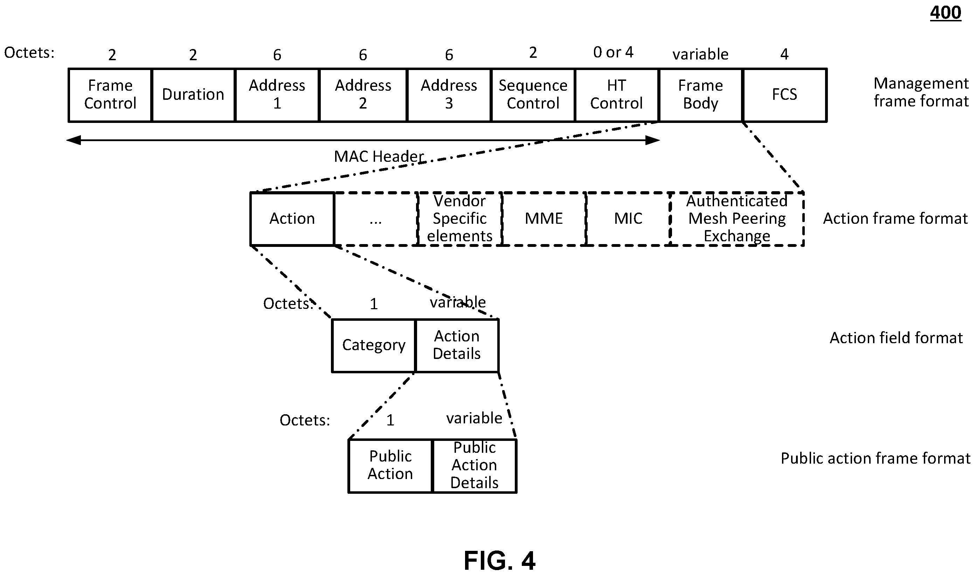

FIG. 4 shows an example management frame 400 which may be used as an action frame. Management frame 400 may include a MAC header, a variable length frame body, and a frame check sequence (FCS). The MAC header may include a frame control field, a duration field, an address 1 field, an address 2 field, an address 3 field, a sequence control field, and an optional HT control field. The presence of the HT control field may be determined by the setting of a +HTC subfield of the frame control field.

As shown in FIG. 4, the frame body of management frame may include an action field, vendor specific elements, management message integrity code element (MME), message integrity code (MIC), and an authenticated mesh peering exchange element. The frame body of management frame includes an action field, vendor specific elements, management message integrity code element (MME), message integrity code (MIC), and an authenticated mesh peering exchange element, for example, if used as an action frame.

The action field may include a category field and an action details field. The action field may provide a mechanism for specifying extended management actions. The category field may indicate a category of the action frame. The action details field may contain the details of the action requested by the action frame. For example, the action frame may be a public action frame. The action details field, as shown in FIG. 4 in the public action frame format, may include a public action field, in the octet immediately after the category field, followed by a variable length public action details field.

One or more vendor specific elements may be optionally present. These elements (e.g., one or more vendor specific elements) may be absent, for example, if the category subfield of the Action field is vendor-specific.

The MME may be present. The MME may be present, for example, if management frame protection is negotiated, the frame is a group addressed robust Action frame, and (MBSS only) the category of the action frame does not support group addressed privacy as indicated by category values; otherwise the MME may not be present.

The MIC element may be present in a self-protected action frame if a shared pairwise master key (PMK) exists between the sender and recipient of this frame; otherwise the MIC element may not be present. The authenticated mesh peering exchange element may be present in a self-protected action frame if a shared PMK exists between the sender and recipient of this frame; otherwise the authenticated mesh peering exchange element may not be present.

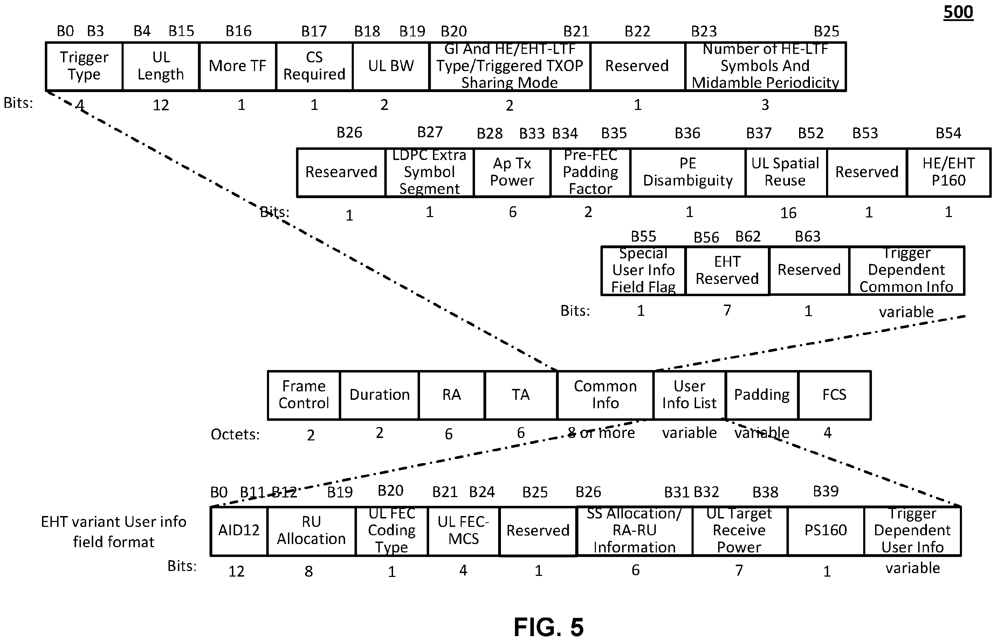

FIG. 5 shows an example format of a trigger frame 500. Trigger frame 500 may be used by an AP to allocate resources for and solicit one or more TB PPDU transmissions from one or more STAs. Trigger frame 500 may also carry other information required by a responding STA to send (e.g., transmit) a TB PPDU to the AP.

Trigger frame 500, as shown in FIG. 5, may include a Frame Control field, a Duration field, a receiver address (RA) field, a transmitter address (TA) field, a Common Info field, a User Info List field, a Padding field, and an FCS field. The Frame Control field may include the following subfields: protocol version, type, subtype, To DS, From DS, more fragments, retry, power management, more data, protected frame, and +HTC.

The Duration field may indicate various contents depending on frame type and subtype and the QoS capabilities of the sending STA. For example, the Duration field, in control frames of the power save poll (PS-Poll) subtype, may carry an association identifier (AID) of the STA that sent (e.g., transmitted) the frame in the 14 least significant bits (LSB), and the 2 most significant bits (MSB) may both be set to 1. The Duration field, in other frames sent by STAs, may contain a duration value (in microseconds) which is used by a recipient to update a network allocation vector (NAV).

The RA field may be the address of the STA that is intended to receive the incoming transmission from the sending (e.g., transmitting) station. The TA field may be the address of the STA sending (e.g., transmitting) trigger frame 500 if trigger frame 500 is addressed to STAs that belong to a single BSS. The TA field is the sent (e.g., transmitted) BSSID if trigger frame 500 is addressed to STAs from at least two different BSSs of the multiple BSSID set.

The Common Info field may specify a trigger frame type of trigger frame 500, a transmit power of trigger frame 500 in dBm, and several key parameters of a TB PPDU sent (e.g., transmitted) by a STA. The Common Info field may specify a trigger frame type of trigger frame 500, a transmit power of trigger frame 500 in dBm, and several key parameters of a TB PPDU sent (e.g., transmitted) by a STA, for example, based on (e.g., in response to) trigger frame 500. The trigger frame type of a trigger frame used by an AP to receive QoS data using UL MU operation may be referred to as a basic trigger frame. A non-EHT non-AP HE STA may interpret the Common Info field as HE variant. A non-AP EHT STA may interpret the Common Info field as HE variant if B54 and B55 in the Common Info field are equal to 1; and may interpret the Common Info field as EHT variant otherwise. The HE variant Common Info field and the EHT variant Common Info field may use the same encoding method for the Trigger Type, UL Length, More TF, CS Required, LDPC Extra Symbol Segment, AP TX Power, Pre-FEC Padding Factor, PE Disambiguity, and Trigger Dependent Common Info subfields.

The User Info List field may contain zero or more User Info fields. There may be three variants for the User Info field, which are the Special User Info field, the EHT variant User Info field, and the HE variant User Info field.

The Special User Info field may be a User Info field that does not carry the user specific information but carries the extended common information not provided in the Common Info field. The Special User Info Field Flag subfield of the EHT variant Common Info field may be set to 0. The Special User Info Field Flag subfield of the EHT variant Common Info field may be set to 0, for example, if the Special User Info field is included in the Trigger frame. Otherwise, the Special User Info Field Flag subfield of the EHT variant Common Info field may be set to 1. The Special User Info field may be identified by an AID12 value of 2007 and may be optionally present in a Trigger frame that is generated by an EHT AP. The Special User Info field, if present, may be located immediately after the Common Info field of the Trigger frame and carries information for the U-SIG field of a solicited EHT TB PPDU. The PHY Version Identifier subfield may indicate the PHY version of the solicited TB PPDU that is not an HE TB PPDU. The PHY Version Identifier subfield may be set to 0 for EHT. Other values from 1 to 7 may be reserved. The UL Bandwidth (BW) Extension subfield, together with the UL BW subfield in the Common Info field, may indicate the bandwidth of the solicited TB PPDU from the addressed EHT STA (i.e., the bandwidth in the U-SIG field of the EHT TB PPDU). The EHT Spatial Reuse n subfield may carry the values to be included in the corresponding Spatial Reuse n subfield in the U-SIG field of the EHT TB PPDU. The U-SIG Disregard And Validate subfield may carry the values to be included in the Disregard and Validate subfields of the U-SIG field of the solicited EHT TB PPDUs. The presence and length of the Trigger Dependent User Info subfield in the Special User Info field may depend on the variant of the Trigger frame.

The EHT variant User Info field may contain a User Info field per STA addressed in trigger frame 500. The per STA User Info field may include, among others, an AID12 subfield, an RU Allocation subfield, a UL FEC Coding Type subfield, a UL EHT-MCS subfield, a Reserved subfield, a Spatial Stream (SS) Allocation/RA-RU information subfield, a UL Target Receive Power subfield, and a Power Save (PS) 160 subfield to be used by a STA in a TB PPDU sent (e.g., transmitted). The per STA User Info field may include, among others, an AID12 subfield, an RU Allocation subfield, a UL FEC Coding Type subfield, a UL EHT-MCS subfield, a Reserved subfield, a Spatial Stream (SS) Allocation/RA-RU information subfield, a UL Target Receive Power subfield, and a Power Save (PS) 160 subfield to be used by a STA in a TB PPDU sent (e.g., transmitted), for example, based on (e.g., in response to) trigger frame 500, and a Trigger Dependent User Info subfield. The RU Allocation subfield in an EHT variant User Info field in a Trigger frame that is not an MU-RTS Trigger frame, along with the UL BW subfield in the Common Info field, the UL BW Extension subfield in the Special User Info field, and the PS160 subfield in the EHT variant User Info field, may identify the size and the location of the RU or MRU. The values of PS160 subfield and B0 of RU Allocation subfield may indicate the 80 MHz frequency subblock in which the RU or MRU is located for 26-tone RU, 52-tone RU, 106-tone RU, 242-tone RU, 484-tone RU, 996-tone RU, 52+26-tone RU, and 106+26-tone RU. The values of PS160 subfield may indicate the 160 MHz segment in which the RU or MRU is located for 2x996-tone RU, 996+484-tone MRU, and 996+484+242-tone MRU. The UL FEC Coding Type subfield of the User Info field may indicate the code type of the solicited EHT TB PPDU. The UL FEC Coding Type subfield may be set to 0 to indicate BCC and may be set to 1 to indicate LDPC. The UL EHT-MCS subfield of the User Info field may indicate the EHT-MCS of the solicited EHT TB PPDU. The SS Allocation subfield of the EHT variant User Info field may indicate the spatial streams of the solicited EHT TB PPDU. The UL Target Receive Power subfield may indicate the expected receive signal power, measured at the AP's antenna connector and averaged over the antennas, for the EHT portion of the EHT TB PPDU sent (e.g., transmitted) on the assigned RU. The Trigger Dependent User Info subfield may be used by an AP to specify a preferred access category (AC) per STA. The preferred AC may set the minimum priority AC traffic that may be sent by a participating STA. The AP may determine the list of participating STAs, along with the BW, MCS, RU allocation, SS allocation, Tx power, preferred AC, and maximum duration of the TB PPDU per participating STA. The RA-RU Information subfield may be reserved in the EHT variant User Info field.

The Padding field may be optionally present in trigger frame 400 to extend the frame length to give recipient STAs enough time to prepare a response for transmission one SIFS after the frame is received. The Padding field, if present, may be at least two octets in length and may be set to all 1s. The FCS field may be used by a STA to validate a received frame and to interpret certain fields from the MAC headers of a frame.

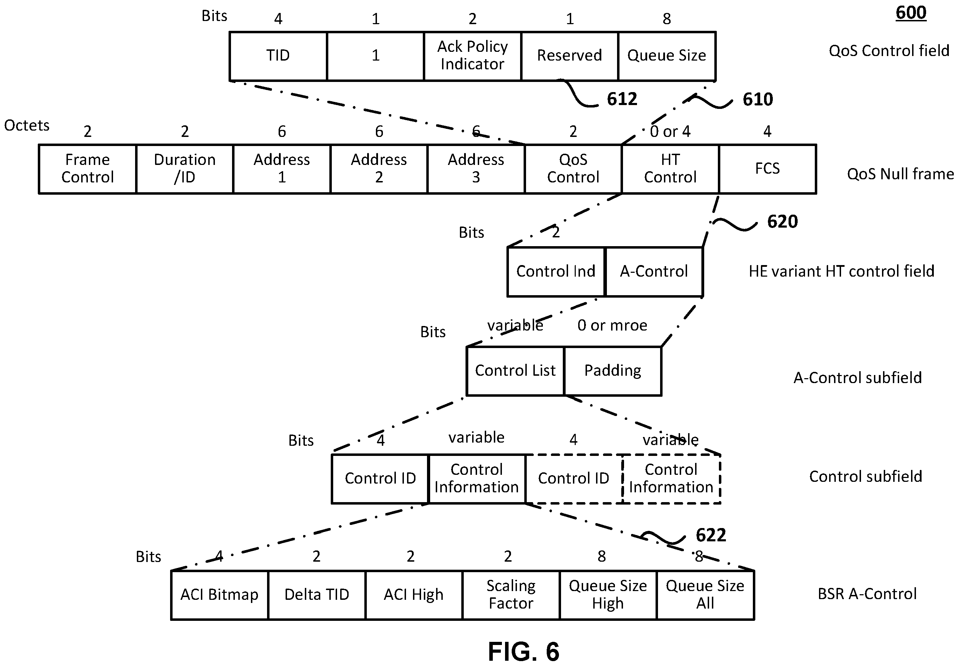

FIG. 6 shows an example data frame 600 which may be used as a QoS null frame. A QoS null frame may refer to a QoS data frame with an empty frame body. QoS null frame may include a QoS control field and an optional HT control field which may contain a buffer status report (BSR) control subfield. A QoS null frame indicating buffer status information may be sent (e.g., transmitted) by a STA to an AP. The QoS control field may include a traffic identifier (TID) subfield, an acknowledgment (Ack) policy indicator subfield, and a queue size subfield (or a transmission opportunity (TXOP) duration requested subfield).

The TID subfield may identify the TC or TS of traffic for which a TXOP is being requested, through the setting of the TXOP duration requested or queue size subfield. The encoding of the TID subfield may depend on the access policy (e.g., Allowed value 0 to 7 for enhanced distributed channel access (EDCA) access policy to identify user priority for either TC or TS). The ack policy indicator subfield, together with other information, may identify the Ack policy followed upon delivery of the MPDU (e.g., normal Ack, implicit block Ack request, no Ack, block Ack, etc.)

The queue size subfield may be an 8-bit field that indicates the amount of buffered traffic for a given TC or TS at the STA for transmission to the AP identified by the receiver address of the frame containing the subfield. The queue size subfield may be present in QoS null frames sent by a STA. The queue size subfield may be present in QoS null frames sent by a STA, for example, if bit 4 of the QoS control field is set to 1. The AP may use information contained in the queue size subfield to determine the TXOP duration assigned to the STA or to determine the uplink (UL) resources assigned to the STA.

The following rules in a frame sent by or to a non-high efficiency (non-HE) STA may use (e.g., apply) to the queue size value:

- The queue size value may be the approximate total size, rounded up to the nearest multiple of 256 octets and expressed in units of 256 octets, of all MSDUs and A-MSDUs buffered at the STA (excluding the MSDU or A-MSDU contained in the present QoS Data frame) in the delivery queue used for MSDUs and A-MSDUs with TID values equal to the value indicated in the TID subfield of the QoS Control field.

- A queue size value of 0 may be used solely to indicate the absence of any buffered traffic in the queue used for the specified TID.

- A queue size value of 254 may be used for all sizes greater than 64 768 octets.

- A queue size value of 255 may be used to indicate an unspecified or unknown size.

The following rules, in a frame sent by an HE STA to an HE AP, may use (e.g., apply) to the queue size value. The queue size value, *QS,* may be the approximate total size in octets, of all MSDUs and A-MSDUs buffered at the STA (including the MSDUs or A-MSDUs contained in the same PSDU as the frame containing the queue size subfield) in the delivery queue used for MSDUs and A-MSDUs with TID values equal to the value indicated in the TID subfield of the QoS control field.

The queue size subfield may include a scaling factor subfield in bits B14-B15 of the QoS control field and an unscaled value, UV, in bits B8-B13 of the QoS control field. The scaling factor subfield may provide the scaling factor, *SF.*

A STA may obtain the queue size, *QS,* from a received QoS control field, which contains a scaling factor, *SF,* and an unscaled value, *UV,* as follows:

$$QS = 16 \times UV,$$

$$QS = 1{,}024 + 256 \times UV, :$$

$$QS = 17{,}408 + 2{,}048 \times UV, \text{i}$$

$$QS = 148{,}480 + 32{,}768 \times UV, :$$

*QS* => 2,147,328, *if SF* equal to is 3 and UV is equal to 62; *QS* =*Unspecified* or *Unknown,* if *SF* is equal to 3 and UV is equal to 63.

The TXOP duration requested subfield, which may be included instead of the queue size subfield, may indicate the duration, in units of 32 microseconds (us), that the sending STA determines it needs for its next TXOP for the specified TID. The TXOP duration requested subfield may be set to 0 to indicate that no TXOP is requested for the specified TID in the current service period (SP). The TXOP duration requested subfield may be set to a nonzero value to indicate a requested TXOP duration in the range of 32 us to 8160 us in increments of 32 us.

The HT control field may include an aggregated control (A-Control) subfield. The A-Control subfield may include a control list subfield including one or more control subfields.

The control subfield may be a BSR control subfield, which may contain buffer status information used for UL MU operation. The BSR control subfield may be formed from an access category index (ACI) bitmap subfield, a delta TID subfield, an ACI high subfield, a scaling factor subfield, a queue size high subfield, and a queue size all subfield of the HT control field.

The ACI bitmap subfield may indicate the access categories for which buffer status is reported (e.g., B0: best effort (AC_BE), B1: background (AC_BK), B2: video (AC_VI), B3: voice (AC_VO), etc.). Each bit of the ACI bitmap subfield may be set to 1 to indicate that the buffer status of the corresponding AC is included in the queue size all subfield, and may be set to 0 otherwise. The buffer status of all 8 TIDs may be included. The buffer status of all 8 TIDs may be included, for example, if the ACI bitmap subfield is 0 and the delta TID subfield is 3. The delta TID subfield, together with the values of the ACI bitmap subfield, may indicate the number of TIDs for which the STA is reporting the buffer status.

The ACI high subfield may indicate the ACI of the AC for which the BSR is indicated in the queue size high subfield. The ACI to AC mapping may be defined as ACI value 0 mapping to AC_BE, ACI value 1 mapping to AC_BK, ACI value 2 mapping to AC_VI, and ACI value 3 mapping to AC_VO.

The scaling factor subfield may indicate the unit *SF,* in octets, of the queue size high and queue size all subfields. The queue size high subfield may indicate the amount of buffered traffic, in units of *SF* octets, for the AC identified by the ACI high subfield, that is intended for the STA identified by the receiver address of the frame containing the BSR control subfield.

The queue size all subfield may indicate the amount of buffered traffic, in units of *SF* octets, for all ACs identified by the ACI Bitmap subfield, that is intended for the STA identified by the receiver address of the frame containing the BSR control subfield. The queue size values in the queue size high and queue size all subfields may be the total sizes, rounded up to the nearest multiple of *SF* octets, of all MSDUs and A-MSDUs buffered at the STA (including the MSDUs or A-MSDUs contained in the same PSDU as the frame containing the BSR control subfield) in delivery queues used for MSDUs and A-MSDUs associated with AC(s) that are specified in the ACI high and ACI bitmap subfields, respectively.

A queue size value of 254 in the queue size high and queue size all subfields may indicate that the amount of buffered traffic is greater than 254 × *SF* octets. A queue size value of 255 in the queue size high and queue size all subfields may indicate that the amount of buffered traffic is an unspecified or unknown size. The queue size value of QoS data frames containing fragments may remain constant even if the amount of queued traffic changes as successive fragments are sent (e.g., transmitted).

MAC service may provide peer entities with the ability to exchange MSDUs. A local MAC uses the underlying PHY-level service to transport the MSDUs to a peer MAC entity to support this service (e.g., MAC service). Such asynchronous MSDU transport may be performed on a connectionless basis.

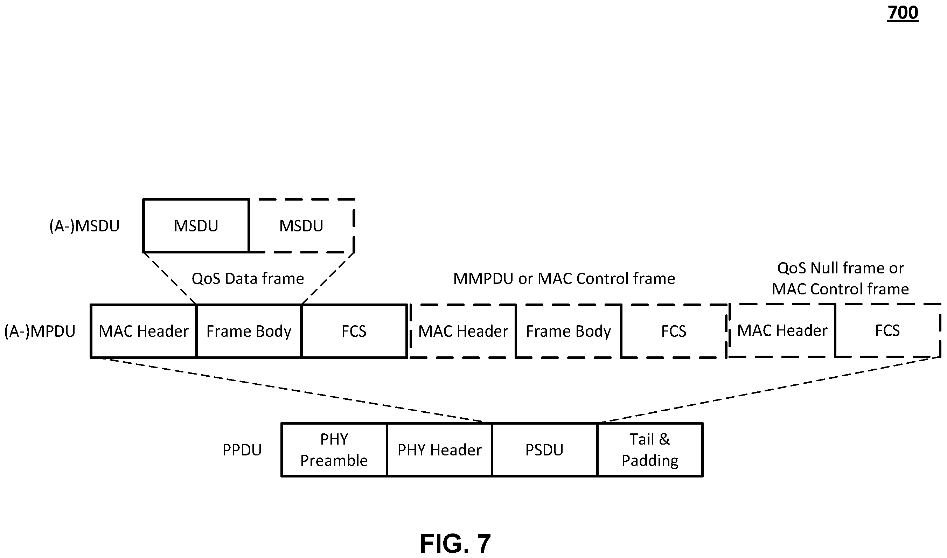

FIG. 7 shows an example format of a PPDU. The PPDU as shown may include a PHY preamble, a PHY header, a PSDU, and tail and padding bits. The PSDU may include one or more MPDUs, such as a QoS data frame, an MMPDU, a MAC control frame, or a QoS null frame. The frame body of the MPDU may include a MSDU or an A-MSDU. The frame body of the MPDU may include a MSDU or an A-MSDU, for example, if the case of an MPDU carries a QoS data frame,

MSDU transport, by default, may be on a best-effort basis. There may be no guarantee that a sent (e.g., transmitted) MSDU will be delivered successfully. The QoS facility may use a traffic identifier (TID) to specify differentiated services on a per-MSDU basis.

A STA may differentiate MSDU delivery according to designated traffic category (TC) or traffic stream (TS) of individual MSDUs. The MAC sublayer entities may determine a user priority (UP) for an MSDU based on a TID value provided with the MSDU. The QoS facility may support eight UP values. The UP values may range from 0 to 7 and may form an ordered sequence of priorities, with 1 being the lowest value, 7 the highest value, and 0 falling between 2 and 3.

An MSDU with a particular UP may belong to a traffic category with that UP. The UP may be provided with each MSDU at the medium access control service access point (MAC SAP) directly in an UP parameter. An A-MPDU may include MPDUs with different TID values.

A STA may deliver buffer status reports (BSRs) to assist an AP in allocating UL MU resources. The STA may either implicitly deliver BSRs in the QoS control field or BSR control subfield of any frame sent (e.g., transmitted) to the AP (unsolicited BSR) or explicitly deliver BSRs in a frame sent to the AP. The STA may either implicitly deliver BSRs in the QoS control field or BSR control subfield of any frame sent (e.g., transmitted) to the AP (unsolicited BSR) or explicitly deliver BSRs in a frame sent to the AP, for example, based on (e.g., in response to) a BSRP Trigger frame (solicited BSR).

The buffer status reported in the QoS control field may include a queue size value for a given TID. The buffer status reported in the BSR control field may include an ACI bitmap, delta TID, a high priority AC, and two queue sizes.

A STA may report buffer status to the AP, in the QoS control field, of sent (e.g., transmitted) QoS null frames and QoS data frames and, in the BSR control subfield (if present), of sent (e.g., transmitted) QoS null frames, QoS data frames, and management frames as defined below. The STA may report the queue size for a given TID in the queue size subfield of the QoS control field of sent (e.g., transmitted) QoS data frames or QoS null frames; the STA may set the queue size subfield to 255 to indicate an unknown/unspecified queue size for that TID. The STA may aggregate multiple QoS data frames or QoS null frames in an A-MPDU to report the queue size for different TIDs. The STA may report buffer status in the BSR control subfield of sent (e.g., transmitted) frames if the AP has indicated its support for receiving the BSR control subfield.

A High-Efficiency (HE) STA may report the queue size for a preferred AC, indicated by the ACI high subfield, in the queue size high subfield of the BSR control subfield. The STA may set the queue size high subfield to 255 to indicate an unknown/unspecified queue size for that AC.

A HE STA may report the queue size for ACs indicated by the ACI bitmap subfield in the queue size all subfield of the BSR control subfield. The STA may set the queue size all subfield to 255 to indicate an unknown/unspecified BSR for those ACs.

A multi-link device (MLD) may be an entity capable of managing communication over multiple links. The MLD may be a logical entity and may have more than one affiliated station (STA). An MLD may be an access point MLD (AP MLD) where a STA affiliated with the MLD may be an AP STA (or an AP). An MLD may be a non-access point MLD (non-AP MLD) where a STA affiliated with the MLD may be a non-AP STA (or an STA).

Communication across different frequency bands/channels may occur simultaneously, or not, depending on the capabilities of both the communicating AP MLD and non-AP MLD. An MLD may have a single MAC service access point (MAC-SAP) to the LLC layer, which may include a MAC data service. The MLD may support multiple MAC sublayers, coordinated by a sublayer management entity (SME). Each AP STA (or non-AP STA) affiliated with an AP MLD (or non-AP MLD) may have a different MAC address within the MLD.

The SME may be responsible for coordinating the MAC sublayer management entities (MLMEs) of the affiliated STAs of the MLD to maintain a single robust security network association (RSNA) key management entity as well as a single IEEE 802.1X Authenticator or Supplicant for multi-link operation (MLO). Multi-link operation (MLO) procedures may allow a pair of MLDs to discover, synchronize, (de)authenticate, (re)associate, disassociate, and manage resources with each other on any common bands or channels that are supported by both MLDs. The Authenticator and the MAC-SAP of an AP MLD may be identified by the same AP MLD MAC address. The Supplicant and the MAC-SAP of a non-AP MLD may be identified by the same non-AP MLD MAC address.

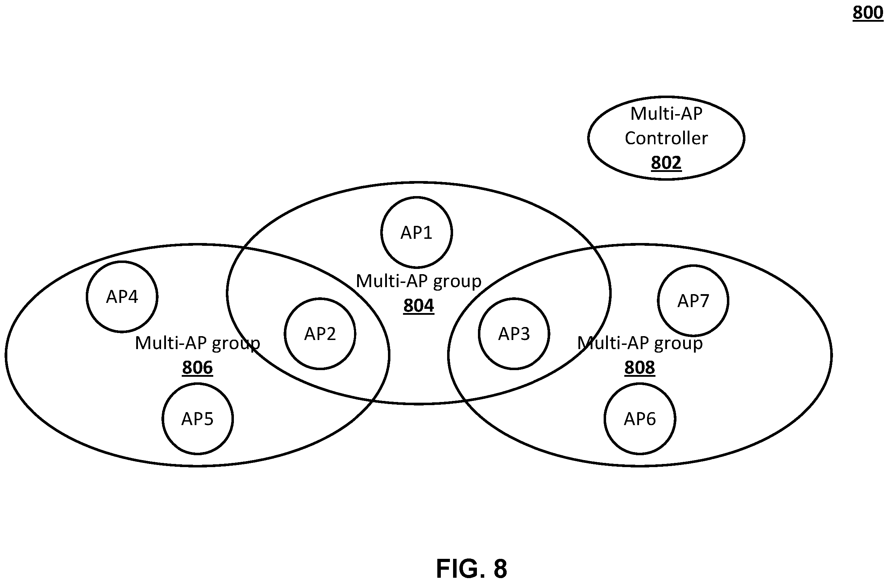

FIG. 8 shows an example multi-AP network 800. Example multi-AP network 800 may be a multi-AP network in accordance with the Wi-Fi Alliance standard specification for multi-AP networks. Multi-AP network 800, as shown in FIG. 8, may include a multi-AP controller 802 and a plurality of multi-AP groups (or multi-AP sets, or AP candidate sets), including multi-AP group 804, multi-AP group 806, and multi-AP group 808.

Multi-AP controller 802 may be a logical entity that implements logic for controlling the APs in multi-AP network 800. Multi-AP controller 802 may receive capability information and measurements from the APs and may trigger AP control commands and operations on the APs. Multi-AP controller 802 may also provide onboarding functionality to onboard and provision APs onto multi-AP network 800.

Multi-AP group 804, multi-AP group 806, and multi-AP group 808 may each include a plurality of APs. APs in a multi-AP group may be in communication range of each other. The APs in a multi-AP group may not be required to have the same primary channel. As used herein, the primary channel for an AP may refer to a default channel that the AP monitors for management frames and/or uses to send (e.g., transmit) beacon frames. For a STA associated with an AP, the primary channel may refer to the primary channel of the AP, which is advertised through the AP's beacon frames.

One of the APs in a multi-AP group, in one approach, may be designated as a master AP. The designation of the master AP may be done by multi-AP controller 802 or by the APs of the multi-AP group. The master AP of a multi-AP group may be fixed or may change over time between the APs of the multi-AP group. An AP that is not the master AP of the multi-AP group may be known as a slave AP.

A multi-AP group or an AP candidate set, in one approach, may be a set of APs that can initiate or participate in multi-AP coordination. An AP in a multi-AP group may participate as a slave AP in multi-AP coordination initiated by a master AP in the same multi-AP group. At least one AP in a multi-AP group may be capable of being a master AP.

APs in a multi-AP group, in one approach, may coordinate with each other, including coordinating transmissions within the multi-AP group. One aspect of coordination may include coordination to perform multi-AP transmissions within the multi-AP group. As used herein, a multi-AP transmission may be a transmission event in which multiple APs (of a multi-AP group or a multi-AP network) may send (e.g., transmit) simultaneously over a period. The period of simultaneous AP transmission may be a continuous period.

Multi-AP group coordination may be enabled by the multi-AP controller and/or by the master AP of the multi-AP group. The multi-AP controller and/or the master AP, in one approach, may control time and/or frequency sharing in a TXOP. The multi-AP controller and/or the master AP may control how time/frequency resources of the TXOP are to be shared with other APs of the multi-AP group. The multi-AP controller and/or the master AP may control how time/frequency resources of the TXOP are to be shared with other APs of the multi-AP group, for example, if one of the APs (e.g., the master AP) in the multi-AP group obtains a TXOP. The AP of the multi-AP group that obtains a TXOP may become the master AP of the multi-AP group. The master AP may then share a portion of its obtained TXOP (which may be the entire TXOP) with one or more other APs of the multi-AP group.

Multi-AP operation may be enabled by at least two APs that support multi-AP coordination within one or more multi-AP groups. The APs may support multi-AP transmission schemes in a multi-AP network. A master AP may coordinate with slave AP(s) to enable multi-AP coordination and to support a multi-AP transmission. Slave AP(s) may participate in a multi-AP transmission. The master AP may select the slave AP(s) which are suitable for the multi-AP transmission. Slave APs may be candidates for a multi-AP transmission before being designated by the master AP. Multi-AP transmission schemes may include transmission schemes such as coordinated OFDMA, coordinated time division multiple access (TDMA), coordinated spatial reuse, coordinated beamforming, joint transmission or reception (JT/JR), or a combination of two or more of the aforementioned schemes.

Coordinated OFDMA and coordinated TDMA may be categorized as coordinated TXOP, in which frequency or time resources of a TXOP may be used to coordinate the interference. Coordinated spatial reuse (CSR) may provide reuse of spatial domain of neighboring BSSs by adjusting the transmit powers of coordinated APs. Coordinated beamforming (CBF) may provide dedicated null steering with spatial radiation based on channel state information (CSI) feedback from coordinated APs with the aid of multiple antennas to suppress the interference. JT/JR may use distributed MIMO precoding or detection, via shared CSI, for data streams among multiple APs.

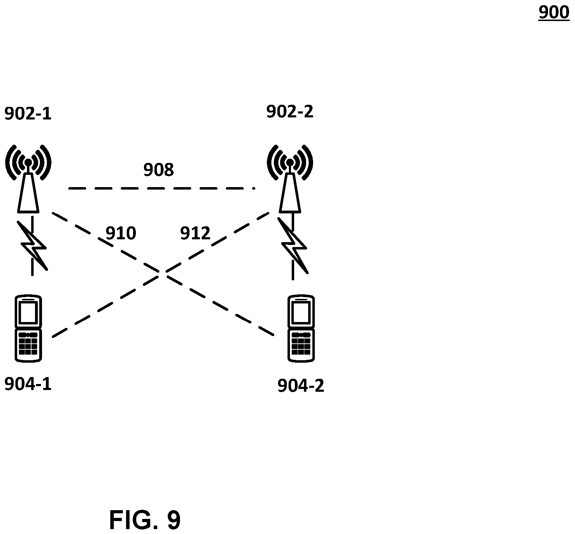

FIG. 9 shows an example network 900 that includes a coordinated AP set. The coordinated AP set, as shown in FIG. 9, may include AP 902-1 and AP 902-2. The coordinated AP set may be a subset of an established multi-AP group. At least one STA may be associated with each of APs 902-1 and 902-2. For example, a STA 904-1 may be associated with AP 902-1, and a STA 904-2 may be associated with AP 902-2.

APs 902-1 and 902-2 may belong to the same ESS as described above in FIG. 1. APs 902-1 and 902-2 may be connected by a DS to support ESS features. APs 902-1 and 902-2, as part of a coordinated AP set, may be connected by a backhaul. The backhaul may be used to share information quickly between APs to support coordinated transmissions. The shared information may be channel state information or data to be sent to associated STAs. The backhaul may be a wired backhaul or a wireless backhaul. A wired backhaul may be preferred for high-capacity information transfer without burdening the main radios of the APs. A wired backhaul may require a higher deployment cost and may place greater constraints on AP placement. A wireless backhaul may be preferred for its lower deployment cost and flexibility regarding AP placement. The APs may not send (e.g., transmit) or receive any data. The APs may not send (e.g., transmit) or receive any data, for example, if the wireless backhaul is being used because a wireless backhaul relies on the main radios of the APs to transfer information.

One of APs 902-1 and 902-2 may typically act as a Master AP and the other as a Slave AP. The Master AP may be the AP that is the owner of the TXOP. The Master AP may share frequency resources during the TXOP with the Slave AP. A Master AP may share its TXOP with only a subset of the coordinated AP set. A Master AP may share its TXOP with only a subset of the coordinated AP set, for example, if there are more than two APs in the coordinated set. The role of the Master AP may change over time. For example, the Master AP role may be assigned to a specific AP for a duration of time. The Slave AP role may similarly be chosen by the Master AP dynamically or may be pre-assigned for a duration of time.

Depending on the capability of APs in a coordinated AP set, the APs may only do certain type of coordinated transmissions. In FIG. 9, both APs may only perform CSR as a coordinated transmission scheme. Both APs may only perform CSR as a coordinated transmission scheme, for example, if AP 902-1 supports JT and CSR and AP 902-2 supports CSR and CBF. An AP may also prefer to perform single AP transmissions for a duration of time if the benefit of coordinated transmission does not outweigh some disadvantages with coordinated transmission such as reduced flexibility and increased computational power required.

CSR may be one type of multi-AP coordination that may be supported by AP 901-1 and AP 902-2 as shown in FIG. 9. Spatial reuse using CSR may be more stable than non-AP coordinated spatial reuse schemes such as overlapping basic service set (OBSS) packet detect (PD)-based SR and PSR-based SR. For example, APs 902-1 and 902-2, in an example network 900, may perform a joint sounding operation in order to measure path loss (PL) on paths of network 900. The joint sounding operation may result in the measurement of PL 908 for the path between APs 902-1 and 902-2, path loss 910 for the path between AP 902-1 and STA 904-2, and path loss 912 for the path between AP 902-2 and STA 904-1. The measured path loss information may then be shared between APs 902-1 and 902-2 (e.g., using the backhaul) to allow for simultaneous transmissions by APs 902-1 and 902-2 to their associated STAs 904-1 and 904-2 respectively. Specifically, one of APs 902-1 and 902-2 may obtain a TXOP to become the Master AP. The Master AP may then send a CSR announcement frame to the other AP(s). The Master AP may perform a polling operation, before sending the CSR announcement frame, to poll Slave APs regarding packet availability for transmission. The Master AP may proceed with sending the CSR announcement frame. The Master AP may proceed with sending the CSR announcement frame, for example, if at least one Slave AP responds indicating packet availability. The Master AP in the CSR announcement may limit the transmit power of a Slave AP in order to protect its own transmission to its target STA. The Slave AP may similarly protect its own transmission to its target STA by choosing a modulation scheme that enables a high enough Signal to Interference Ratio (SIR) margin to support the interference due to the transmission of the Master AP to its target STA.

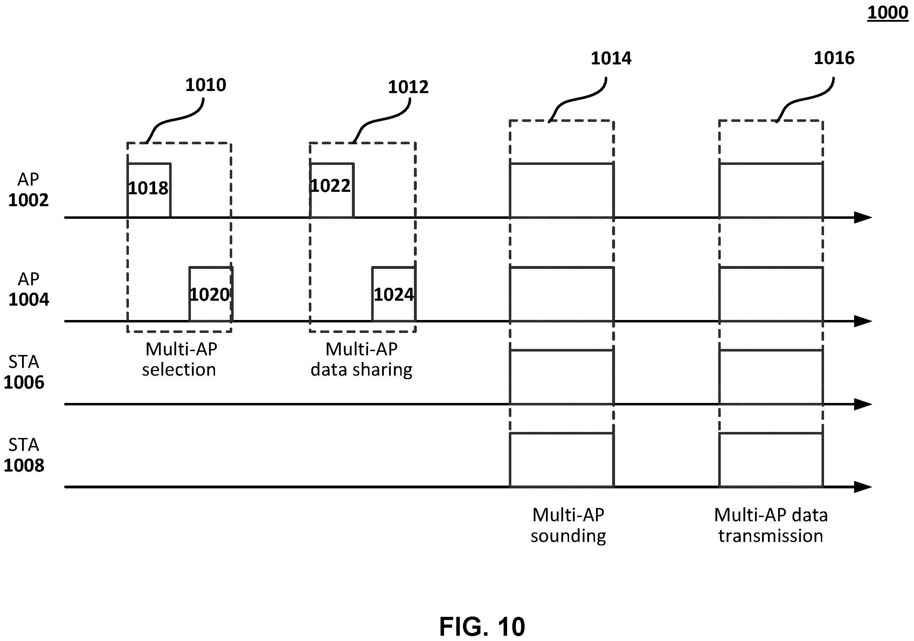

FIG. 10 shows an example 1000 of a multi-AP operation procedure. In example 1000, the multi-AP operation procedure is shown with respect to a multi-AP network that may include APs 1002 and 1004 and STAs 1006 and 1008. APs 1002 and 1004 may form a multi-AP group. AP 1002 may be the master AP and AP 1004 may be a slave AP of the multi-AP group. AP 1002 may obtain a TXOP making it the master AP of the multi-AP group. Alternatively, AP 1002 may be designated as the master AP by a multi-AP controller.

The multi-AP operation procedure, as shown in FIG. 10, may include a series of phases in time, each of which may contain a plurality of frame exchanges within the multi-AP network. The multi-AP operation procedure may include a multi-AP selection phase 1010, a multi-AP data sharing phase 1012, a multi-AP sounding phase 1014, and a multi-AP data transmission phase 1016.

A multi-AP network may carry out a multi-AP operation based on a specific multi-AP transmission scheme. The multi-AP transmission scheme may be chosen by the master AP based on the capabilities of the slave APs in a multi-AP group. A slave AP, prior to a multi-AP operation, may inform the master AP of capability information related to the slave AP, including the capabilities of supporting one or more multi-AP transmission schemes. The slave AP may also inform the master AP of BSS information of the BSS of the slave AP and of link quality information for STAs associated with the slave AP. The master AP may receive information related to all available slave APs. The information related to slave APs may include capability information, BSS information, and link quality information. The master AP, based on the information provided by available slave APs, may determine during a multi-AP selection phase the slave APs to be designated for a multi-AP transmission and a specific multi-AP transmission scheme to be used during the multi-AP transmission.

Multi-AP selection phase 1010 may include procedures for soliciting, selecting, or designating slave AP(s) for a multi-AP group by a master AP. The multi-AP selection phase, as seen in FIG. 10, may include transmissions of frame 1018 from AP 1002 and frame 1020 from AP 1004. AP 1002 may send (e.g., transmit) frame 1018 to solicit information regarding the buffer status of AP 1004. In response, AP 1004 may send (e.g., transmit) frame 1020 to inform AP 1002 of its and its associated STAs buffer status and/or whether it intends to join multi-AP operation. Multi-AP selection phase 1010 may also be used to exchange information related to multi-AP operation, including BSS information of APs and link quality information between each AP and its associated STAs, for example. The BSS information of an AP may include a BSS ID of the BSS of the AP, identifiers and/or capabilities of STAs belonging to the BSS, information regarding sounding capabilities of the STAs, information regarding MIMO capabilities of the AP, etc. Link quality information may include received signal strength indicator (RSSI), signal-to-noise ratio (SNR), signal-to-interference-plus-noise-ratio (SINR), channel state information (CSI), channel quality indicator (CQI).

Multi-AP data sharing phase 1012 may include procedures for sharing data frames to be sent (e.g., transmitted) by APs to associated STAs among the master AP and selected slave AP(s) via direct connections between APs. Phase 1012 may be optional for some multi-AP data transmission schemes. For example, phase 1012 may be required for JT/JR as data frames may be exchanged between APs before or after multi-AP data transmission phase 1016.

Multi-AP data sharing phase 1012 may be performed using a wired backhaul, an in-channel wireless backhaul, or an off-channel wireless backhaul. In some cases, multi-AP data sharing phase 1012 may be performed over an in-channel backhaul, e.g., using the same wireless channel used to transmit/receive data to/from STAs. For example, as shown in FIG. 10, in phase 1012, AP 1002 may send (e.g., transmit) a frame 1022, which may be received by AP 1004. Frame 1022 may include MPDUs that AP 1002 wishes to send (e.g., transmit) to associated STAs using a multi-AP operation. AP 1004 may similarly send (e.g., transmit) a frame 1024, which may be received by AP 1002. Frame 1024 may include MPDUs that AP 1004 wishes to send (e.g., transmit) to associated STAs using a multi-AP operation.

Multi-AP sounding phase 1014 may include procedures for multi-AP channel sounding, including channel estimation and feedback of channel estimates among the master AP, candidate slave AP(s), and associated STAs. Phase 1014 may be optional for some multi-AP transmission schemes, such as COFDMA, CDTMA, and CSR. Phase 1014 may be performed by the master AP to aid in resource unit allocation. Phase 1014 may be performed by the master AP to aid in resource unit allocation, for example, if orchestrating a COFDMA transmission.

Multi-AP data transmission phase 1016 may include exchange of data frames between the master AP, slave AP(s), and their associated STAs based on multi-AP transmission scheme(s) determined by the master AP. Phase 1016, depending on the multi-AP transmission scheme(s) to be used, may include optional synchronization between APs of the multi-AP group, before exchange of data frames between APs and STAs within the multi-AP group.

The order of phases 1010, 1012, 1014 and 1016 may be different than shown in FIG. 10. For example, phase 1016, in COFDMA, may occur immediately after phase 1010, whereas phase 1012, in JT/JR, may occur after phase 1010. Further, some phases, as mentioned above, may be optional and may or may not be present. Phase 1014 may not be required for COFDMA but may be required for JT/JR.

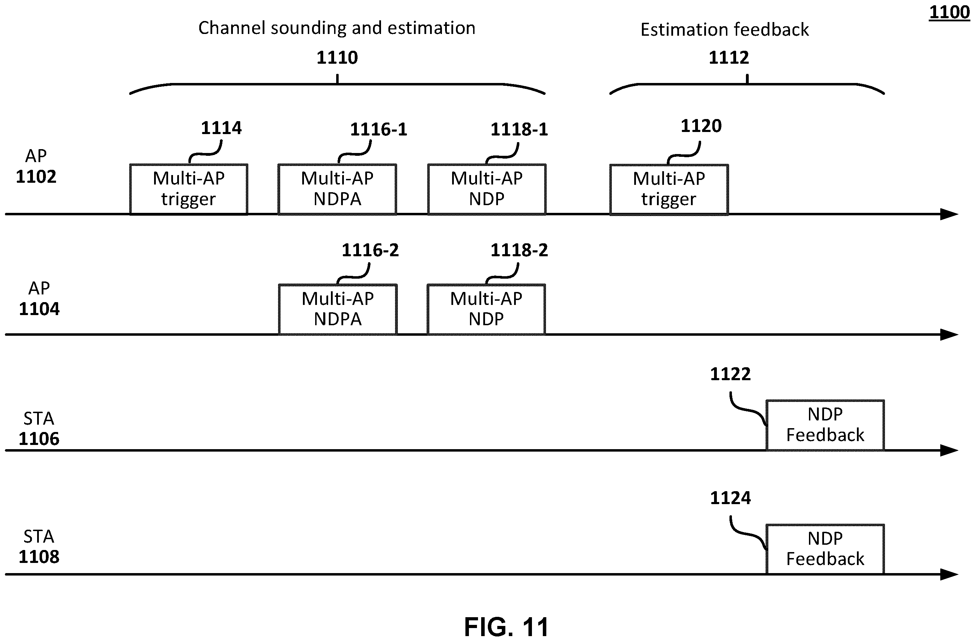

FIG. 11 shows an example 1100 of a multi-AP sounding phase. Multi-AP sounding phase 1100 may be an example of multi-AP sounding phase 1014. Example 1100, as shown in FIG. 11, may include a master AP 1102 and a slave AP 1104 of a multi-AP group. Example 1100 may further include a STA 1106 associated with AP 1102 and a STA 1108 associated with AP 1104.

Multi-AP sounding phase 1100, as shown in FIG. 11, may include frame exchanges to allow AP 1102 (the master AP) to acquire channel state information (CSI) of channels in the multi-AP group. Phase 1100 may include a first subphase 1110 and a second subphase 1112.

Aps, in (e.g., during) the first subphase 1110, may initiate channel sounding and STAs may estimate CSI. For example, AP 1102 may send (e.g., transmit) a frame 1114 to AP 1104 (the slave AP) to trigger multi-AP sounding. Frame 1114 may comprise a multi-AP trigger frame. Subsequently, APs 1102 and 1104 may send (e.g., transmit) respectively announcement frames 1116-1 and 1116-2 to their respective associated STAs 1106 and 1108 to announce the transmission of sounding frames. Frames 1116-1 and 1116-2 may comprise multi-AP null data PPDU announcement (NDPA) frames. Frames 1116-1 and 1116-2 may be sent (e.g., transmitted) simultaneously. Next, APs 1102 and 1104 may send (e.g., transmit) respectively frames 1118-1 and 1118-2 to STAs 1106 and 1108, respectively. Frames 1118-1 and 1118-2 may comprise multi-AP null data PPDU (NDP) frames. STAs 1106 and 1108 receive frames 1118-1 and 1118-2 respectively and perform channel estimation of the channels from AP 1102 to STA 1106 and from AP 1104 to STA 1108, respectively.

APs, during the second subphase 1112, may initiate a procedure for STAs to feedback channel estimates to the APs. For example, AP 1102 may send (e.g., transmit) a frame 1120 to trigger STAs 1106 and 1108 to send (e.g., transmit) their channel estimates to APs 1102 and 1104, respectively. Frame 1120 may comprise a multi-AP trigger frame. STAs 1106 and 1108 may, in response, send (e.g., transmit) respectively frames 1122 and 1124 including feedback of channel estimates to APs 1102 and 1104, respectively. Frames 1122 and 1124 may comprise NDP feedback frames. The feedback of channel estimates may include NDP feedback, CSI-related information, a beamforming report (BFR), or a channel quality indication (CQI) report.

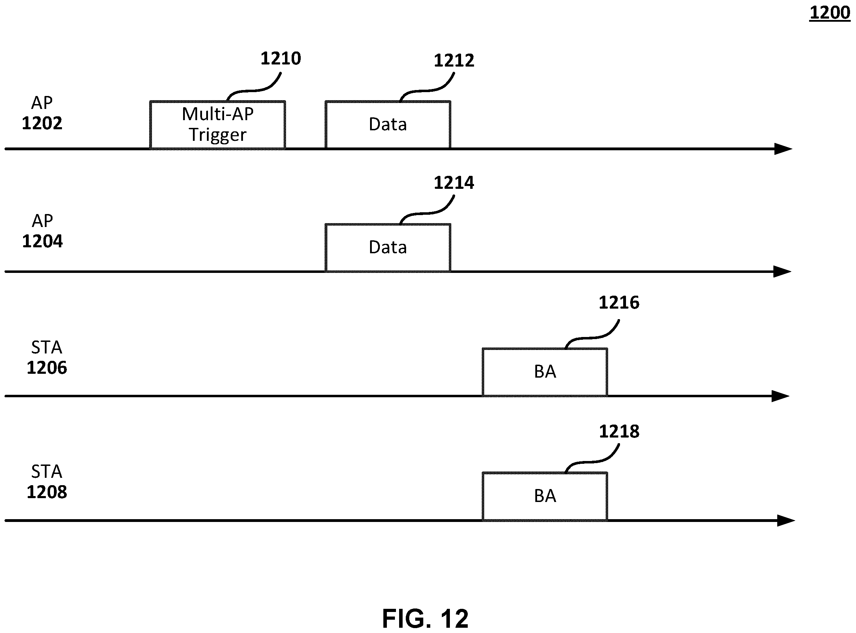

FIG. 12 shows an example 1200 of a multi-AP downlink data transmission phase. Multi-AP downlink data transmission phase 1200 may be an example of multi-AP data transmission phase 1016. Example 1200, as shown in FIG. 12, may include a master AP 1202 and a slave AP 1204 of a multi-AP group. Example 1200 may further include a STA 1206 associated with AP 1202, and a STA 1208 associated with AP 1204.

Multi-AP downlink data transmission phase 1200, as shown in FIG. 12, may include frame exchanges to enable master AP 1202 to coordinate with slave AP 1204 to perform specific multi-AP transmission schemes with their associated STAs 1206 and 1208, respectively. The multi-AP transmission schemes may include COFDMA, CTDMA, CSR, CBF, JT/JR, or a combination of two or more of the aforementioned schemes.

Master AP 1202, as shown in FIG. 12, may begin phase 1200 by sending (e.g., transmitting) a frame 1210 to AP 1204. Frame 1210 may include information related to AP 1204 (e.g., an identifier of AP 1204), synchronization information, information related to a specific multi-AP transmission scheme to be used, and/or information related to a resource unit (RU) for use by AP 1204 to acknowledge frame 1210. Frame 1210 may comprise a control frame. For example, frame 1210 may comprise a multi-AP trigger frame.

Slave AP 1204 may receive frame 1210 and may use the synchronization information to synchronize with master AP 1202. APs 1202 and 1204 may subsequently perform data transmission to their associated STAs 1206 and 1208, respectively. AP 1202 may send (e.g., transmit) a data frame 1212 to its associated STA 1206, and AP 1204 may send (e.g., transmit) a data frame 1214 to its associated STA 1208. APs 1202 and 1204, depending on the multi-AP transmission scheme being used, may send (e.g., transmit) frames 1212 and 1214 respectively to STAs in different BSSs. AP 1202 may also send (e.g., transmit) frame 1212 to STA 1208 associated with slave AP 1204, and AP 1204 may also send (e.g., transmit) frame 1214 to STA 1208 associated with AP 1204. AP 1202 may also send (e.g., transmit) frame 1212 to STA 1208 associated with slave AP 1204, and AP 1204 may also send (e.g., transmit) frame 1214 to STA 1208 associated with AP 1204, for example, if the multi-AP transmission scheme is JT/JR. The resources for sending (e.g., transmitting) and receiving frames 1212 and 1214 may depend on the specific multi-AP transmission scheme adopted.

STAs 1206 and 1208 may acknowledge frames 1212 and 1214, respectively. For example, STA 1206 may send (e.g., transmit) a frame 1216 to AP 1202, and STA 1208 may send (e.g., transmit) a frame 1218 to AP 1204. Frames 1216 and 1218 may comprise block ack (BA) frames. STAs 1206 and 1208 may also send (e.g., transmit) frames 1216 and 1218 to APs in different BSSs, if required by the used multi-AP transmission scheme. STA 1206 may also send (e.g., transmit) frame 1216 to AP 1204, and STA 1208 may also send (e.g., transmit) frame 1218 to AP 1202. STA 1206 may also send (e.g., transmit) frame 1216 to AP 1204, and STA 1208 may also send (e.g., transmit) frame 1218 to AP 1202, for example, if the multi-AP transmission scheme is JT/JR. The resources for sending (e.g., transmitting) and receiving frames 1216 and 1218 may depend on the specific multi-AP transmission scheme adopted.

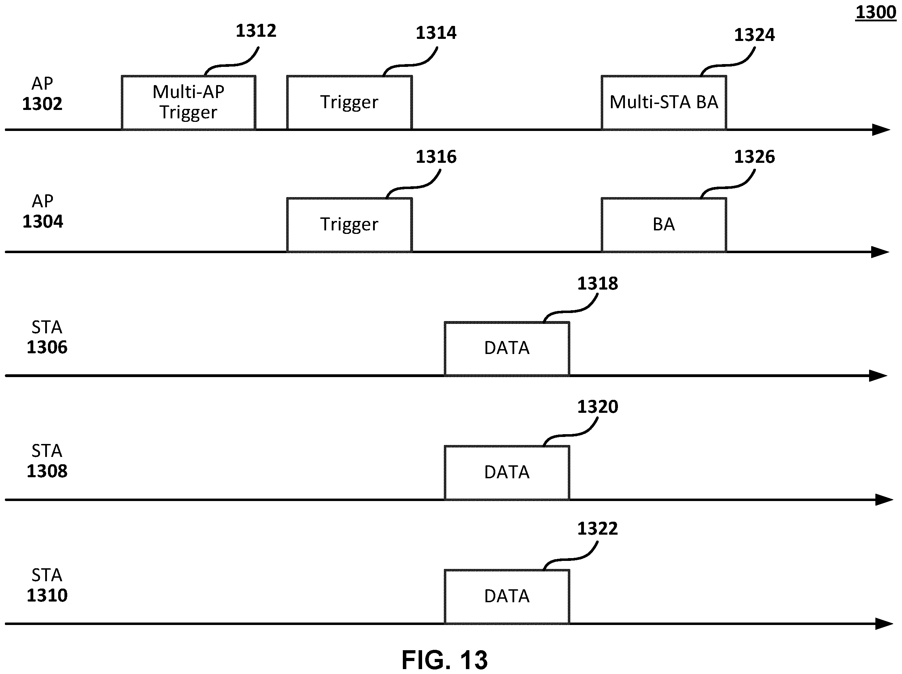

FIG. 13 shows an example 1300 of a multi-AP uplink data transmission phase. Multi-AP uplink data transmission phase 1300 may be an example of multi-AP data transmission phase 1016. Example 1300, as shown in FIG. 13, may include a master AP 1302 and a slave AP 1304 of a multi-AP group. Example 1300 may further include STAs 1306 and 1308 associated with AP 1302, and a STA 1310 associated with AP 1304.

Multi-AP uplink data transmission phase 1300, as shown in FIG. 13, may include frame exchanges to enable master AP 1302 to coordinate with slave AP 1304 to perform specific multi-AP transmission schemes with STAs 1306, 1308, and 1310. The multi-AP transmission schemes may include COFDMA, CTDMA, CSR, CBF, JT/JR, or a combination of two or more of the aforementioned schemes.

Master AP 1302, as shown in FIG. 13, may begin phase 1300 by sending (e.g., transmitting) a frame 1312 to AP 1304. Frame 1312 may include information related to AP 1304 (e.g., an identifier of AP 1304), synchronization information, information related to a specific multi-AP transmission scheme to be used, and/or information related to an RU for use by AP 1304 to acknowledge frame 1312. Frame 1312 may comprise a control frame. For example, frame 1312 may comprise a multi-AP trigger frame.

Slave AP 1304 may receive frame 1312 and may use the synchronization information to synchronize with master AP 1302. Subsequently, APs 1302 and 1304 may solicit uplink data transmissions from their associated STAs 1306, 1308 and 1310 using trigger frames. Specifically, AP 1302 may send (e.g., transmit) a trigger frame 1314 to its associated STAs 1306 and 1308, and AP 1304 may send (e.g., transmit) a trigger frame 1316 to its associated STA 1310. APs 1302 and 1304, depending on the multi-AP transmission scheme being used, may also send (e.g., transmit) frames 1314 and 1316 respectively to STAs in different BSSs. AP 1302 may also send (e.g., transmit) frame 1314 to STA 1310 associated with slave AP 1304, and AP 1304 may also send (e.g., transmit) frame 1316 to STAs 1306 and 1308 associated with AP 1302. AP 1302 may also send (e.g., transmit) frame 1314 to STA 1310 associated with slave AP 1304, and AP 1304 may also send (e.g., transmit) frame 1316 to STAs 1306 and 1308 associated with AP 1302, for example, if the multi-AP transmission scheme is JT/JR. The resources for sending (e.g., transmitting) and receiving frames 1314 and 1316 may depend on the specific multi-AP transmission scheme adopted.

STAs 1306 and 1308 may respond to frame 1314, STA 1310 may respond to frame 1316. For example, STAs 1306 and 1308 may send (e.g., transmit) frames 1318 and 1320 respectively to AP 1302, and STA 1310 may send (e.g., transmit) a frame 1322 to AP 1304. Frames 1318, 1320, and/or 1322 may be sent (e.g., transmitted) simultaneously. Frames 1318, 1320, and 1322 may comprise data frames or null data frames. STAs 1306, 1308, and 1310 may also send (e.g., transmit) frames 1318, 1320, and 1322 respectively to APs in different BSSs. Frames 1318, 1320, and 1322 may comprise data frames or null data frames. STAs 1306, 1308, and 1310 may also send (e.g., transmit) frames 1318, 1320, and 1322 respectively to APs in different BSSs, for example, if required by the used multi-AP transmission scheme. STAs 1306 and 1308 may also send (e.g., transmit) respective frames 1318 and 1320 to AP 1304, and STA 1310 may also send (e.g., transmit) frame 1322 to AP 1302. STAs 1306 and 1308 may also send (e.g., transmit) respective frames 1318 and 1320 to AP 1304, and STA 1310 may also send (e.g., transmit) frame 1322 to AP 1302, for example, if the multi-AP transmission scheme is JT/JR. The resources for sending (e.g., transmitting) and receiving frames 1318, 1320, and 1322 may depend on the specific multi-AP transmission scheme adopted.

Some multi-AP transmission schemes, for example, joint transmission (JT), may enable a master AP to coordinate with slave APs by sharing channel state information (CSI) among APs in a multi-AP group. JT may use distributed MIMO transmission, via shared CSI, for data streams among multiple APs. Distributed MIMO transmission may comprise a distributed single-user (SU) MIMO transmission for a single STA, and a distributed multi-user (MU) MIMO transmission for multiple STAs. The distributed MIMO may use a coherent transmission from multiple APs to one or more STAs. A coherent transmission as used herein may refer to a transmission of multiple streams that are synchronized at a phase level.

STAs in a multi-AP network may use a multi-AP sounding procedure to estimate channel state information (CSI) from multiple APs. The multi-AP sounding procedure may comprise multi-AP joint sounding. Multi-AP joint sounding may comprise a coherent transmission of sounding NDPs that synchronize at a phase level. JT may require multi-AP joint sounding to determine the CSI at STAs and compute a steering matrix that is used (e.g., applied) to the sending (e.g., transmitting) signals of multiple APs.

A sounding PPDU may be a PPDU sent (e.g., transmitted) by a sending (e.g., transmitting) STA to enable a receiving STA to estimate the channel between the sending (e.g., transmitting) STA and the receiving STA. A sounding PPDU, according to the IEEE 802.11 standard, may be a PPDU for which the SOUNDING parameter of the corresponding RXVECTOR or TXVECTOR has the value SOUNDING.

The sounding PPDU may comprise a sounding null data PPDU (NDP). The NDP may be a PPDU that carries no data field.

The sounding PPDU may comprise a PPDU carrying on training symbols of channel sounding. The training symbols may be known at a sending (e.g., transmitting) STA and a receiving STA. The receiving STA may use the training symbols of channel sounding to estimate the channel state information (CSI). The CSI may comprise channel coefficients. Channel sounding may adopt transmit beamforming with explicit feedback mechanisms, such as explicit feedback beamforming, to allow the sending (e.g., transmitting) STA to send (e.g., transmit) the sounding PPDU to the receiving STA.

Transmit beamforming may be a technique in which a sending (e.g., transmitting) STA utilizes knowledge of a MIMO channel to generate a steering matrix that is used (e.g., applied) to the sent (e.g., transmitted) signal to optimize reception at one or more receiving STAs. The STA sending (e.g., transmitting) using the steering matrix may be called the beamformer (transmitter of the beamformed signal). The STA, for which reception is optimized, may be called a beamformee (receiver of the beamformed signal). Transmit beamforming may be used for sounding a SU MIMO channel or a MU MIMO channel.

The beamformer, in explicit feedback beamforming, may use (e.g., apply) an orthonormal spatial mapping matrix as the steering matrix to training symbols in the sounding PPDU. The beamformee, by receiving the sounding PPDU over a MIMO channel, may measure an effective channel using the training symbols. The effective channel may be a product of an equivalent complex baseband MIMO channel coefficient matrix and the steering matrix used on transmit. The beamformer, by using an estimate of the equivalent channel, may prepare a channel quality indication (CQI) as CSI feedback or a beamforming feedback matrix as beamforming feedback. The beamformee may quantize the feedback and may send it to the beamformer. The beamformer may use this feedback to calculate a new steering matrix for a beamformed data transmission.

An extremely high throughput (EHT) sounding protocol may use the explicit feedback beamforming. EHT STAs may use an EHT sounding protocol to determine CSI. The EHT sounding protocol may provide explicit feedback mechanisms, including an EHT non-trigger-based (non-TB) sounding sequence and an EHT trigger-based (TB) sounding sequence. An EHT beamformee may measure the channel using a training signal (e.g., an EHT sounding NDP) sent (e.g., transmitted) by an EHT beamformer and may send back a transformed estimate of the CSI. The transformed estimate of the CSI may comprise the quantized CQI feedback or a quantized beamforming feedback matrix based on the estimate of equivalent channel. The EHT beamformer may use this estimate to derive the steering matrix.

The EHT beamformee may return the estimate of the CSI in an EHT compressed beamforming/CQI report carried in one or more EHT compressed beamforming/CQI frames. There may be at least three types of EHT compressed beamforming/CQI reports:

a) SU feedback: The EHT compressed beamforming/CQI report may comprise an EHT Compressed Beamforming Report field.

b) MU feedback: The EHT compressed beamforming/CQI report may comprise an EHT Compressed Beamforming Report field and EHT MU exclusive beamforming report field.

c) CQI feedback: The EHT compressed beamforming/CQI report may comprise an EHT CQI Report field.

The EHT compressed beamforming/CQI report may be carried in a single EHT compressed beamforming/CQI frame if the resulting frame is less than or equal to 11454 octets in length. Otherwise, the EHT beamforming feedback may be segmented and each segment may be carried in an EHT compressed beamforming/CQI frame. An EHT beamformer may support a maximum MPDU length for the EHT compressed beamforming/CQI report that is the minimum of 11454 octets and the maximum length of the EHT compressed beamforming/CQI report that the EHT beamformer intends to solicit from its EHT beamformee(s).

An EHT non-TB sounding sequence may be initiated by an EHT beamformer with an individually addressed EHT NDP announcement frame comprising exactly one STA Info field, followed after SIFS by an EHT sounding NDP. The EHT beamformee may respond after SIFS with an EHT compressed beamforming/CQI frame.

An EHT beamformer that initiates an EHT non-TB sounding sequence may send (e.g., transmit) the EHT NDP announcement frame with a single STA Info field. The AID11 subfield of the STA Info field may be set to the AID of the STA identified by the RA field or to 0 if the STA identified by the RA field is an associated AP, mesh STA or IBSS STA. The EHT NDP announcement frame may be followed after a SIFS by an EHT sounding NDP, which may be followed after a SIFS by a PPDU containing one or more EHT compressed beamforming/CQI frames. An EHT beamformer may initiate an EHT non-TB sounding sequence with an EHT beamformee to solicit SU or CQI feedback.

An EHT beamformer, that initiates an EHT TB sounding sequence, may send (e.g., transmit) an EHT NDP announcement frame with two or more STA Info fields and the RA field set to the broadcast address. The EHT NDP announcement frame may be followed after a SIFS by an EHT sounding NDP, which may be followed after a SIFS by the beamforming report poll (BFRP) trigger frame. Subsequent BFRP trigger frames, if any, in the EHT TB sounding sequence may be sent (e.g., transmitted) SIFS after the EHT TB PPDU sent (e.g., transmitted). Subsequent BFRP trigger frames, if any, in the EHT TB sounding sequence may be sent (e.g., transmitted) SIFS after the EHT TB PPDU sent (e.g., transmitted), for example, based on (e.g., in response to) the previous BFRP trigger frame. Each EHT beamformee, that is addressed by a BFRP trigger frame, may respond after a SIFS with an EHT TB PPDU containing one or more EHT compressed beamforming/CQI frames. An EHT beamformer, that has initiated an EHT TB sounding sequence, may send (e.g., transmit) a BFRP trigger frame to solicit feedback and may send additional BFRP trigger frame(s) in the same TXOP, with any STA that is identified in the NDP announcement frame being triggered only one time within the TXOP. The EHT beamformer may use the additional BFRP trigger frames to solicit EHT compressed beamforming/CQI reports from EHT beamformees not addressed in a previous BFRP trigger frame. An EHT beamformer, in an EHT TB sounding sequence, may not send (e.g., transmit) a BFRP trigger frame that solicits a STA identified in the EHT NDP announcement frame of an EHT TB sounding sequence unless it is in the same TXOP as the EHT TB sounding sequence. The STAs, in the EHT TB sounding sequence and identified in the NDP announcement frame, may be the same as the ones identified in the trigger frame(s) in the same TXOP.

An EHT beamformer, that sends a BFRP trigger frame, may set the feedback segment retransmission bitmap fields of the BFRP trigger frame to all 1s. An EHT beamformer may initiate an EHT TB sounding sequence to solicit SU, MU, or CQI feedback.

The PHY layer of WLAN devices (e.g., STA 210 or AP 260) may implement an EHT orthogonal frequency division multiplexing (OFDM) system. The OFDM system may provide a WLAN with data payload communication capabilities. Two EHT PPDU formats may be defined: EHT MU PPDU and EHT TB PPDU.

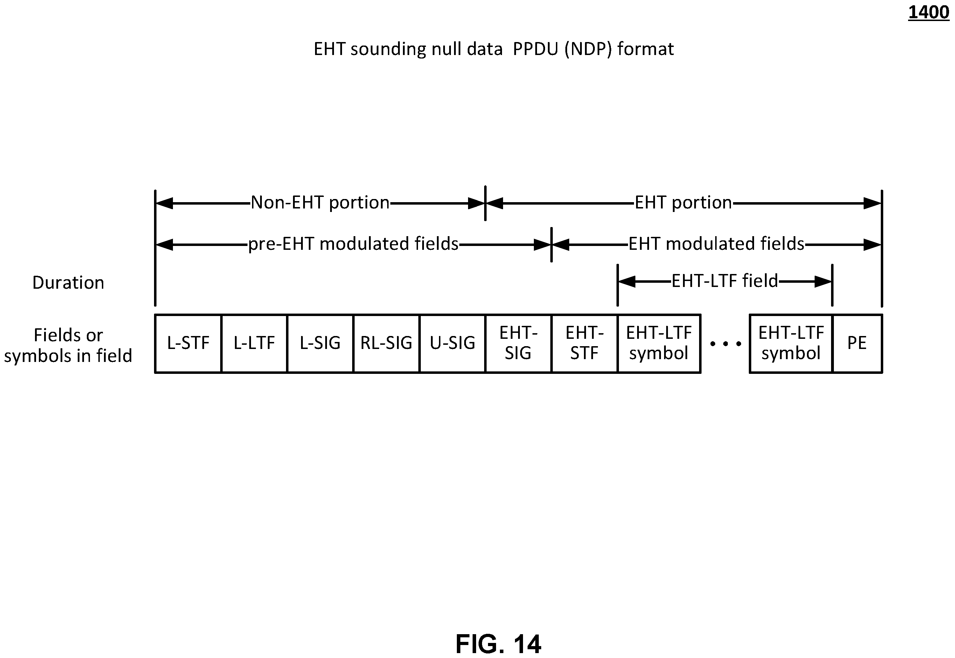

FIG. 14 shows another example format of a PPDU. The PPDU may be an example of an EHT sounding null data PPDU (NDP) which may be used for sounding to one or more users. The EHT sounding NDP may be a variant of the EHT MU PPDU. An EHT sounding NDP may be indicated by setting the "PPDU Type And Compression Mode" field of an EHT PPDU to 1, the EHT-SIG MCS field of the EHT PPDU to 0, and the "Number Of EHT-SIG Symbols field" to 0 in the U-SIG field of the EHT PPDU.

The PPDU, as shown in FIG. 14, may comprise a non-high throughput (non-HT) short training field (L-STF), a non-HT long training field (L-LTF), a non-HT signal field (L-SIG), a repeated non-HT signal field (RL-SIG), a universal signal field (U-SIG), an EHT signal field (EHT-SIG), an EHT short training field (EHT-STF), an EHT long training field (EHT-LTF), and a packet extension (PE) field. The L-STF, L-LTF, L-SIG, RL-SIG, U-SIG, and EHT-SIG fields may be referred to as pre-EHT modulated fields. The L-STF, L-LTF, L-SIG, RL-SIG, U-SIG, and EHT-SIG fields may be referred to as pre-EHT modulated fields, for example, if the EHT-STF, EHT-LTF, and PE fields may be referred to as the EHT modulated fields.

The EHT-LTF field may comprise one or more EHT-LTF symbols. The number of EHT-LTF symbols may be indicated in the "number of EHT-LTF symbols" field of the EHT-SIG.

The EHT-LTF field may provide a means for the receiver to estimate the MIMO channel between the set of constellation mapper outputs and the receive chains. A spatial stream may refer to one or more symbols that may be sent (e.g., transmitted) over multiple spatial dimensions that are created by the use of multiple antennas at both ends of a communications link. The transmitter, in an EHT MU PPDU, may provide training for $N_{SS,r,total}$ spatial streams used for the transmission of the PSDU(s) in the r-th RU or MRU. In an EHT TB PPDU, the transmitter of user u in the r-th RU or MRU may provide training for $N_{SS,r,u}$ spatial streams used for the transmission of the PSDU. For each subcarrier in the r-th RU or MRU, the MIMO channel that can be estimated may be an $N_{RX} \times$

$N_{SS,r,total}$ matrix.

An EHT transmission may have a preamble that contains EHT-LTF symbols, where the data tones of each EHT-LTF symbol may be multiplied by entries belonging to a matrix $P_{EHT-LTF}$, to enable channel estimation at the receiver. The pilot subcarriers of each EHT-LTF symbol are multiplied by the entries of a matrix $R_{EHT-LTF}$ to allow receivers to track phase and/or frequency offset during MIMO channel estimation using the EHT-LTF. The pilot subcarriers of each EHT-LTF symbol may be multiplied by the entries of a matrix $R_{EHT-LTF}$ to allow receivers to track phase and/or frequency offset during MIMO channel estimation using the EHT-LTF, for example, if single stream pilots are used in $2 \times$ or $4 \times$ EHT-LTF. Single stream pilots may be used for all spatial multiplexing modes (both UL and DL) defined in EHT. Single stream pilots may be used for all spatial multiplexing modes (both UL and DL) defined in EHT, for example, except if $1 \times$ EHT-LTF is used. $P_{EHT-LTF}$ may be defined such that each modulated spatial stream in an RU or MRU is active on all subcarriers in that RU or MRU for which the EHT-LTF sequence takes a nonzero value.

The number of EHT-LTF symbols $N_{EHT-LTF}$, in an EHT MU PPDU, may be indicated in the EHT-SIG field. In a non-OFDMA EHT MU PPDU or EHT sounding NDP, the initial number of EHT-LTF symbols, initial $N_{EHT-LTF}$, may be a function of the total number of spatial streams $N_{SS}$.

The number of EHT-LTFs may be larger than the initial number of EHT-LTFs determined by the total number of spatial streams, in order to improve the MIMO channel estimation for the reception of non-OFDMA EHT MU PPDU or EHT sounding NDP. The total number of EHT-LTFs (which is signaled separately from $N_{SS}$) may be no more than twice the initial number of EHT-LTFs determined by the number of spatial streams, and chosen from the set {2 4 8}. The total number of EHT-LTFs (which is signaled separately from $N_{SS}$) may be no more than twice the initial number of EHT-LTFs determined by the number of spatial streams, and chosen from the set {2 4 8}, for example, if additional EHT-LTFs are used. Supporting additional EHT-LTFs may be optional for the receiver, which may be indicated by the maximum number of supported EHT-LTFs subfield of the EHT PHY capabilities information field.

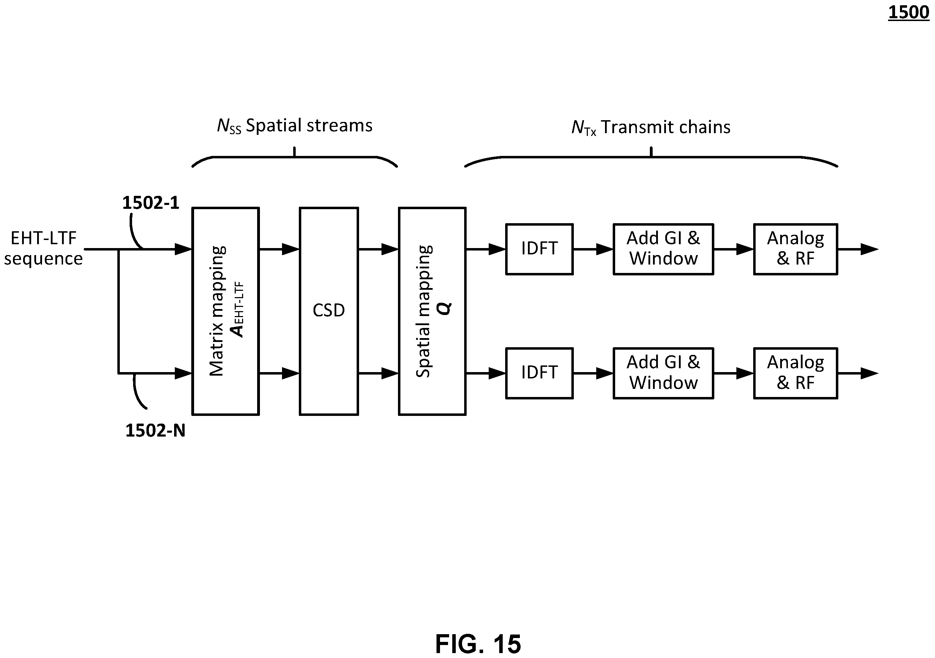

FIG. 15 shows an example method for generating the symbols of a training field of a PPDU, such as the PPDU shown in FIG. 14. FIG. 15 shows the generation of EHT-LTF symbols.

The method may begin with a sequence generation step in which an EHT-LTF sequence is generated in the frequency domain over the bandwidth indicated by CH_BANDWIDTH. The EHT-LTF sequence may be duplicated into a plurality of spatial streams 1502-1, ..., 1502-N. The method may include a matrix mapping step, in which a matrix ($A_{EHT-LTF}$) may be equal to a matrix ($P_{EHT-LTF}$) that is used (e.g., applied) to the data tones of each spatial stream and may be equal to a matrix ($R_{EHT-LTF}$) that is used (e.g., applied) to pilot subcarriers of the spatial stream, except for an UL MU-MIMO transmission using $1 \times$ EHT-LTF.

The method may include a cyclic shift delay (CSD) step, in which a cyclic shift delay may be used (e.g., applied) for each spatial stream. Cyclic shifts, throughout the EHT modulated fields of the preamble, may be used (e.g., applied) using a CSD matrix to prevent unintended beamforming. Cyclic shifts, throughout the EHT modulated fields of the preamble, may be used (e.g., applied) using a CSD matrix to prevent unintended beamforming, for example, if correlated signals are sent (e.g., transmitted) in multiple spatial streams. The same cyclic shifts may also be used (e.g., applied) to these streams during the transmission of the Data field of the EHT PPDU.

The method may include spatial mapping: The transmitter may choose to rotate and/or scale the constellation symbols on each spatial streams and map symbols from $N_{SS}$ spatial streams to $N_{TX}$ transmit chains, in which a spatial mapping matrix is used (e.g., applied) to the spatial streams.

A transmit (TX) chain may be the physical entity that implements any necessary signal processing to generate the transmit signal from the digital baseband. Such signal processing may include digital to analog conversion, filtering, amplification and up-conversion.

Spatial mapping may be useful in the following cases:

a) if there are more transmit chains than spatial streams;

b) as part of (an optional) sounding PPDU;

c) as part of (an optional) calibration procedure;

d) if the PPDU is sent (e.g., transmitted) using one of the (optional) beamforming techniques.

Below are examples of spatial mapping matrices that might be used. There may be many other alternatives; implementation may not be restricted to the spatial mapping matrices shown. The examples are as follows:

a) Direct mapping: is a diagonal matrix of unit magnitude complex values that takes one of two forms:

1) An identity matrix; or

2) A CSD matrix in which the diagonal elements represent cyclic shifts in the time domain.

b) Indirect mapping: the spatial mapping matrix may be the product of a CSD matrix and a unitary matrix such as the Hadamard matrix or the Fourier matrix. A Hadamard matrix may be a square matrix whose entries are either +1 or -1 and whose rows are mutually orthogonal. A Fourier matrix, also known as discrete Fourier transform (DFT) matrix, may be an expression of a DFT as a transformation matrix, which may be used (e.g., applied) to a signal through matrix multiplication.

c) Spatial expansion: may be the product of a CSD matrix and a square matrix formed of orthogonal columns.

The method may include inverse a discrete Fourier transform (IDFT) step: the IDFT may convert the subcarriers to time domain using the IDFT for each transmit chain to generate a respective symbol stream associated with one OFDM symbol.

The method may include a guard interval (GI) prepending step and a windowing step: a GI indicated by the TXVECTOR parameter GI_TYPE may be inserted between adjacent OFDM symbols. The resulting periodic waveform may be truncated to a single OFDM symbol length by using (e.g., applying) a time domain windowing.

The method may include analog and radio frequency (RF) step: the resulting complex baseband waveform associated with each transmit chain may be upconverted to an RF signal according to the center frequency of the desired channel and sent (e.g., transmitted).

At least some IEEE 802.11 standards may provide various mechanisms to support the quality of service (QoS) requirements of ultra high reliability (UHR), low-latency, and high-throughput of AP and STAs. Sounding may be a mechanism that may be used to increase communication reliability.

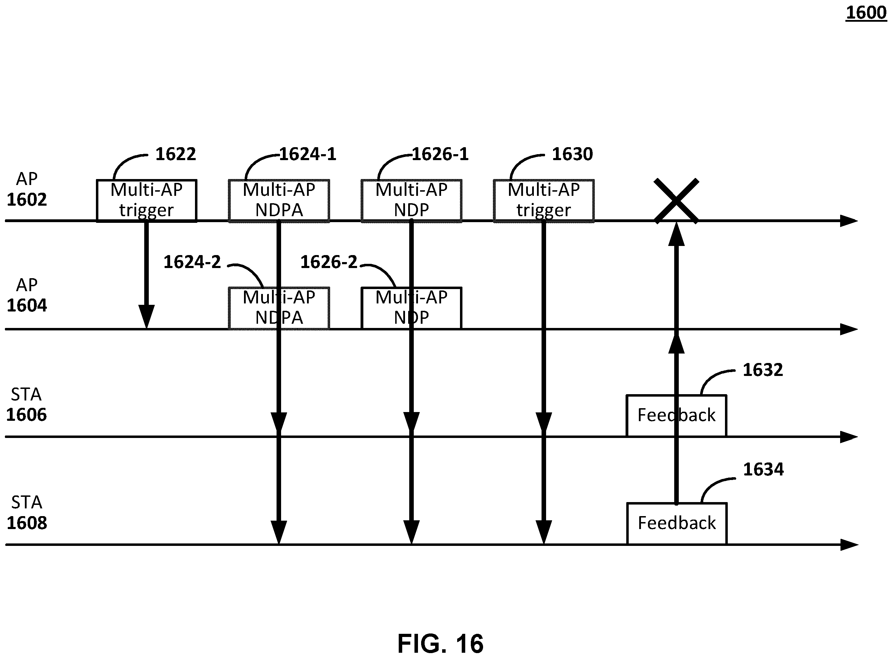

FIG. 16 shows an example 1600 of a multi-AP sounding procedure. Example 1600 may be an example of multi-AP sounding phase 1014. Example 1600 may comprise a multi-AP joint sounding procedure. The multi-AP joint sounding procedure may comprise coherent sounding NDP transmissions from multiple APs.

Example 1600, as shown in FIG. 16, includes an AP 1602, an AP 1604, a STA 1606, and a STA 1608. STA 1606 may be associated with AP 1602, and STA 1608 may be associated with AP 1604.

APs 1602 and 1604 may belong to the same ESS as described above in FIG. 1. APs 1602 and 1604 may be connected by a DS to support ESS features. APs 1602 and 1604 may belong to different BSSs.

APs 1602 and 1604 may form a multi-AP group. APs 1602 and 1604 may complete a multi-AP setup procedure prior to the beginning of example 1600. APs 1602 and 1604, as part of a multi-AP group, may be connected by a backhaul. The backhaul may be a wireless backhaul. AP 1602 may be a master AP, and AP 1604 may be a slave AP. AP 1602 and AP 1604, as described in FIG 10, may complete a multi-AP selection phase 1010, and an optional multi-AP data sharing phase 1012, before example 1600 begins,.

The multi-AP joint sounding procedure may require a coherent transmission of a first sounding NDP from AP 1602 and a second sounding NDP from AP 1604. The first sounding NDP and the second sounding NDP may be to be received by STAs 1606 and 1608, respectively. AP 1602 may require spatial mapping be used (e.g., applied) onto spatial streams intended for STAs 1606 and 1608 of the first sounding NDP. AP 1604 may require spatial mapping be used (e.g., applied) onto spatial streams intended for STAs 1606 and 1608 of the second sounding NDP.

AP 1602 may determine a spatial mapping matrix or a spatial mapping type to carry out the spatial mapping based on local information of AP 1602. For example, the local information of AP 1602 may comprise the capability of AP 1602. The capability of AP 1602 may comprise supporting use of the determined spatial mapping matrix for the first sounding NDP from AP 1602 to STA 1606. The spatial mapping matrix may comprise an orthonormal matrix. The orthonormal matrix may be a Hadamard matrix having a size of $(N_{Tx1} + N_{Tx2})$ by $(N_{SS1} + N_{SS2})$. $N_{Tx1}$ may indicate a number of active transmit chains of AP 1602, $N_{Tx2}$ may be a number of active transmit chains of AP 1604, $N_{SS1}$ may indicate a number of spatial streams for STA 1606, and $N_{SS2}$ may indicate a number of spatial streams for STA 1608.

The spatial mapping matrix may comprise a first submatrix and a second submatrix. The first submatrix of the spatial mapping matrix may be for application to symbols over $N_{SS1} + N_{SS2}$ spatial streams in a long training field of the first sounding NDP sent (e.g., transmitted) by AP 1602. The first submatrix of the spatial mapping matrix may be for $N_{Tx1}$ active transmit chains of AP 1602. The first submatrix, a size of $N_{Tx1}$ by $(N_{SS1} + N_{SS2})$, may be a first $N_{Tx1}$ rows of the spatial mapping matrix. The second submatrix of the spatial mapping matrix may be to be used (e.g., applied) to symbols over $N_{SS1} + N_{SS2}$ spatial streams in a long training field of the second sounding NDP sent (e.g., transmitted) by AP 1604. The second submatrix of spatial mapping matrix may be for $N_{Tx2}$ active transmit chains of AP 1604. The second submatrix, a size of $N_{Tx2}$ by $(N_{SS1} + N_{SS2})$, may be a $(N_{Tx1} + 1)$ to $N_{Tx2}$ rows of the spatial mapping matrix.

Example 1600, as shown in FIG. 16, may include frame exchanges to allow AP 1602 to acquire CSI of channels in the multi-AP group. APs may initiate channel sounding and STAs may estimate CSI. AP 1602 may send (e.g., transmit) a multi-AP trigger frame 1622 to AP 1604 to initialize multi-AP joint sounding. Frame 1622 may include information related to AP 1604 (e.g., an identifier of AP 1604), synchronization information. Frame 1622 may comprise a multi-AP sounding trigger frame.

Frame 1622 may comprise spatial mapping information to be used by AP 1604 for sending (e.g., transmitting) a multi-AP NDP 1626-2 to STAs 1606 and 1608, respectively. The multi-AP NDP 1626-2 may comprise the second sounding NDP sent (e.g., transmitted) from AP 1604. Alternatively, frame 1622 may include spatial mapping information to be used by both AP 1602 and AP 1604 for sending (e.g., transmitting) a multi-AP NDP 1626-1 to STAs 1606 and 1608, respectively. The multi-AP NDP 1626-1 may comprise the first sounding NDP sent (e.g., transmitted) from AP 1602.

The spatial mapping information may indicate the spatial mapping matrix. For example, the spatial mapping matrix may be the Hadamard matrix having a size of ($N_{Tx1} + N_{Tx2}$) by ($N_{SS1}+N_{SS2}$).

Alternatively, the spatial mapping information may indicate the second submatrix of the spatial mapping matrix. The second spatial mapping matrix may be the Hadamard matrix having a size of ($N_{Tx1} + N_{Tx2}$) by ($N_{SS1}+N_{SS2}$). The second submatrix of the spatial mapping matrix may be the ($N_{Tx1}$ +1) to $N_{Tx2}$ rows of the Hadamard matrix.

The spatial mapping information may indicate a spatial mapping matrix type. The spatial mapping matrix type may be "Hadamard matrix".

Frame 1622 may also include index information of spatial streams indicating one or more streams used in multi-AP NDP 1626-2 sent (e.g., transmitted) by AP 1604. Frame 1622 may further include the index information of active transmit chains indicating one or more active transmit chains used in multi-AP NDP 1626-2 sent (e.g., transmitted) by AP 1604.

AP 1604 may receive frame 1622 and may use the synchronization information to synchronize with AP 1602. Subsequently, APs 1602 and 1604 may send (e.g., transmit) respectively announcement frames 1624-1 and 1624-2 to their respective associated STAs 1606 and 1608 to announce the transmission of sounding NDPs. Frames 1624-1 and 1624-2 may comprise multi-AP NDP announcement (NDPA) frames. Frames 1624-1 and 1624-2 may be sent (e.g., transmitted) simultaneously. Frames 1624-1 and 1624-2 may comprise a first STA information field for STA 1606 and a second STA information field for STA 1608.

APs 1602 and 1604 may send (e.g., transmit) respectively frames 1626-1 and 1626-2 to STAs 1606 and 1608, respectively. Frames 1626-1 and 1626-2 may comprise multi-AP NDP frames. Frames 1626-1 and 1626-2 may be sent (e.g., transmitted) simultaneously. AP 1602 may use (e.g., apply) the first submatrix, with a size of $N_{Tx1}$ by ($N_{SS1}+N_{SS2}$), of the spatial mapping matrix, for example, the Hadamard matrix with a size of ($N_{Tx1} + N_{Tx2}$) by ($N_{SS1}+N_{SS2}$), to $N_{SS1}$ spatial streams of STAs 1606 and $N_{SS2}$ spatial streams of STA 1608 carried in a long training field of NDP frame 1626-1.

AP 1604 may be capable of using (e.g., applying) a submatrix, with a size of $N_{Tx2}$ by ($N_{SS1}+N_{SS2}$), of an identical matrix for spatial mapping the sounding NDP. AP 1604 may lack the capability to support the second submatrix, for example, ($N_{Tx1}$ +1) to $N_{Tx2}$ rows of the Hadamard matrix of the spatial mapping matrix indicated in frame 1622. AP 1604 may thus fail to use (e.g., apply) the second submatrix of the spatial mapping matrix indicated in frame 1622 to the spatial streams in a long training field of NDP frame 1626-2.

AP 1604 may use (e.g., apply) the submatrix of the identical matrix to the spatial streams of STAs 1606 and the spatial streams of STA 1608 carried in the long training field of NDP frame 1626-2. AP 1602 may not have knowledge of the submatrix of the identical matrix used (e.g., applied) by AP 1604 for NDP frame 1626-2.

STA 1606 (or STA 1608) may estimate an effective channel from APs 1602 and 1604 to STA 1606 (or STA 1608). STA 1606 (or STA 1608) may estimate the effective channel corresponding to respective STA 1606 (or STA 1608) comprising a product of a channel matrix corresponding to STA 1606 (or STA 1608) and a combined spatial mapping matrix. The channel matrix corresponding to STA 1606 (or STA1608) may comprise CSI of a downlink channel from AP 1602 to STA 1606 (or STA1608) and CSI of a downlink channel from AP 1604 to STA 1606 (or STA1608). The combined spatial mapping matrix may be a combination of the first submatrix, of the spatial mapping matrix (e.g. Hadamard matrix), used (e.g., applied) by AP 1602 and the submatrix, of the identical matrix, used (e.g., applied) by AP 1604. The combined spatial mapping matrix may lose the orthonormality of an orthonormal matrix, e.g., Hadamard matrix.

AP 1602 may solicit channel estimate feedback from STAs after sending (e.g., transmitting) multi-AP NDP 1626-1. AP 1602 may send (e.g., transmit) a multi-AP trigger frame 1630 to trigger STAs 1606 and 1608 to send (e.g., transmit) their channel estimates to APs 1602 and 1604, respectively. Frame 1630 may comprise a multi-AP beamforming report poll (BFRP) trigger frame.

STAs 1606 and 1608 may send (e.g., transmit) respectively frames 1632 and 1634 including feedback of channel estimates to AP 1602 and 1604, respectively. STAs 1606 and 1608 may send (e.g., transmit) respectively frames 1632 and 1634 including feedback of channel estimates to AP 1602 and 1604, respectively, for example, based on receiving the multi-AP trigger frame 1630. AP 1602 and 1604, due to frame 1626-2 being used (e.g., applied) by AP 1604 the submatrix of the identical matrix that is unknown at AP1602, and the orthonormality of spatial mapping for sounding NDP frames 1626-1 and 1626-2, may fail to determine the CSI from feedback of channel estimates carried in frames 1632 and 1634.

AP 1604, in another example (not shown in FIG. 16), may not send (e.g., transmit) frame 1626-2 and may quit the multi-AP joint sounding procedure. The multi-AP joint sounding procedure may be incomplete.

This failure described herein may result in the multi-AP joint sounding procedure being an unsuccessful and may impact the performance of the subsequent multi-AP data transmission. As a result, this may reduce reliability, increase retransmissions, and introduce significant latency and overhead in the multi-AP network.

Examples described herein address the described problems of at least some multi-AP procedures.

Spatial mapping may be shared to facilitate multiple access point communication in a network. The spatial mapping may be updated and used for the multiple access points communicating with one or more computing devices (e.g., stations). For example, a first AP may receive from a second AP a first frame indicating a first spatial mapping. The first spatial mapping may be for a transmission from the second AP to a STA, or vice versa. The first spatial mapping may comprise capability information including support of the first spatial mapping by the second AP. The first AP may send (e.g., transmit) to the second AP a second frame indicating a second spatial mapping. The second spatial mapping may be for the transmission from the second AP to the STA, or vice versa. The second spatial mapping may comprise capability information including support of the first spatial mapping by the second AP. The second spatial mapping may be based on the first spatial mapping. The transmission from the second AP to the STA, or vice versa, may be part of a multi-AP sounding procedure comprising the first AP and the second AP. The first AP may select the second spatial mapping to accommodate all NDP transmissions of the multi-AP sounding procedure. As a result, unsuccessful CSI determination may be avoided and the multi-AP joint sounding procedure may be completed successfully. Reliability may be improved and latency may be reduced for multi-AP communication.

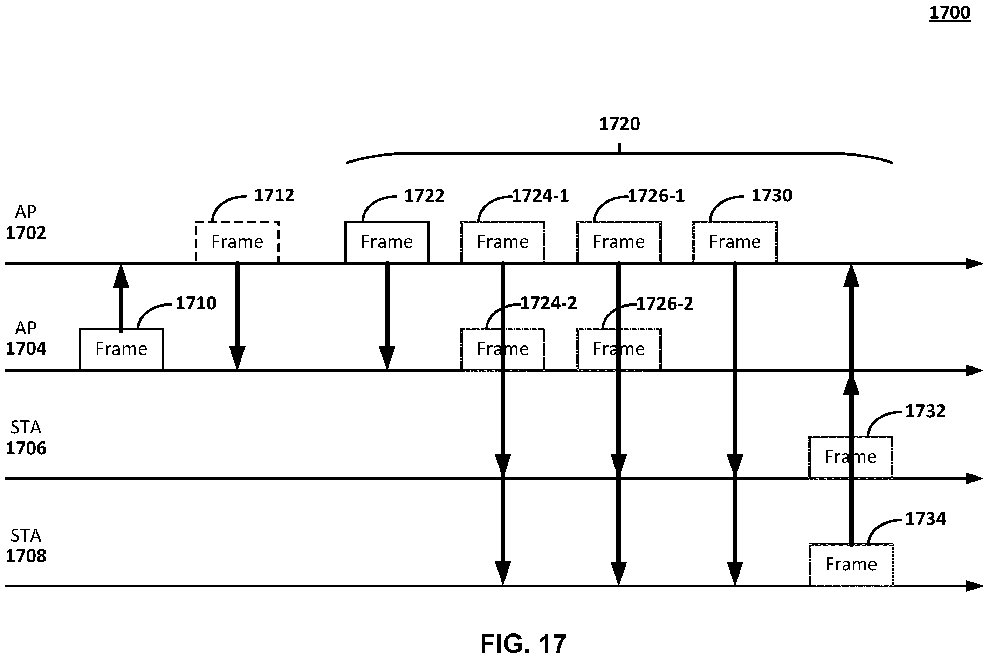

FIG. 17 shows an example 1700 that shows a spatial mapping coordination procedure for multi-AP communication. Example 1700 is provided for the purpose of illustration only and is not limiting. Example 1700, as shown in FIG. 17, may include an AP 1702, an AP 1704, a STA 1706, and a STA 1708. STA 1706 may be associated with AP 1702. STA 1708 may be associated with AP 1704. AP 1702, AP 1704, STA 1706, and/or STA 1708 may each comprise a multi-link device (MLD).

APs 1702 and 1704 may belong to the same ESS as described above in FIG. 1. APs 1702 and 1704 may be connected by a DS to support ESS features. APs 1702 and 1704 may belong to different BSSs. AP 1702 may belong to a first BSS and AP 1704 may belong to a second BSS. The second BSS may comprise an overlapping basic service set (OBSS) relative to the first BSS.

AP 1702 and 1704 may form a multi-AP group. It is assumed in an example 1700, APs 1702 and 1704 may complete a multi-AP setup procedure prior to the beginning of example 1700. APs 1702 and 1704, as part of a multi-AP group, may be connected by a backhaul. The backhaul may be a wireless backhaul. AP 1702 and AP 1704, before example 1700 begins, may complete a multi-AP selection phase 1010, and an optional multi-AP data sharing phase 1012, as described in FIG 10.

Example 1700, as shown in FIG. 17, may include frame exchanges to enable AP 1702 to coordinate with AP 1704 to perform a multi-AP sounding procedure in a phase 1720. The multi-AP sounding procedure may comprise a multi-AP joint sounding procedure. The multi-AP joint sounding procedure may comprise a coherent sounding physical layer data unit (PPDU) transmission from multiple APs. The sounding PPDU may comprise a null data PPDU (NDP).

Both AP 1702 and AP 1704, in an example 1700, may support a spatial mapping coordination capability. Support of the spatial mapping coordination capability may allow AP 1704 sending (e.g., transmitting) frames (such as frame 1710 described below) to share information related to a first spatial mapping with AP 1702. Support of the spatial mapping coordination capability may allow AP 1702 receiving and processing frames (such as frame 1710) and sending (e.g., transmitting) frames (such as frame 1722 described below) to determine a second spatial mapping for the multi-AP transmission based on the first spatial mapping. Support of the spatial mapping coordination capability may allow AP 1702 and AP 1704 sending (e.g., transmitting) frames respectively (such as frames 1726-1, and 1726-2 described below), using the second spatial mapping, to STAs 1706 and 1708, respectively.

APs 1702 and 1704, prior to the beginning of example 1700, may exchange a first frame and a second frame (not shown in FIG. 17) to exchange capability information. The first frame may comprise the capability information of AP 1702, including a first indication of support by AP 1702 of the spatial mapping coordination capability. The second frame may comprise the capability information of AP 1704, including a second indication of support by AP 1704 of the spatial mapping coordination capability. The first frame and the second frame may be exchanged during a multi-AP setup procedure or a multi-AP selection phase. The first frame and the second frame may comprise a management frame.

The multi-AP joint sounding procedure may require coherent transmission of a first sounding PPDU from AP 1702 and a second sounding PPDU from AP 1704. The first sounding PPDU and the second sounding PPDU may be received by STAs 1706 and 1708, respectively. AP 1702 may require spatial mapping be used (e.g., applied) onto spatial streams, intended for STAs 1706 and 1708, of the first sounding PPDU. AP 1704 may require spatial mapping be used (e.g., applied) onto spatial streams intended for STAs 1706 and 1708 of the second sounding PPDU. The first sounding PPDU and the second sounding PPDU may comprise NDPs.

Example 1700, as shown in FIG. 17, may include frame exchanges to allow AP 1702 to acquire CSI of channels in the multi-AP group. Capabilities of APs 1702 and 1704 may comprise supporting use of spatial mapping matrices or spatial mapping types to carrying out the spatial mapping.

Capability of AP 1702 may comprise supporting use of one or more spatial mapping matrices or spatial mapping types for a first transmission of a first PPDU from AP 1702. The first PPDU may comprise the first sounding PPDU. The first PPDU may comprise a first NDP.

Capability of AP 1704 may comprise supporting use of one or more spatial mapping matrices or spatial mapping types for a second transmission of a second PPDU from AP 1704. The second PPDU may comprise the second sounding PPDU. The second PPDU may comprise a second NDP.

Example 1700 may begin with AP 1702 receiving from AP 1704 a frame 1710 indicating a first spatial mapping. The first spatial mapping may indicate or comprise one or more spatial mapping matrices. The first spatial mapping may indicate or comprise one or more spatial mapping types.

A spatial mapping type may correspond to a method of calculating one or more spatial mapping matrices. The spatial mapping type may be a direct mapping type, an indirect mapping type, or a spatial expansion type. For example, the direct mapping type may indicate a method of calculating one or more spatial mapping matrices as identical matrices and/or a method of calculating one or more spatial mapping matrices as cyclic shift delay (CSD) matrices. The indirect mapping type may indicate a method of calculating one or more spatial mapping matrices based on a unitary matrix. The method of calculating one or more spatial mapping matrices based on a unitary matrix may comprise a product operation of a CSD matrix and a unitary matrix. The unitary matrix may comprise a Hadamard matrix, and a Fourier matrix. The spatial expansion type may indicate a method of calculating one or more spatial mapping matrices based on a square matrix formed of orthogonal columns. The method of calculating one or more spatial mapping matrices based on a matrix may comprise a product operation of a CSD matrix and a square matrix formed of orthogonal columns.

The first spatial mapping may be for the second transmission of the second PPDU, from AP 1704 to STAs 1706 and 1708. The second transmission of the second PPDU may occur in phase 1720 during a transmission opportunity (TXOP) of AP 1702.

Frame 1710 may further comprise a request to AP 1702 for AP 1704 to use the first spatial mapping for the second transmission of the second PPDU. Frame 1710 may comprise a management frame or a data frame.

AP 1702 may optionally send (e.g., transmit) to AP 1704 a frame 1712 to acknowledge the reception of frame 1710. AP 1702 may determine a second spatial mapping. AP 1702 may determine a second spatial mapping, for example, based on the first spatial mapping indicated in frame 1710. The determination of the second spatial mapping may use the first spatial mapping. AP 1702 may verify the first spatial mapping. AP 1702 verifying the first spatial mapping may comprise verifying whether any one of the spatial mapping matrices associated with the first spatial mapping may be used for a coherent transmission comprising the first transmission of the first PPDU and the second transmission of the second PPDU. AP 1702 verifying the first spatial mapping may be according to information available at AP 1702 until receiving frame 1710. For example, the information available at AP 1702 until receiving frame 1710 may comprise capability of AP 1702, BSS information of AP 1702, information regarding MIMO capabilities of AP 1702, and/or link quality information of AP 1702. For example, the information available at AP 1702 until receiving frame 1710 may further comprise information regarding AP 1704 obtained by AP 1702 in a multi-AP setup phase and/or in a multi-AP selection phase.

The second spatial mapping may be based on the first spatial mapping. The second spatial mapping may indicate or comprise a spatial mapping matrix. The spatial mapping matrix associated with the second spatial mapping may be based on the spatial mapping matrix associated with the first spatial mapping indicated in frame 1710. The second spatial mapping may be for the second transmission of the second PPDU, from AP 1704 to STAs 1706 and 1708, during the TXOP of AP 1702.

The spatial mapping matrix associated with the second spatial mapping may comprise an orthonormal matrix. The orthonormal matrix associated with the second spatial mapping may comprise a first submatrix and a second submatrix. The second submatrix of the orthonormal matrix used as the spatial mapping matrix associated with the second spatial mapping may be same as the spatial mapping matrix associated with the first spatial mapping indicated in frame 1710.

The orthonormal matrix associated with the second spatial mapping may have a size of $(N_{Tx1} + N_{Tx2})$ by $(N_{SS1} + N_{SS2})$. $N_{Tx1}$ may indicate a number of active transmit chains of AP 1702, $N_{Tx2}$ may be a number of active transmit chains of AP 1704, $N_{SS1}$ may indicate a number of spatial streams for STA 1706, and $N_{SS2}$ may indicate a number of spatial streams for STA 1708. The orthonormal matrix associated with the second spatial mapping may comprise a Hadamard matrix.

The first submatrix of the spatial mapping matrix may be for application to training symbols over $N_{SS1}+N_{SS2}$ spatial streams in a training field of the first PPDU sent (e.g., transmitted) by AP 1702. The first submatrix of the spatial mapping matrix may be for $N_{Tx1}$ active transmit chains of AP 1702. The training field of the first PPDU may comprise a long training field or a channel estimation field. The training field of the first PPDU may use training symbols over $(N_{SS1}+N_{SS2})$ spatial streams for channel estimation corresponding to $N_{Tx1}$ active transmit chains of AP 1702. For example, the first submatrix, a size of $N_{Tx1}$ by $(N_{SS1}+N_{SS2})$, may be a first $N_{Tx1}$ rows of the spatial mapping matrix

The second submatrix of the spatial mapping matrix may be for application to training symbols over $N_{SS1}+N_{SS2}$ spatial streams in a training field of the second PPDU sent (e.g., transmitted) by AP 1704. The second submatrix of the spatial mapping matrix may be for $N_{Tx2}$ active transmit chains of AP 1704. For example, the second submatrix, a size of $N_{Tx2}$ by $(N_{SS1}+N_{SS2})$, may be a $(N_{Tx1}+1)$ to $N_{Tx2}$ rows of the spatial mapping matrix. The training field of the second PPDU may comprise a long training field or a channel estimation field. The training field of the second PPDU may use training symbols over ($N_{SS1}+N_{SS2}$) spatial streams for channel estimation corresponding to $N_{Tx2}$ active transmit chains of AP 1704. The second submatrix of the spatial mapping matrix regarding the second spatial mapping may be same as the spatial mapping matrix regarding the first spatial mapping indicated in frame 1710.

The second spatial mapping may indicate a spatial mapping type. The spatial mapping type of the second spatial mapping may be based on the spatial mapping type of the first spatial mapping indicated in frame 1710. The spatial mapping type of the second spatial mapping may comprise an indirect mapping type indicated in frame 1710 using a method of calculating a spatial mapping matrix based on a Hadamard matrix.

AP 1702 may send (e.g., transmit) to AP 1704 frame 1712 indicating the second spatial mapping, after receiving the first spatial mapping. Frame 1712 may comprise a response to frame 1710. Frame 1712 may further comprise an acceptance of the request in frame 1710. Frame 1712 may comprise a management frame. Frame 1712 may be an action frame.

AP 1702 may send (e.g., transmit) to AP 1704 a frame 1722 indicating the second spatial mapping, after receiving the first spatial mapping. Frame 1722 may initiate a multi-AP sounding procedure in phase 1720.

Frame 1722 may allow synchronization of sending (e.g., transmitting) frames 1724-1 and 1724-2. Frame 1722 may trigger AP 1702 and AP 1702 to concurrently send (e.g., transmit) respective frames 1724-1 and 1724-2.

Frame 1722 may further allow synchronization of sending (e.g., transmitting) frames 1726-1 and 1726-2. Frame 1722 may schedule AP 1702 and AP 1702 to coherently send (e.g., transmit) respective frames 1726-1 and 1726-2 to STAs 1706 and 1708 after sending (e.g., transmitting) frames 1724-1 and 1724-2.

Frame 1722 may comprise a control frame. Frame 1722 may comprise a trigger frame. Frame 1722 may comprise a multi-AP trigger frame for sounding procedure. Frame 1722 may comprise a multi-AP sounding trigger frame.

AP 1702 may send (e.g., transmit) a frame 1724-1 to announce the first transmission of the first PPDU from AP 1702, after sending (e.g., transmitting) frame 1722. Frame 1724-1 may indicate STAs 1706 and 1708. Frame 1724-1 may comprise an identifier of STA 1706 and an identifier of STA 1708. Frame 1724-1 may comprise a control frame. Frame 1724-1 may comprise a NDP announcement (NDPA) frame for multi-AP sounding. Frame 1724-1 may comprise a multi-AP NDP announcement frame.

AP 1702 may send (e.g., transmit) a frame 1726-1 to STAs 1706 and 1708, after sending (e.g., transmitting) frame 1724-1. AP 1702 sending (e.g., transmitting) frame 1726-1 may comprise the first transmission of the first PPDU from AP 1702 to STAs 1706 and 1708. The first transmission of the first PPDU may use the second spatial mapping determined by AP 1702. AP 1702 may use (e.g., apply) the first submatrix of the spatial mapping matrix associated with the second spatial mapping to symbols over $N_{SS1}+N_{SS2}$ spatial streams in the training field of the first PPDU.

AP 1704 may send (e.g., transmit) a frame 1724-2 to announce the second transmission of the second PPDU from AP 1704, after receiving frame 1722. Frame 1724-2 may indicate STAs 1706 and 1708. Frame 1724-2 may comprise an identifier of STA 1706 and an identifier of STA 1708. Frame 1724-2 may comprise a control frame. Frame 1724-2 may comprise a NDP announcement (NDPA) frame for multi-AP sounding. Frame 1724-2 may comprise a multi-AP NDP announcement frame.

AP 1704 may send (e.g., transmit) a frame 1726-2 to STAs 1706 and 1708, after sending (e.g., transmitting) frame 1724-2. AP 1704 sending (e.g., transmitting) frame 1726-2 may comprise the second transmission of the second PPDU from AP 1702 to STAs 1706 and 1708. The second transmission of the second PPDU may use the second spatial mapping indicated in frame 1722. AP 1704 may use (e.g., apply) the second submatrix of the spatial mapping matrix associated with the second spatial mapping to symbols over $N_{SS1} + N_{SS2}$ spatial streams in the training field of the second PPDU.

STA 1706 may estimate CSI corresponding to STA 1706 based on receiving frames 1726-1 and 1726-2 simultaneously. The CSI corresponding to STA 1706 may comprise an effective channel matrix corresponding to STA 1706 comprising a product of a channel matrix corresponding to STA 1706 and the spatial mapping matrix of the second spatial mapping. The channel matrix corresponding to STA 1706 may comprise CSI of a downlink channel from AP 1702 to STA 1706 and CSI of a downlink channel from AP 1704 to STA 1706. STA 1706 may estimate an effective channel matrix corresponding to STA 1706, based on the training symbols over $N_{SS1}$ spatial streams from the training field of the first PPDU and the training field of the second PPDU.

STA 1708 may similarly estimate CSI corresponding to STA 1708 based on receiving frames 1726-1 and 1726-2 simultaneously. The CSI corresponding to STA 1708 may comprise an effective channel matrix corresponding to STA 1708 comprising a product of an channel matrix corresponding to STA 1708 and the spatial mapping matrix of the second spatial mapping. The channel matrix corresponding to STA 1708 may comprise CSI of a downlink channel from AP 1702 to STA 1708 and CSI of a downlink channel from AP 1704 to STA 1708. STA 1708 may estimate the effective channel matrix corresponding to STA 1708 based on the training symbols over $N_{SS2}$ spatial streams from the training field of the first PPDU and the training field of the second PPDU.

AP 1702 may send (e.g., transmit) a frame 1730 soliciting a frame 1732 from STA 1706 and a frame 1734 from STA 1708, after sending (e.g., transmitting) frame 1726-1. Frame 1730 may allow synchronization of sending (e.g., transmitting) frames 1732 and 1734 by STA 1706 and STA 1708, respectively. Frame 1730 may indicate a beamforming report from sounding feedback of STA 1706 and a type of beamforming report from sounding feedback of STA 1708. The type of beamforming report may comprise beamforming feedback report or channel quality information (CQI) report. Frame 1730 may comprise a trigger frame. Frame 1730 may comprise a beamforming report poll (BFRP) trigger frame or a multi-AP beamforming report poll trigger frame.

STAs 1706 and 1708 may respectively determine the type of beamforming report for sounding feedback, after receiving frame 1730. STAs 1706 and 1708, after determination, may respectively send (e.g., transmit) frames 1732 and 1734. STAs 1706 and 1708, after determination, may respectively send (e.g., transmit) frames 1732 and 1734, for example, based on (e.g., in response to) frame 1730.

Frame 1732 may indicate CQI report corresponding to STA 1706. Frame 1734 may indicate CQI report corresponding to STA 1708. STAs 1706 and 1708 may quantize the estimated effective channel matrices corresponding to STAs 1706 and 1708, respectively. STAs 1706 and 1708 may respectively generate CQI corresponding to STAs 1706 and 1708 based on the quantization.

Frame 1732 may indicate beamforming feedback report corresponding to STA 1706. Frame 1734 may indicate beamforming feedback report corresponding to STA 1708. STAs 1706 and 1708 may respectively perform singular value decomposition (SVD) on the estimated effective channel matrices and obtain beamforming feedback matrices corresponding to STAs 1706 and 1708, respectively. STAs 1706 and 1708 may quantize the beamforming feedback matrices corresponding to STAs 1706 and 1708, respectively. Frames 1732 or 1734 may comprise an action frame. The action frame may be carried in a trigger based (TB) PPDU.

AP 1702 may send (e.g., transmit) the first sounding PPDU (frame 1726-1) using the first submatrix of the spatial mapping matrix associated with the second spatial mapping. AP 1704 may send (e.g., transmit) the second sounding PPDU (frame 1726-2) using the first submatrix of the spatial mapping matrix associated with the second spatial mapping. Thus, the orthogonal property of the spatial mapping matrix may be maintained for the channel estimation.

AP 1702 and AP 1704, by receiving frames 1732 and 1734 and using the second spatial mapping, may successfully recover CSI and/or generate steering matrix for a multi-AP transmission. AP 1702 may use (e.g., apply) the first submatrix of the spatial mapping matrix associated with the second spatial mapping to the CQI indicated in frame 1732 and 1734, so that the CSI corresponding to channels from AP 1702 to STAs 1706 and 1708 may be recovered. AP 1702 may use (e.g.,

apply) the second submatrix of the spatial mapping matrix associated with the second spatial mapping to the CQI indicated in frame 1732 and 1734, so that the CSI corresponding to channels from AP 1704 to STAs 1706 and 1708 may be recovered.

AP 1704 may use (e.g., apply) the first submatrix of the spatial mapping matrix associated with the second spatial mapping to the CQI indicated in frame 1732 and 1734, so that the CSI corresponding to channels from AP 1702 to STAs 1706 and 1708 may be recovered. AP 1704 may use (e.g., apply) the second submatrix of the spatial mapping matrix associated with the second spatial mapping to the CQI indicated in frame 1732 and 1734, so that the CSI corresponding to channels from AP 1704 to STAs 1706 and 1708 may be recovered.

As a result, unsuccessful CSI determination may be avoided and the multi-AP joint sounding procedure in phase 1720 may be completed successfully. Reliability may thus be improved, and latency may be reduced for multi-AP communication.

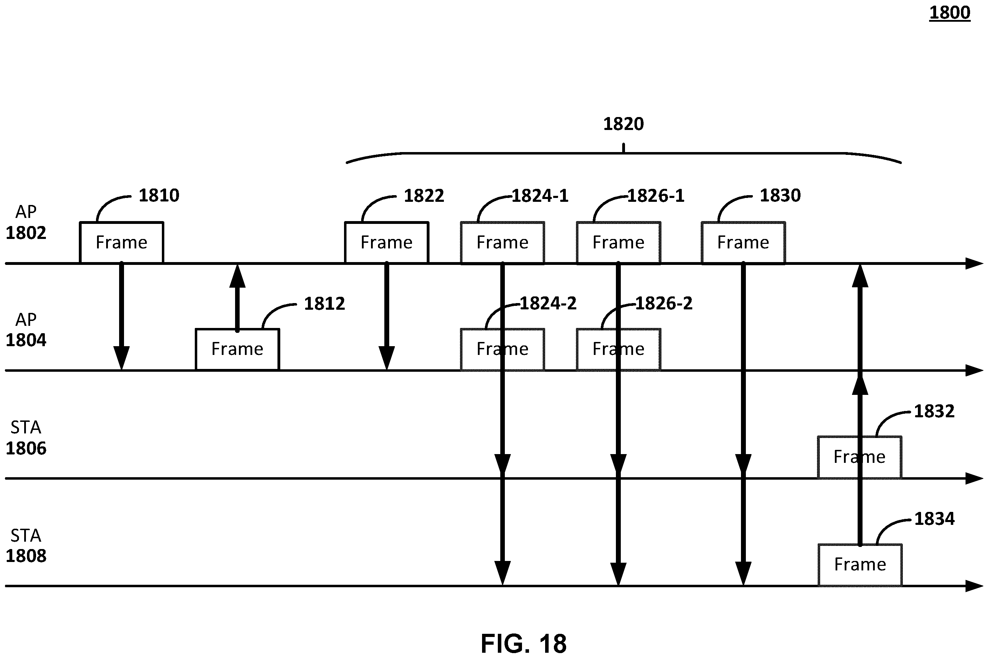

FIG. 18 shows an example 1800 that shows a spatial mapping coordination procedure for multi-AP communication. Example 1800 is provided for the purpose of illustration only and is not limiting. Example 1800, as shown in FIG. 18, includes an AP 1802, an AP 1804, a STA 1806, and a STA 1808. STA 1806 may be associated with AP 1802. STA 1808 may be associated with AP 1804. AP 1802, AP 1804, STA 1806, and/or STA 1808 may each comprise a multi-link device (MLD).

APs 1802 and 1804 may belong to the same ESS as described above in FIG. 1. APs 1802 and 1804 may be connected by a DS to support ESS features. APs 1802 and 1804 may belong to different BSSs. AP 1802 may belong to a first BSS and AP 1804 may belong to a second BSS. The second BSS may comprise an overlapping basic service set (OBSS) relative to the first BSS.

AP 1802 and 1804 may form a multi-AP group. It is assumed in an example 1800, APs 1802 and 1804 may complete a multi-AP setup procedure prior to the beginning of example 1800. APs 1802 and 1804, as part of a multi-AP group, may be connected by a backhaul. The backhaul may be a wireless backhaul. AP 1802 and AP 1804, before example 1800 begins, may complete a multi-AP selection phase 1010, and an optional multi-AP data sharing phase 1012, as described in FIG 10.

Example 1800, as shown in FIG. 18, may include frame exchanges to enable AP 1802 to coordinate with AP 1804 to perform a multi-AP sounding procedure in a phase 1820. The multi-AP sounding procedure may comprise a multi-AP joint sounding procedure. The multi-AP joint sounding procedure may comprise a coherent sounding physical layer data unit (PPDU) transmission from multiple APs. The sounding PPDU may comprise a null data PPDU (NDP).

It is assumed in an example 1800 that both AP 1802 and AP 1804 support a spatial mapping coordination capability. Support of the spatial mapping coordination capability may allow AP 1802 to send (e.g., transmit) frames (such as frame 1810 described below) to request a first spatial mapping from AP 1804. Support of the spatial mapping coordination capability may allow AP 1802 to send (e.g., transmit) frames (such as frame 1810 described below) to share information related to a third spatial mapping with AP 1804. Support of the spatial mapping coordination capability may allow AP 1804 receiving and processing frames (such as frame 1810) and sending (e.g., transmitting) frames (such as frame 1812 described below) to share information related to the first spatial mapping with AP 1802. Support of the spatial mapping coordination capability may allow AP 1802 receiving and processing frames (such as frame 1810) and sending (e.g., transmitting) frames (such as frame 1822 described below) to determine a second spatial mapping for the multi-AP transmission based on the first spatial mapping. Support of the spatial mapping coordination capability may allow AP 1802 and AP 1804 sending (e.g., transmitting) frames respectively (such as frames 1826-1, and 1826-2 described below), using the second spatial mapping, to STAs 1806 and 1808, respectively.

APs 1802 and 1804, prior to the beginning of example 1800, may exchange a first frame and a second frame (not shown in FIG. 18) to exchange capability information. The first frame may comprise the capability information of AP 1802, including a first indication of support by AP 1802 of the spatial mapping coordination capability. The second frame may comprise the capability information of AP 1804, including a second indication of support by AP 1804 of the spatial mapping coordination capability. The first frame and the second frame may be exchanged during a multi-AP setup procedure or a multi-AP selection phase. The first frame and the second frame may comprise a management frame.

The multi-AP joint sounding procedure may require coherent transmission of a first sounding PPDU from AP 1802 and a second sounding PPDU from AP 1804. The first sounding PPDU and the second sounding PPDU may be received by STAs 1806 and 1808, respectively. AP 1802 may require spatial mapping be used (e.g., applied) onto spatial streams, intended for STAs 1806 and 1808, of the first sounding PPDU. AP 1804 may require spatial mapping be used (e.g., applied) onto spatial streams intended for STAs 1806 and 1808 of the second sounding PPDU. The first sounding PPDU and the second sounding PPDU may comprise NDPs.

Example 1800, as shown in FIG. 18, may include frame exchanges to allow AP 1802 to acquire CSI of channels in the multi-AP group. Capabilities of APs 1802 and 1804 may comprise supporting use of spatial mapping matrices or spatial mapping types to carrying out the spatial mapping.

Capability of AP 1802 may comprise supporting use of one or more spatial mapping matrices or spatial mapping types for a first transmission of a first PPDU from AP 1802. The first PPDU may comprise the first sounding PPDU. The first PPDU may comprise a first NDP.

Capability of AP 1804 may comprise supporting use of one or more spatial mapping matrices or spatial mapping types for a second transmission of a second PPDU from AP 1804. The second PPDU may comprise the second sounding PPDU. The second PPDU may comprise a second NDP.

Example 1800, as shown in FIG. 18, may begin with AP 1802 sending (e.g., transmitting) to AP 1804 a frame 1810. Frame 1810 may solicit a frame 1812 comprising feedback of a first spatial mapping from AP 1804. The first spatial mapping may be for the second transmission of the second PPDU from AP 1804 to STA 1808 in phase 1820.

AP 1802 may receive from AP 1804 frame 1812 comprising the feedback solicited by frame 1810. Frame 1812 may indicate the first spatial mapping.

Frame 1810 may request that AP 1804 use a third spatial mapping for the second transmission of the second PPDU. AP 1802 may receive from AP 1804 frame 181. AP 1802 may receive from AP 1804 frame 1812, for example, (e.g., in response to) frame 1810. Frame 1812 may comprise a rejection of the request. Frame 1812 may further indicate the first spatial mapping. The first spatial mapping may be for the second transmission of the second PPDU.

The first spatial mapping or the second spatial mapping may comprise information of one or more spatial mapping matrices. The first spatial mapping or the third spatial mapping may comprise information of one or more spatial mapping types.

A spatial mapping type may correspond to a method of calculating one or more spatial mapping matrices. The spatial mapping type may be a direct mapping type, an indirect mapping type, or a spatial expansion type. For example, the direct mapping type may indicate a method of calculating one or more spatial mapping matrices as identical matrices and/or a method of calculating one or more spatial mapping matrices as cyclic shift delay (CSD) matrices. The indirect mapping type may indicate a method of calculating one or more spatial mapping matrices based on a unitary matrix. The method of calculating one or more spatial mapping matrices based on a unitary matrix may comprise a product operation of a CSD matrix and a unitary matrix. The unitary matrix may comprise a Hadamard matrix, and a Fourier matrix. The spatial expansion type may indicate a method of calculating one or more spatial mapping matrices based on a square matrix formed of orthogonal columns. The method of calculating one or more spatial mapping matrices based on a matrix may comprise a product operation of a CSD matrix and a square matrix formed of orthogonal columns.

Frame 1810 may comprise a control frame comprising a trigger frame. Frame 1812 may comprise a data frame comprising a QoS null frame.

Frame 1810 may comprise a management frame comprising an action frame. Frame 1812 may comprise a management frame comprising an action frame.

AP 1802 may determine, based on the first spatial mapping indicated in frame 1810, a second spatial mapping. The determination of the second spatial mapping may use the first spatial mapping. AP 1802 may verify the first spatial mapping. AP 1802 verifying the first spatial mapping may comprise verifying whether any one of the spatial mapping matrices associated with the first spatial mapping may be used for a coherent transmission comprising the first transmission of the first PPDU and the second transmission of the second PPDU. AP 1802 verifying the first spatial mapping may be according to information available at AP 1802 until receiving frame 1810. For example, the information available at AP 1802 until receiving frame 1810 may comprise capability of AP 1802, BSS information of AP 1802, information regarding MIMO capabilities of AP 1802, and/or link quality information of AP 1802. The information available at AP 1802 until receiving frame 1810 may further comprise information regarding AP 1804 obtained by AP 1802 in a multi-AP setup phase and/or in a multi-AP selection phase.

The second spatial mapping may be based on the first spatial mapping. The second spatial mapping may indicate or comprise a spatial mapping matrix. The spatial mapping matrix associated with the second spatial mapping may be based on the spatial mapping matrix associated with the first spatial mapping indicated in frame 1810.

The second spatial mapping may be for the second transmission of the second PPDU, from AP 1804 to STAs 1806 and 1808, during the TXOP of AP 1802. The spatial mapping matrix associated with the second spatial mapping may comprise an orthonormal matrix. The orthonormal matrix associated with the second spatial mapping may comprise a first submatrix and a second submatrix. The second submatrix of the orthonormal matrix used as the spatial mapping matrix associated with the second spatial mapping may be same as the spatial mapping matrix associated with the first spatial mapping indicated in frame 1812.

The orthonormal matrix associated with the second spatial mapping may have a size of $(N_{Tx1} + N_{Tx2})$ by $(N_{SS1} + N_{SS2})$. $N_{Tx1}$ may indicate a number of active transmit chains of AP 1802, $N_{Tx2}$ may be a number of active transmit chains of AP 1804, $N_{SS1}$ may indicate a number of spatial streams for STA 1806, and $N_{SS2}$ may indicate a number of spatial streams for STA 1808. The orthonormal matrix associated with the second spatial mapping may be a Hadamard matrix.

The first submatrix of the spatial mapping matrix may be for application to training symbols over $N_{SS1}+ N_{SS2}$ spatial streams in a training field of the first PPDU sent (e.g., transmitted) by AP 1802. The first submatrix of the spatial mapping matrix may be for $N_{Tx1}$ active transmit chains of AP 1802. The training field of the first PPDU may comprise a long training field or a channel estimation field. The training field of the first PPDU may use training symbols over $(N_{SS1}+N_{SS2})$ spatial streams for channel estimation corresponding to $N_{Tx1}$ active transmit chains of AP 1802. For example, the first submatrix, a size of $N_{Tx1}$ by $(N_{SS1} + N_{SS2})$, may be a first $N_{Tx1}$ rows of the spatial mapping matrix

The second submatrix of the spatial mapping matrix may be for application to training symbols over $N_{SS1}+ N_{SS2}$ spatial streams in a training field of the second PPDU sent (e.g., transmitted) by AP 1804. The second submatrix of the spatial mapping matrix maybe for $N_{Tx2}$ active transmit chains of AP 1804. For example, the second submatrix, a size of $N_{Tx2}$ by $(N_{SS1}+ N_{SS2})$, may be a $(N_{Tx1} +1)$ to $N_{Tx2}$ rows of the spatial mapping matrix. The training field of the second PPDU may comprise a long training field or a channel estimation field. The training field of the second PPDU may use training symbols over $(N_{SS1}+N_{SS2})$ spatial streams for channel estimation corresponding to $N_{Tx2}$ active transmit chains of AP 1804. The second submatrix of the spatial mapping matrix regarding the second spatial mapping may be same as the spatial mapping matrix regarding the first spatial mapping indicated in frame 1810.

The second spatial mapping may indicate a spatial mapping type. The spatial mapping type of the second spatial mapping may be based on the spatial mapping type of the first spatial mapping indicated in frame 1810. The spatial mapping type of the second spatial mapping may comprise an indirect mapping type indicated in frame 1810 using a method of calculating a spatial mapping matrix based on a Hadamard matrix.

AP 1802 may send (e.g., transmit) to AP 1804 frame 1812 indicating the second spatial mapping, after receiving the first spatial mapping. Frame 1812 may comprise a response to frame 1810. Frame 1812 may further comprise an acceptance of the request in frame 1810. Frame 1812 may comprise a management frame. Frame 1812 may be an action frame.

AP 1802 may send (e.g., transmit) to AP 1804 a frame 1822 indicating the second spatial mapping, after receiving the first spatial mapping. Frame 1822 may initiate a multi-AP sounding procedure in phase 1820.

Frame 1822 may allow synchronization of sending (e.g., transmitting) frames 1824-1 and 1824-2. Frame 1822 may trigger AP 1802 and AP 1802 to concurrently send (e.g., transmit) respective frames 1824-1 and 1824-2.

Frame 1822 may further allow synchronization of sending (e.g., transmitting) frames 1826-1 and 1826-2. Frame 1822 may schedule AP 1802 and AP 1802 to coherently send (e.g., transmit) respective frames 1826-1 and 1826-2 to STAs 1806 and 1808 after sending (e.g., transmitting) frames 1824-1 and 1824-2.

Frame 1822 may comprise a control frame. Frame 1822 may comprise a trigger frame. Frame 1822 may comprise a multi-AP trigger frame for sounding procedure. For example, frame 1822 may comprise a multi-AP sounding trigger frame.

AP 1802 may send (e.g., transmit) a frame 1824-1 to announce the first transmission of the first PPDU from AP 1802, after sending (e.g., transmitting) frame 1822. Frame 1824-1 may indicate STAs 1806 and 1808. Frame 1824-1 may comprise an identifier of STA 1806 and an identifier of STA 1808. Frame 1824-1 may comprise a control frame. Frame 1824-1 may comprise a NDP announcement (NDPA) frame for multi-AP sounding. Frame 1824-1 may comprise a multi-AP NDP announcement frame.

AP 1802 may send (e.g., transmit) a frame 1826-1 to STAs 1806 and 1808, after sending (e.g., transmitting) frame 1824-1. AP 1802 sending (e.g., transmitting) frame 1826-1 may comprise the first transmission of the first PPDU from AP 1802 to STAs 1806 and 1808. The first transmission of the first PPDU may use the second spatial mapping determined by AP 1802. AP 1802 may use (e.g., apply) the first submatrix of the spatial mapping matrix associated with the second spatial mapping to symbols over $N_{SS1} + N_{SS2}$ spatial streams in the training field of the first PPDU.

AP 1804 may send (e.g., transmit) a frame 1824-2 to announce the second transmission of the second PPDU from AP 1804, after receiving frame 1822. Frame 1824-2 may indicate STAs 1806 and 1808. Frame 1824-2 may comprise an identifier of STA 1806 and an identifier of STA 1808. Frame 1824-2 may comprise a control frame. Frame 1824-2 may comprise a NDP announcement (NDPA) frame for multi-AP sounding. Frame 1824-2 may comprise a multi-AP NDP announcement frame.

AP 1804 may send (e.g., transmit) a frame 1826-2 to STAs 1806 and 1808, after sending (e.g., transmitting) frame 1824-2. AP 1804 sending (e.g., transmitting) frame 1826-2 may comprise the second transmission of the second PPDU from AP 1802 to STAs 1806 and 1808. The second transmission of the second PPDU may use the second spatial mapping indicated in frame 1822. AP 1804 may use (e.g., apply) the second submatrix of the spatial mapping matrix associated with the second spatial mapping to symbols over $N_{SS1} + N_{SS2}$ spatial streams in the training field of the second PPDU.

STA 1806 may estimate CSI corresponding to STA 1806 based on receiving frames 1826-1 and 1826-2 simultaneously. The CSI corresponding to STA 1806 may comprise an effective channel matrix corresponding to STA 1806 comprising a product of a channel matrix corresponding to STA 1806 and the spatial mapping matrix of the second spatial mapping. The channel matrix corresponding to STA 1806 may comprise CSI of a downlink channel from AP 1802 to STA 1806 and CSI of a downlink channel from AP 1804 to STA 1806. STA 1806 may estimate an effective channel matrix corresponding to STA 1806, based on the training symbols over $N_{SS1}$ spatial streams from the training field of the first PPDU and the training field of the second PPDU.

STA 1808 may similarly estimate CSI corresponding to STA 1808 based on receiving frames 1826-1 and 1826-2 simultaneously. The CSI corresponding to STA 1808 may comprise an effective channel matrix corresponding to STA 1808 comprising a product of an channel matrix corresponding to STA 1808 and the spatial mapping matrix of the second spatial mapping. The channel matrix corresponding to STA 1808 may comprise CSI of a downlink channel from AP 1802 to STA 1808 and CSI of a downlink channel from AP 1804 to STA 1808. STA 1808 may estimate the effective channel matrix corresponding to STA 1808 based on the training symbols over $N_{SS2}$ spatial streams from the training field of the first PPDU and the training field of the second PPDU.

AP 1802 may send (e.g., transmit) a frame 1830 soliciting a frame 1832 from STA 1806 and a frame 1834 from STA 1808, after sending (e.g., transmitting) frame 1826-1. Frame 1830 may allow synchronization of sending (e.g., transmitting) frames 1832 and 1834 by STA 1806 and STA 1808, respectively. Frame 1830 may indicate a beamforming report from sounding feedback of STA 1806 and a type of beamforming report from sounding feedback of STA 1808. For example, the type of beamforming report may comprise beamforming feedback report or channel quality information (CQI) report. Frame 1830 may comprise a trigger frame. Frame 1830 may comprise a beamforming report poll (BFRP) trigger frame or a multi-AP beamforming report poll trigger frame.

STAs 1806 and 1808 may respectively determine the type of beamforming report for sounding feedback, after receiving frame 1830. STAs 1806 and 1808, after determination, may respectively send (e.g., transmit) frames 1832 and 1834 in response to frame 1830.

Frame 1832 may indicate CQI report corresponding to STA 1806. Frame 1834 may indicate CQI report corresponding to STA 1808. STAs 1806 and 1808 may quantize the estimated effective channel matrices corresponding to STAs 1806 and 1808, respectively. STAs 1806 and 1808 may respectively generate CQI corresponding to STAs 1806 and 1808 based on the quantization.

Frame 1832 may indicate beamforming feedback report corresponding to STA 1806. Frame 1834 may indicate beamforming feedback report corresponding to STA 1808. STAs 1806 and 1808 may respectively perform singular value decomposition (SVD) on the estimated effective channel matrices and obtain beamforming feedback matrices corresponding to STAs 1806 and 1808, respectively. STAs 1806 and 1808 may quantize the beamforming feedback matrices corresponding to STAs 1806 and 1808, respectively.

Frames 1832 or 1834 may comprise an action frame. The action frame may be carried in a trigger based (TB) PPDU.

AP 1802 may send (e.g., transmit) the first sounding PPDU (frame 1826-1) using the first submatrix of the spatial mapping matrix associated with the second spatial mapping. AP 1804 may send (e.g., transmit) the second sounding PPDU (frame 1826-2) using the first submatrix of the spatial mapping matrix associated with the second spatial mapping. Thus, the orthogonal property of the spatial mapping matrix may be maintained for the channel estimation.

AP 1802 and AP 1802, by receiving frames 1832 and 1834, may successfully recover CSI and/or generate steering matrix for a multi-AP transmission by using the second spatial mapping.

AP 1802 may use (e.g., apply) the first submatrix of the spatial mapping matrix associated with the second spatial mapping to CQI indicated in frame 1832 and 1834, so that the CSI corresponding to channels from AP 1802 to STAs 1806 and 1808 may be recovered. AP 1802 may use (e.g., apply) the second submatrix of the spatial mapping matrix associated with the second spatial mapping to the CQI indicated in frame 1832 and 1834, so that the CSI corresponding to channels from AP 1804 to STAs 1806 and 1808 may be recovered.

AP 1804 may use (e.g., apply) the first submatrix of the spatial mapping matrix associated with the second spatial mapping to the CQI indicated in frame 1832 and 1834, so that the CSI corresponding to channels from AP 1802 to STAs 1806 and 1808 may be recovered. AP 1804 may use (e.g., apply) the second submatrix of the spatial mapping matrix associated with the second spatial mapping to the CQI indicated in frame 1832 and 1834, so that the CSI corresponding to channels from AP 1804 to STAs 1806 and 1808 may be recovered.

As a result, unsuccessful CSI determination may be avoided and the multi-AP joint sounding procedure in phase 1820 may be completed successfully. Reliability may thus be improved, and latency may be reduced for multi-AP communication.

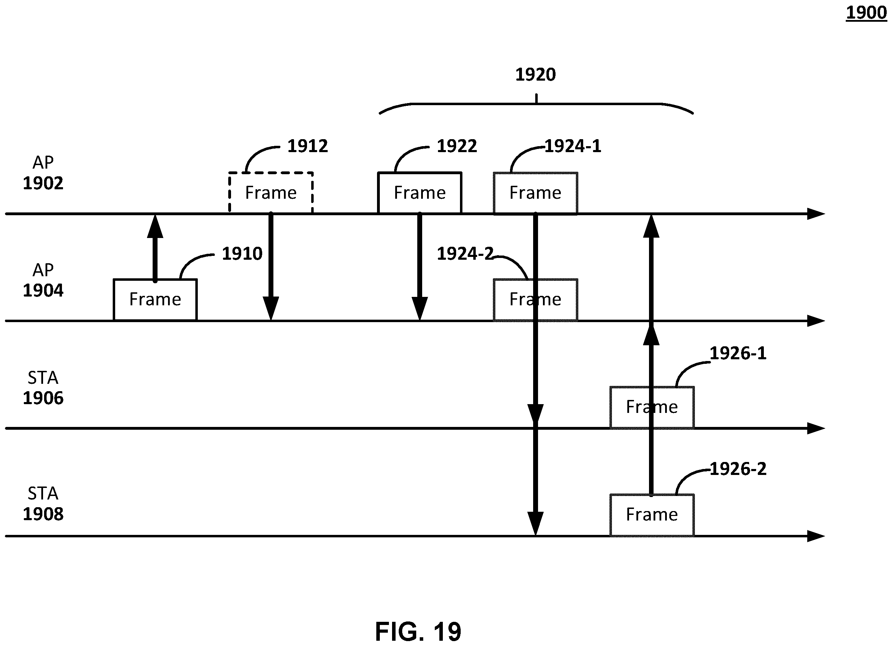

FIG. 19 shows an example 1900 that shows a spatial mapping coordination procedure for multi-AP communication. Example 1900 is provided for the purpose of illustration only and is not limiting. Example 1900, as shown in FIG. 19, may include an AP 1902, an AP 1904, a STA 1906, and a STA 1908. STA 1906 may be associated with AP 1902. STA 1908 may be associated with AP 1904. AP 1902, AP 1904, STA 1906, and/or STA 1908 may each comprise a multi-link device (MLD).

APs 1902 and 1904 may belong to the same ESS as described above in FIG. 1. APs 1902 and 1904 may be connected by a DS to support ESS features. APs 1902 and 1904 belong to different BSSs. AP 1902 may belong to a first BSS and AP 1904 may belong to a second BSS. The second BSS may comprise an overlapping basic service set (OBSS) relative to the first BSS.

AP 1902 and 1904 may form a multi-AP group. It is assumed in an example 1900, APs 1902 and 1904 may complete a multi-AP setup procedure prior to the beginning of example 1900. APs 1902 and 1904, as part of a multi-AP group, may be connected by a backhaul. The backhaul may be a wireless backhaul. AP 1902 and AP 1904 may complete a multi-AP selection phase 1010, and an optional multi-AP data sharing phase 1012, as described in FIG 10, before example 1900 begins.

Example 1900, as shown in FIG. 19, may include frame exchanges to enable AP 1902 to coordinate with AP 1904 to perform a multi-AP sounding procedure in a phase 1920. The multi-AP sounding procedure may comprise a multi-AP joint sounding procedure. The multi-AP joint sounding procedure may comprise a coherent sounding physical layer data unit (PPDU) transmission from multiple STAs to multiple APs. The sounding PPDU may comprise a null data PPDU (NDP).

It is assumed in an example 1900 that both AP 1902 and AP 1904 support a spatial mapping coordination capability. Support of the spatial mapping coordination capability may allow AP 1904 sending (e.g., transmitting) frames (such as frame 1910 described below) to share information related to a first spatial mapping with AP 1902. Support of the spatial mapping coordination capability may allow AP 1902 receiving and processing frames (such as frame 1910) and sending (e.g., transmitting) frames (such as frame 1922 described below) to determine a second spatial mapping for the multi-AP transmission based on the first spatial mapping. Support of the spatial mapping coordination capability may allow AP 1902 and AP 1904 receiving frames respectively (such as frames 1926-1, and 1926-2 described below), using the second spatial mapping, from STAs 1906 and 1908, respectively.

APs 1902 and 1904, prior to the beginning of example 1900, may exchange a first frame and a second frame (not shown in FIG. 19) to exchange capability information. The first frame may comprise the capability information of AP 1902, including a first indication of support by AP 1902 of the spatial mapping coordination capability. The second frame may comprise the capability information of AP 1904, including a second indication of support by AP 1904 of the spatial mapping coordination capability. The first frame and the second frame may be exchanged in (e.g., during) a multi-AP setup procedure or a multi-AP selection phase. The first frame and the second frame may comprise a management frame.

The multi-AP joint sounding procedure may require coherent transmission of a first sounding PPDU from STA 1906 and a second sounding PPDU from STA 1908. The first sounding PPDU and the second sounding PPDU may be received by APs 1902 and 1904, respectively. AP 1902 may require a spatial mapping be used (e.g., applied) by STA 1906 onto spatial streams of the first sounding PPDU. AP 1904 may require a spatial mapping be used (e.g., applied) by STA 1908 onto spatial streams of the second sounding PPDU. The first sounding PPDU and the second sounding PPDU may comprise NDPs.

Example 1900, as shown in FIG. 19, may include frame exchanges to allow AP 1902 to acquire CSI of channels in the multi-AP group. Capabilities of APs 1902 and 1904 may comprise supporting use of spatial mapping matrices or spatial mapping types to carrying out the spatial mapping.

Capability of AP 1902 may comprise supporting use of one or more spatial mapping matrices or spatial mapping types for a first transmission of a first PPDU from STA 1906. The first PPDU may comprise the first sounding PPDU. The first PPDU may comprise a first NDP.

Capability of AP 1904 may comprise supporting use of one or more spatial mapping matrices or spatial mapping types for a second transmission of a second PPDU from STA 1908. The second PPDU may comprise the second sounding PPDU. The second PPDU may comprise a second NDP.

Example 1900 may begin with AP 1902 receiving from AP 1904 a frame 1910 indicating a first spatial mapping. The first spatial mapping may indicate or comprise one or more spatial mapping matrices. The first spatial mapping may indicate or comprise one or more spatial mapping types.

A spatial mapping type may correspond to a method of calculating one or more spatial mapping matrices. The spatial mapping type may be a direct mapping type, an indirect mapping type, or a spatial expansion type. For example, the direct mapping type may indicate a method of calculating one or more spatial mapping matrices as identical matrices and/or a method of calculating one or more spatial mapping matrices as cyclic shift delay (CSD) matrices. The indirect mapping type may indicate a method of calculating one or more spatial mapping matrices based on a unitary matrix. The method of calculating one or more spatial mapping matrices based on a unitary matrix may comprise a product operation of a CSD matrix and a unitary matrix. The unitary matrix may comprise a Hadamard matrix, and a Fourier matrix. For example, the spatial expansion type may indicate a method of calculating one or more spatial mapping matrices based on a square matrix formed of orthogonal columns. The method of calculating one or more spatial mapping matrices based on a matrix may comprise a product operation of a CSD matrix and a square matrix formed of orthogonal columns.

The first spatial mapping may be for the second transmission of the second PPDU from STA 1908. The second transmission of the second PPDU may occur in phase 1920 during a transmission opportunity (TXOP) of AP 1902.

Frame 1910 may further comprise a request to AP 1902 for AP 1904 to use the first spatial mapping for the second transmission of the second PPDU. Frame 1910 may comprise a management frame or a data frame.

AP 1902 may optionally send (e.g., transmit) to AP 1904 a frame 1912 to acknowledge the reception of frame 1910. AP 1902 may determine, based on the first spatial mapping indicated in frame 1910, a second spatial mapping. The determination of the second spatial mapping may use the first spatial mapping. AP 1902 may verify the first spatial mapping. AP 1902 verifying the first spatial mapping may comprise verifying whether any one of the spatial mapping matrices associated with the first spatial mapping may be used for a coherent transmission comprising the first transmission of the first PPDU and the second transmission of the second PPDU. AP 1902 verifying the first spatial mapping may be according to information available at AP 1902 until receiving frame 1910. The information available at AP 1902 until receiving frame 1910 may comprise capability of AP 1902, BSS information of AP 1902, information regarding MIMO capabilities of AP 1902, and/or link quality information of AP 1902. The information available at AP 1902 until receiving frame 1910 may further comprise information regarding AP 1904 obtained by AP 1902 in a multi-AP setup phase and/or in a multi-AP selection phase.

The second spatial mapping may be based on the first spatial mapping. The second spatial mapping may indicate or comprise a spatial mapping matrix. The spatial mapping matrix associated with the second spatial mapping may be based on the spatial mapping matrix associated with the first spatial mapping indicated in frame 1910. The second spatial mapping may be for the second transmission of the second PPDU, from STA 1908, during the TXOP of AP 1902.

The spatial mapping matrix associated with the second spatial mapping may comprise an orthonormal matrix. The orthonormal matrix associated with the second spatial mapping may comprise a first submatrix and a second submatrix. The second submatrix of the orthonormal matrix used as the spatial mapping matrix associated with the second spatial mapping may be same as the spatial mapping matrix associated with the first spatial mapping indicated in frame 1910.

The orthonormal matrix associated with the second spatial mapping may have a size of ($N_{Tx1}$ + $N_{Tx2}$) by ($N_{SS1}$ + $N_{SS2}$). $N_{Tx1}$ may indicate a number of active transmit chains of STA 1906, $N_{Tx2}$ may be a number of active transmit chains of STA 1908, $N_{SS1}$ may indicate a number of spatial streams for STA 1906, and $N_{SS2}$ may indicate a number of spatial streams for STA 1908. The orthonormal matrix associated with the second spatial mapping may be a Hadamard matrix.

The spatial mapping matrix associated with the second spatial mapping may comprise a first submatrix and a second submatrix. The first submatrix of the spatial mapping matrix may be for application to training symbols over $N_{SS1}$ spatial streams in a training field of the first PPDU sent (e.g., transmitted) by STA 1906. The first submatrix of the spatial mapping matrix maybe for $N_{Tx1}$ active transmit chains of STA 1906. The training field of the first PPDU may comprise a long training field or a channel estimation field. The training field of the first PPDU may use training symbols over $N_{SS2}$ spatial streams for channel estimation corresponding to $N_{Tx1}$ active transmit chains of STA 1908. The first submatrix, a size of $N_{Tx1}$ by $N_{SS1}$, may be first $N_{Tx1}$ rows and first $N_{SS1}$ columns of the spatial mapping matrix

The second submatrix of the spatial mapping matrix may be for application to training symbols over $N_{SS2}$ spatial streams in a training field of the second PPDU sent (e.g., transmitted) by STA 1908. The second submatrix of the spatial mapping matrix may be for $N_{Tx2}$ active transmit chains of STA 1908. For example, the second submatrix, a size of $N_{Tx2}$ by $N_{SS2}$, may be ($N_{Tx1}$ +1) to $N_{Tx2}$ rows and ($N_{SS1}$ +1) to $N_{SS2}$ columns of the spatial mapping matrix. The training field of the second PPDU may comprise a long training field or a channel estimation field. The training field of the second PPDU may use training symbols over $N_{SS2}$ spatial streams for channel estimation corresponding to $N_{Tx2}$ active transmit chains of STA 1908. The second submatrix of the spatial mapping matrix regarding the second spatial mapping may be same as the spatial mapping matrix regarding the first spatial mapping indicated in frame 1910.

The second spatial mapping may indicate a spatial mapping type. The spatial mapping type of the second spatial mapping may be based on the spatial mapping type of the first spatial mapping indicated in frame 1910. For example, the spatial mapping type of the second spatial mapping may comprise an indirect mapping type indicated in frame 1910 using a method of calculating a spatial mapping matrix based on a Hadamard matrix

AP 1902 may send (e.g., transmit) to AP 1904 a frame 1912 indicating the second spatial mapping, after receiving the first spatial mapping. Frame 1912 may comprise a response to frame 1910. Frame 1912 may further comprise an acceptance of the request in frame 1910. Frame 1912 may comprise a management frame. Frame 1912 may be an action frame.

AP 1902 may send (e.g., transmit) to AP 1904 a frame 1922 indicating the second spatial mapping, after receiving the first spatial mapping. Frame 1922 may initiate a multi-AP sounding procedure in phase 1920.

Frame 1922 may allow synchronization of APs 1902 and 1904 sending (e.g., transmitting) respective frames 1924-1 and 1924-2. Frame 1922 may trigger AP 1902 and AP 1902 to concurrently send (e.g., transmit) respective frames 1924-1 and 1924-2.

Frame 1922 may further allow synchronization of STAs 1906 and 1908 sending (e.g., transmitting) frames 1926-1 and 1926-2. Frame 1922 may schedule STA 1906 and STA 1908 to coherently send (e.g., transmit) respective frames 1926-1 and 1926-2 to APs 1902 and 1904 after receiving frames 1924-1 and 1924-2.

Frame 1922 may comprise a control frame. In an example, frame 1922 may comprise a trigger frame. Frame 1922 may comprise a multi-AP trigger frame for sounding procedure. For example, frame 1922 may comprise a multi-AP sounding trigger frame.

AP 1902 may send (e.g., transmit) a frame 1924-1 to solicit the first transmission of the first PPDU from STA 1906, after sending (e.g., transmitting) frame 1922. Frame 1924-1 may indicate the second spatial mapping determined by AP 1902. Frame 1924-1 may indicate STA 1906. Frame 1924-1 may comprise an identifier of STA 1906. Frame 1924-1 may comprise a control frame. Frame 1924-1 may comprise a trigger frame for NDP sounding. Frame 1924-1 may comprise a NDP trigger frame.

STA 1906 may send (e.g., transmit) a frame 1926-1 to APs 1902 and 1904, after receiving frame 1924-1. STA 1906 sending (e.g., transmitting) frame 1926-1 may comprise the first transmission of the first PPDU from STA 1906 to APs 1902 and 1904. The first transmission of the first PPDU may use the second spatial mapping indicated in frame 1924-1. STA 1906 may use (e.g., apply) the first submatrix of the spatial mapping matrix associated with the second spatial mapping to symbols over $N_{SS1}$ spatial streams in the training field of the first PPDU.

AP 1904 may send (e.g., transmit) a frame 1924-2 to solicit the second transmission of the second PPDU from STA 1908, after receiving frame 1922. Frame 1924-2 may indicate the second spatial mapping indicated in frame 1722. Frame 1924-2 may indicate STA 1908. Frame 1924-2 may comprise an identifier of STA 1908. Frame 1924-2 may comprise a control frame. Frame 1924-2 may comprise a trigger frame for NDP sounding. Frame 1924-2 may comprise a NDP trigger frame.

STA 1908 may send (e.g., transmit) a frame 1926-2 to APs 1902 and 1904, after receiving frame 1924-2. STA 1908 sending (e.g., transmitting) frame 1926-2 may comprise the second transmission of the second PPDU from STA 1908 to APs 1902 and 1904. The second transmission of the second PPDU may use the second spatial mapping indicated in frame 1924-2. AP 1904 may use (e.g., apply) the second submatrix of the spatial mapping matrix associated with the second spatial mapping to symbols over $N_{SS2}$ spatial streams in the training field of the second PPDU.

AP 1902 may estimate CSI corresponding to AP 1902 based on receiving frames 1926-1 and 1926-2 simultaneously. The CSI corresponding to AP 1902 may comprise an effective channel matrix corresponding to AP 1902 comprising a product of a channel matrix corresponding to AP 1902 and the spatial mapping matrix of the second spatial mapping. The channel matrix corresponding to AP 1902 may comprise CSI of a uplink channel from STA 1906 to AP 1902 and CSI of a uplink channel from STA 1908 to AP 1904. AP 1902 may estimate an effective channel matrix corresponding to AP 1902, based on the training symbols over $N_{SS1}$ spatial streams from the training field of the first PPDU and the training field of the second PPDU.

AP 1904 may estimate CSI corresponding to AP 1904 based on receiving frames 1926-1 and 1926-2 simultaneously. The CSI corresponding to AP 1904 may comprise an effective channel matrix corresponding to AP 1904 comprising a product of an channel matrix corresponding to AP 1904 and the spatial mapping matrix of the second spatial mapping. The channel matrix corresponding to AP 1904 may comprise CSI of a uplink channel from STA 1906 to AP 1904 and CSI of a uplink channel from STA 1908 to AP 1904. AP 1904 may estimate the effective channel matrix corresponding to AP 1904 based on the training symbols over $N_{SS2}$ spatial streams from the training field of the first PPDU and the training field of the second PPDU.

AP 1902 and AP 1904 may successfully recover CSI and/or generate steering matrix for a multi-AP transmission by using the second spatial mapping. AP 1902 may use (e.g., apply) the first submatrix of the spatial mapping matrix associated with the second spatial mapping to estimated CSI corresponding to AP 1902 so that the CSI corresponding to channels from STA 1906 to AP 1902 may be recovered. AP 1902 may use (e.g., apply) the second submatrix of the spatial mapping matrix associated with the second spatial mapping to estimated CSI corresponding to AP 1902 so that the CSI corresponding to channels from STA 1908 to AP 1902 may be recovered.

AP 1904 may use (e.g., apply) the first submatrix of the spatial mapping matrix associated with the second spatial mapping to estimated CSI corresponding to AP 1904 so that the CSI corresponding to channels from STA 1906 to AP 1904 may be recovered. AP 1904 may use (e.g., apply) the second submatrix of the spatial mapping matrix associated with the second spatial mapping to estimated CSI corresponding to AP 1904 so that the CSI corresponding to channels from STA 1908 to AP 1904 may be recovered.

As a result, unsuccessful CSI determination may be avoided and the multi-AP joint sounding procedure in phase 1820 may be completed successfully. Reliability may thus be improved, and latency may be reduced for multi-AP communication.

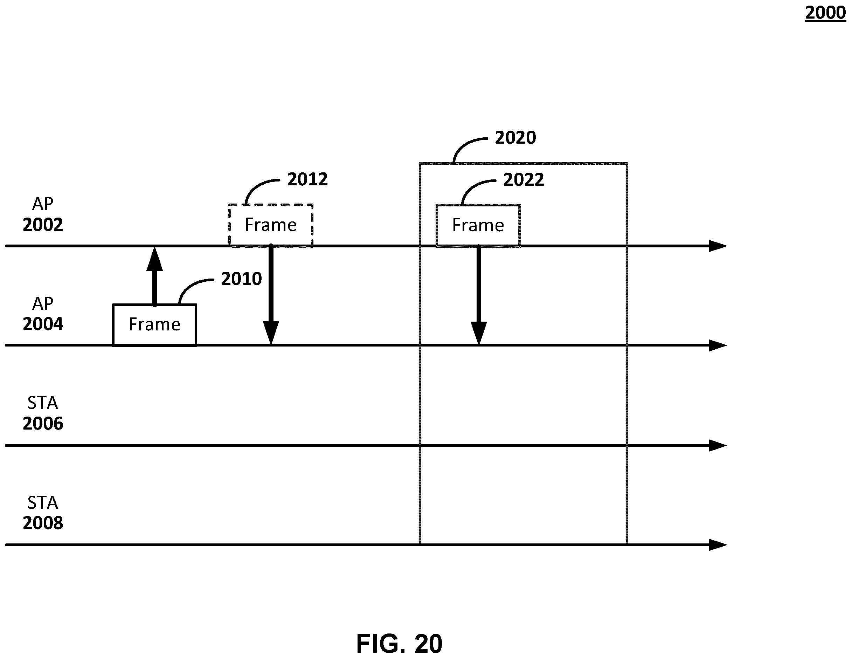

FIG. 20 shows an example 2000 that shows a spatial mapping coordination procedure for multi-AP communication. Example 2000 is provided for the purpose of illustration only and is not limiting. Example 2000, as shown in FIG. 20, may include an AP 2002, an AP 2004, a STA 2006, and a STA 2008. STA 2006 may be associated with AP 2002. STA 2008 may be associated with AP 2004. AP 2002, AP 2004, STA 2006, and/or STA 2008 may each comprise a multi-link device (MLD).

APs 2002 and 2004 may belong to the same ESS as described above in FIG. 1. APs 2002 and 2004 may be connected by a DS to support ESS features. APs 2002 and 2004 belong to different BSSs. AP 2002 may belong to a first BSS and AP 2004 may belong to a second BSS. The second BSS may comprise an overlapping basic service set (OBSS) relative to the first BSS.

AP 2002 and 2004 may form a multi-AP group. It is assumed in an example 2000, APs 2002 and 2004 may complete a multi-AP setup procedure prior to the beginning of example 2000. As part of a multi-AP group, APs 2002 and 2004 may be connected by a backhaul. The backhaul may be a wireless backhaul. AP 2002 and AP 2004, before example 2000 begins, may complete a multi-AP selection phase 1010, and an optional multi-AP data sharing phase 1012, as described in FIG 10.

As shown in FIG. 20, example 2000 may include frame exchanges to enable AP 2002 to coordinate with AP 2004 to perform a multi-AP sounding procedure in a phase 2020. The multi-AP sounding procedure may comprise a multi-AP joint sounding procedure. The multi-AP joint sounding procedure may comprise a coherent sounding physical layer data unit (PPDU) transmission from multiple APs. The multi-AP joint sounding procedure may comprise a coherent sounding physical layer data unit (PPDU) transmission from multiple STAs to multiple APs. The sounding PPDU may comprise a null data PPDU (NDP).

It is assumed in an example 2000 that both AP 2002 and AP 2004 support a spatial mapping coordination capability. Support of the spatial mapping coordination capability may allow AP 2004 sending (e.g., transmitting) frames (such as frame 2010 described below) to share information related to a first spatial mapping with AP 2002. Support of the spatial mapping coordination capability may allow AP 2002 to receiving and processing frames (such as frame 2010) and sending (e.g., transmitting) frames (such as frame 2022 described below) to determine a second spatial mapping for the multi-AP transmission based on the first spatial mapping. Support of the spatial mapping coordination capability may allow AP 2002 and AP 2004 receiving frames respectively (such as frames 2026-1, and 2026-2 described below), using the second spatial mapping, from STAs 2006 and 2008, respectively.

APs 2002 and 2004, prior to the beginning of example 2000, may exchange a first frame and a second frame (not shown in FIG. 20) to exchange capability information. The first frame may comprise the capability information of AP 2002, including a first indication of support by AP 2002 of the spatial mapping coordination capability. The second frame may comprise the capability information of AP 2004, including a second indication of support by AP 2004 of the spatial mapping coordination capability. The first frame and the second frame may be exchanged in (e.g., during) a multi-AP setup procedure or a multi-AP selection phase. The first frame and the second frame may comprise a management frame.

The multi-AP joint sounding procedure may require coherent transmission of a first sounding PPDU from STA 2006 and a second sounding PPDU from STA 2008. The first sounding PPDU and the second sounding PPDU are to be received by APs 2002 and 2004, respectively. AP 2002 may require spatial mapping be used (e.g., applied) by STA 2006 onto spatial streams of the first sounding PPDU. AP 2004 may require spatial mapping be used (e.g., applied) by STA 2008 onto spatial streams of the second sounding PPDU. The first sounding PPDU and the second sounding PPDU may comprise NDPs.

Example 2000, as shown in FIG. 20, may include frame exchanges to allow AP 2002 to acquire CSI of channels in the multi-AP group. Example 2000 may begin with AP 2002 receiving from AP 2004 a frame 2010 indicating a first spatial mapping. Frame 2010 may comprise capability information indicating support of the first spatial mapping.

AP 2002 may send (e.g., transmit) to AP 2004 frame 2012 indicating the second spatial mapping. The first spatial mapping or the second spatial mapping may indicate or comprise one or more spatial mapping matrices. The first spatial mapping or the second spatial mapping may indicate or comprise one or more spatial mapping types.

A spatial mapping type may correspond to a method of calculating one or more spatial mapping matrices. The spatial mapping type may be a direct mapping type, an indirect mapping type, or a spatial expansion type. For example, the direct mapping type may indicate a method of calculating one or more spatial mapping matrices as identical matrices and/or a method of calculating one or more spatial mapping matrices as cyclic shift delay (CSD) matrices. The indirect mapping type may indicate a method of calculating one or more spatial mapping matrices based on a unitary matrix. The method of calculating one or more spatial mapping matrices based on a unitary matrix may comprise a product operation of a CSD matrix and a unitary matrix. The unitary matrix may comprise a Hadamard matrix, and a Fourier matrix. The spatial expansion type may indicate a method of calculating one or more spatial mapping matrices based on a square matrix formed of orthogonal columns. The method of calculating one or more spatial mapping matrices based on a matrix may comprise a product operation of a CSD matrix and a square matrix formed of orthogonal columns.

The second spatial mapping may be for a first transmission of a first PPDU. The first transmission of the first PPDU may be from AP 2002 to STAs 2006 and 2008. The first transmission of the first PPDU may be from STA 2006 to APs 2002 and 2004. The first transmission of the first PPDU may occur in phase 2020 during a transmission opportunity (TXOP) of AP 2002.

The first spatial mapping may be for a second transmission of a second PPDU. The second transmission of the second PPDU may be from AP 2004 to STAs 2006 and 2008. The second transmission of the second PPDU may be from STA 2008 to APs 2002 and 2004. The second transmission of the second PPDU may occur in phase 2020 during the TXOP of AP 2002.

Capability of AP 2002 may comprise supporting use of one or more spatial mapping matrices or spatial mapping types for a first transmission of a first PPDU from STA 2006. The first PPDU may comprise the first sounding PPDU. The first PPDU may comprise a first NDP.

Capability of AP 2004 may comprise supporting use of one or more spatial mapping matrices or spatial mapping types for a second transmission of a second PPDU from STA 2008. The second PPDU may comprise the second sounding PPDU. The second PPDU may comprise a second NDP.

Frame 2010 or frame 2012 may comprise a management frame. AP 2002 may determine, based on the first spatial mapping indicated in frame 2010 and the second spatial mapping, a third spatial mapping. The determination of the third spatial mapping may use the first spatial mapping and the second spatial mapping. AP 2002 may verify the first spatial mapping. AP 2002 verifying the first spatial mapping may comprise verifying whether any one of the spatial mapping matrices associated with the first spatial mapping may be used together with any of the spatial mapping matrices associated with the second spatial mapping for a coherent transmission comprising the first transmission of the first PPDU and the second transmission of the second PPDU. AP 2002 varying the first spatial mapping may be according to information available at AP 2002 until receiving frame 2010. For example, the information available at AP 2002 until receiving frame 2010 may comprise capability of AP 2002, BSS information of AP 2002, information regarding MIMO capabilities of AP 2002, and/or link quality information of AP 2002. The information available at AP 2002 until receiving frame 2010 may further comprise information regarding AP 2004 obtained by AP 2002 in a multi-AP setup phase and/or in a multi-AP selection phase.

The third spatial mapping may be based on the first spatial mapping. The third spatial mapping may indicate or comprise a spatial mapping matrix The spatial mapping matrix associated with the third spatial mapping may be based on the spatial mapping matrix associated with the third spatial mapping indicated in frame 2010. The third spatial mapping may be for the second transmission of the second PPDU in phase 2020.

The spatial mapping matrix associated with the third spatial mapping may comprise an orthonormal matrix. The orthonormal matrix may comprise a first submatrix and a second submatrix. The first submatrix of the orthonormal matrix associated with the third spatial mapping may be same as one of the spatial mapping matrices associated with the second spatial mapping indicated in frame 2010. The second submatrix of the orthonormal matrix associated with the second spatial mapping may be same as the spatial mapping matrix associated with the first spatial mapping indicated in frame 2010.

Phase 2020 may be an example of phase 1720 shown in FIG. 17. The second transmission of the second PPDU may be from AP 2004 to STAs 2006 and 2008.

The orthonormal matrix associated with the third spatial mapping may have a size of $(N_{Tx1} + N_{Tx2})$ by $(N_{SS1} + N_{SS2})$. $N_{Tx1}$ may indicate a number of active transmit chains of AP 2002, $N_{Tx2}$ may be a number of active transmit chains of AP 2004. $N_{SS1}$ may indicate a number of spatial streams for STA 2006, and $N_{SS2}$ may indicate a number of spatial streams for STA 2008. The orthonormal matrix associated with the third spatial mapping may comprise a Hadamard matrix.

The first submatrix of the orthonormal matrix used as the spatial mapping matrix may be for application to training symbols over $N_{SS1} + N_{SS2}$ spatial streams in a training field of the first PPDU sent (e.g., transmitted) by AP 2002. The first submatrix of the spatial mapping matrix may be for $N_{Tx1}$ active transmit chains of AP 2002. The training field of the first PPDU may comprise a long training field or a channel estimation field. The training field of the first PPDU may use training symbols over ($N_{SS1}$ + $N_{SS2}$) spatial streams for channel estimation corresponding to $N_{Tx1}$ active transmit chains of AP 2002. For example, the first submatrix, a size of $N_{Tx1}$ by ($N_{SS1}$ + $N_{SS2}$), may be a first $N_{Tx1}$ rows of the spatial mapping matrix.

The second submatrix of the orthonormal matrix used as the spatial mapping matrix may be for application to training symbols over $N_{SS1}$ + $N_{SS2}$ spatial streams in a training field of the second PPDU sent (e.g., transmitted) by AP 2004. The second submatrix of the spatial mapping matrix may be for $N_{Tx2}$ active transmit chains of AP 2004. For example, the second submatrix, a size of $N_{Tx2}$ by ($N_{SS1}$ + $N_{SS2}$), may be a ($N_{Tx1}$ +1) to $N_{Tx2}$ rows of the spatial mapping matrix The training field of the second PPDU may comprise a long training field or a channel estimation field. The training field of the second PPDU may use training symbols over ($N_{SS1}$ + $N_{SS2}$) spatial streams for channel estimation corresponding to $N_{Tx2}$ active transmit chains of AP 2004.

Phase 2020 may be an example of phase 1920 shown in FIG. 19. The second transmission of the second PPDU may be from STA 2008 to APs 2002 and 2004.

The orthonormal matrix used as the spatial mapping matrix associated with the third spatial mapping may be a Hadamard matrix having a size of ($N_{Tx1}$ + $N_{Tx2}$) by ($N_{SS1}$ + $N_{SS2}$). $N_{Tx1}$ may indicate a number of active transmit chains of STA 2006, $N_{Tx2}$ may be a number of active transmit chains of STA 2008. $N_{SS1}$ may indicate a number of spatial streams for STA 2006, and $N_{SS2}$ may indicate a number of spatial streams for STA 2008.

The first submatrix of the spatial mapping matrix may be for application to training symbols over $N_{SS1}$ spatial streams in a training field of the first PPDU sent (e.g., transmitted) by STA 2006. The first submatrix of the spatial mapping matrix may be for $N_{Tx1}$ active transmit chains of STA 2006. The training field of the first PPDU may comprise a long training field or a channel estimation field. The training field of the first PPDU may use training symbols over $N_{SS2}$ spatial streams for channel estimation corresponding to $N_{Tx1}$ active transmit chains of STA 2008. For example, the first submatrix, a size of $N_{Tx1}$ by $N_{SS1}$, may be first $N_{Tx1}$ rows and first $N_{SS1}$ columns of the spatial mapping matrix

The second submatrix of the spatial mapping matrix may be for application to training symbols over $N_{SS2}$ spatial streams in a training field of the second PPDU sent (e.g., transmitted) by STA 2008. The second submatrix of the spatial mapping matrix may be for $N_{Tx2}$ active transmit chains of STA 2008. For example, the second submatrix, a size of $N_{Tx2}$ by $N_{SS2}$, may be ($N_{Tx1}$ +1) to $N_{Tx2}$ rows and ($N_{SS1}$ +1) to $N_{SS2}$ columns of the spatial mapping matrix. The training field of the second PPDU may comprise a long training field or a channel estimation field. The training field of the second PPDU may use training symbols over $N_{SS2}$ spatial streams for channel estimation corresponding to $N_{Tx2}$ active transmit chains of STA 2008.

The third spatial mapping may indicate a spatial mapping type. The spatial mapping type of the third spatial mapping may be based on the spatial mapping type of the first spatial mapping indicated in frame 2010. For example, the spatial mapping type of the third spatial mapping may comprise an indirect mapping type indicated in frame 2010 using a method of calculating a spatial mapping matrix based on a Hadamard matrix.

AP 2002, after receiving the first spatial mapping, may send (e.g., transmit) to AP 2004 frame 2012 indicating the second spatial mapping. Frame 2012 may comprise a response to frame 2010. Frame 2012 may further comprise an acceptance of the request in frame 2010. Frame 2012 may comprise a management frame. In an example, frame 2012 may be an action frame.

AP 2002 may send (e.g., transmit) to AP 2004 a frame 2022 indicating the second spatial mapping, after receiving the first spatial mapping. Frame 2022 may initiate a multi-AP sounding procedure in phase 2020.

The multi-AP sounding procedure in phase 2020 may be the same as the multi-AP sounding procedure in phase 1720 as shown in FIG. 17. The multi-AP sounding procedure in phase 2020 may be same as the multi-AP sounding procedure in phase 1920 as shown in FIG. 19.

As a result, unsuccessful CSI determination may be avoided and the multi-AP joint sounding procedure in phase 2020 may be completed successfully. Reliability may thus be improved, and latency may be reduced for multi-AP communication.

Frames 2010 and 2012 described with respect to FIG. 20 may comprise a management frame. The management frame may comprise a beacon frame or an action frame.

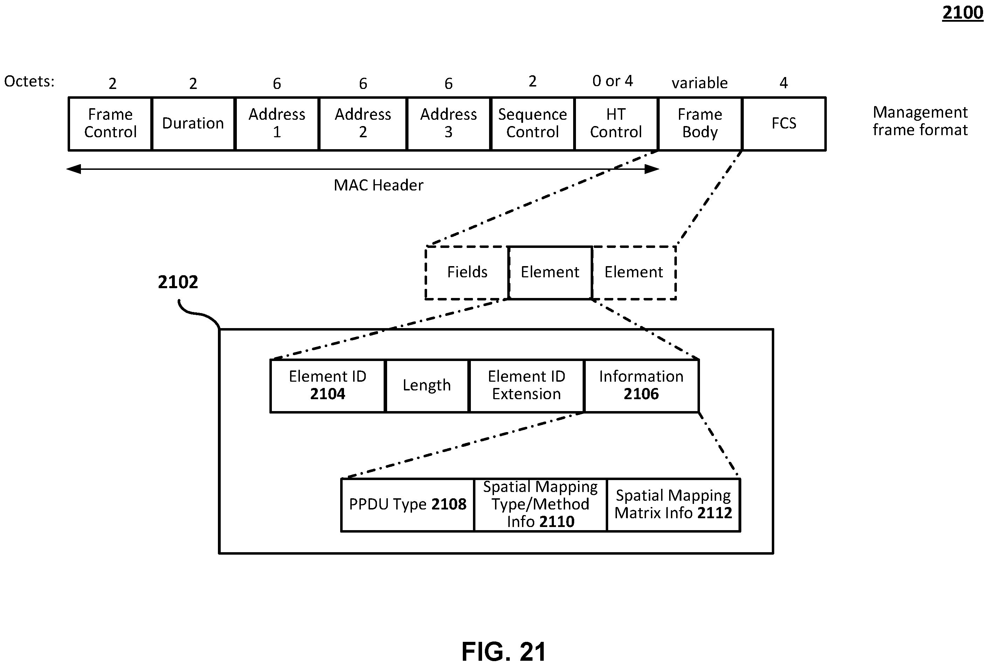

FIG. 21 shows an example management frame 2100. For example, management frame 2100 may comprise frames 2010 and 2012. Management frame 2100 may indicate information supporting a spatial mapping coordination capability.

Information supporting the spatial mapping coordination capability may comprise a capability of supporting spatial mapping. The capability of supporting spatial mapping may indicate capabilities of using a or more spatial mapping type. The capability of supporting spatial mapping may further include capabilities of using one or more spatial mapping matrices. Information supporting the spatial mapping coordination capability may comprise an indication of a type of PPDU for which a spatial mapping is supported.

Information supporting the spatial mapping coordination capability may comprise an indication of the spatial mapping. Indication of the spatial mapping may comprise an indication of one or more spatial mapping type. Indication of the spatial mapping may further comprise an indication of one or more spatial mapping matrices.

Management frame 2100 may be received by a first AP from a second AP. Management frame 2100 may be sent (e.g., transmitted) by the first AP from the second AP. For example, the first AP may be AP 2002 described in FIG. 20. The second AP may be AP 2004 described in FIG. 20.

Management frame 2100, as shown in FIG. 21, may include a frame control field, a duration field, one or more address fields, a sequence control field, an HT control field, a frame body, and an FCS field. The frame body of frame 2100 may include an element 2102. Element 2102 may comprise information supporting spatial mapping coordination capability. Element 2102 may include an element identifier (ID) field 2104, a length field, an element ID extension field, and an information field 2106.

Element ID field 2104 may indicate the capability of support spatial mapping. Element ID field 2104 may further indicate the capability of support spatial mapping coordination. Information field 2106 may comprise a PPDU type subfield 2108, a spatial mapping type/method information subfield 2110, and a spatial mapping matrix information subfield 2112.

PPDU type subfield 2108 may indicate a type of PPDU of which a spatial mapping is supported for. The PPDU may comprise a sounding PPDU. For example, the sounding PPDU may comprise a NDP. PPDU type subfield 2108 may take a 0 or 1 value. A value of 1 may indicate that the capability information indicated in subfields 2110, 2112, and 2114 dedicated for sending (e.g., transmitting) the sounding PPDU. A value of 0 may indicate that the capability information indicated in subfields 2110, 2112, and 2114 dedicated for sending (e.g., transmitting) a PPDU comprising a data field.

Spatial mapping type/method information subfield 2110 may comprise the capability information of support one or more spatial mapping types/methods. Spatial mapping type/method information subfield 2110 may comprise one or more spatial mapping types. For example, the spatial mapping type may comprise a direct mapping type, an indirect mapping type, and a spatial expansion type. Spatial mapping type/method information subfield 2110 may comprise a method generating one or more orthonormal matrices. The orthonormal matrix may comprise identical matrix, a method using a CSD matrix, a method using Hadamard matrix, and a method using DFT method.

Spatial mapping matrix information subfield 2112 may comprise the capability information of support one or more spatial mapping matrices. Spatial mapping matrix information subfield 2112 may comprise one or more orthonormal matrices. For example, the orthonormal matrix may comprise identical matrix, a method using a CSD matrix, a method using Hadamard matrix, and a method using DFT method. Spatial mapping matrix information subfield 2112 may comprise one or more submatrices of the orthonormal matrices. Spatial mapping matrix information subfield 2112 may further indicate the spatial streams associated with the submatrices for one or more STAs. Spatial mapping matrix information subfield 2112 may also indicate the transmit chains associated with the submatrices for one or more transmitters. The transmitter may be an AP or a non-AP STA.

Frames 1710, 1712 described in FIG. 17, 1810, 1812 described in FIG. 18, 1910, and 1912 described in FIG. 19 may comprise a management frame. The management frame may comprise an action frame.

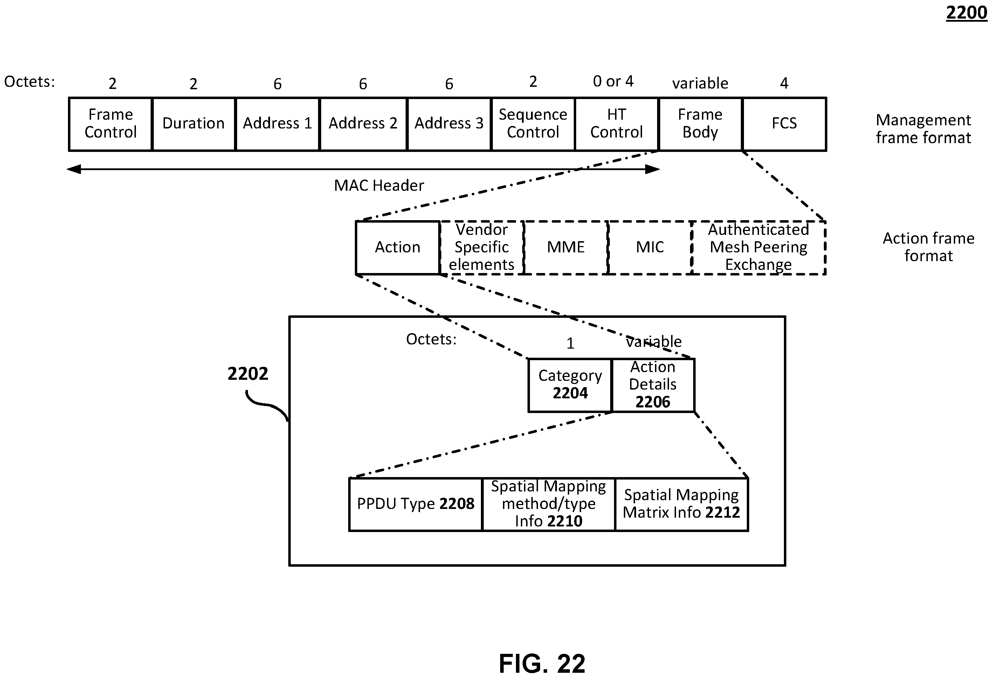

FIG. 22 shows an example action frame 2200. For example, action frame 2200 may comprise frames 1710, 1712, 1810, 1812, 1910, or 1912. Action frame 2200 may comprise a public action frame.

Management frame 2100 may indicate information supporting spatial mapping coordination. Information supporting spatial mapping coordination may comprise an indication of a type of PPDU for which a spatial mapping is used. Information supporting spatial mapping coordination may comprise an indication of the spatial mapping. Indication of the spatial mapping may comprise an indication of one or more spatial mapping types. Indication of the spatial mapping may further comprise an indication of one or more spatial mapping matrices.

Action frame 2200 may be received by a first AP from a second AP. For example, the first AP may be AP 1702 described in FIG. 17, AP 1802 described in FIG. 18, or AP 1902 described in FIG. 19. The second AP may be AP 1704 described in FIG. 17, AP 1804 described in FIG. 18, or APs 1904 described in FIG. 19.

The spatial mapping may be for a transmission of a PPDU. For example, the transmission of the PPDU may be from the second AP to a STA. The STA may be STA 1708 described in FIG. 17, and STA 1808 described in FIG. 18. The transmission of the PPDU may be from the STA to the second AP. For example, the STA may be STA 1908 described in FIG. 19.

Action frame 2200 may indicate the second AP to use a spatial mapping for the transmission. Action frame 2200 may comprise a spatial mapping coordination notification frame. The spatial mapping coordination notification frame may be an unsolicited frame, such as frame 1710 or 1910, that indicates a spatial mapping for the transmission.

Action frame 2200 may include a request to the first AP for the second AP to use the spatial mapping for the transmission. Action frame 2200 may comprise a spatial mapping coordination request frame. The spatial mapping coordination request frame may be an unsolicited frame, such as frame 1710 or 1910, that requests the use of a spatial mapping for the transmission.

Action frame 2200 may include a response to the first AP. Action frame 2200 may include a response to the first AP, for example (e.g., in response to) a request from the first AP for the second AP to use the spatial mapping for the transmission. Action frame 2200 may comprise a spatial mapping coordination response frame. The spatial mapping coordination response frame may be a solicited frame, such as frame 1812, that responds to a request frame that requests the use of a spatial mapping for the transmission by the first AP. Action frame 2200, as shown in FIG. 22, may include a frame control field, a duration field, one or more address fields, a sequence control field, an HT control field, a frame body, and an FCS field.

The frame body of action frame 2200, as shown in FIG. 22, may include an action field 2202. Action field 2202 may comprise information supporting spatial mapping coordination. The information supporting spatial mapping coordination may indicate a spatial mapping for a transmission of a PPDU. Action field 2202 may indicate a request to the first AP for the second AP to use the spatial mapping for the transmission of the PPDU. Action field 2206 may indicate a response to or a request from the first AP for the second AP to use the spatial mapping for the transmission of the PPDU. Action field 2206 may be a spatial mapping coordination action field.

Action field 2206 may include a category subfield 2204 that indicates that action frame 2200 is for spatial mapping coordination. Action field 2202 may include an action details field 2206. Action detail field 2206 may comprise a PPDU type subfield 2208, a spatial mapping type/method information subfield 2210, a spatial mapping matrix information subfield 2212, and an optional spatial mapping coordination information subfield 2214.

PPDU type subfield 2208 may indicate a type of PPDU of which a spatial mapping is supported for. The PPDU may comprise a sounding PPDU. For example, the sounding PPDU may comprise a NDP. PPDU type subfield 2208 may take a 0 or 1 value. A value of 1 may indicate that the capability information indicated in subfields 2210, 2212, and 2214 dedicated for sending (e.g., transmitting) the sounding PPDU. A value of 0 may indicate that the capability information indicated in subfields 2210, 2212, and 2214 dedicated for sending (e.g., transmitting) a PPDU comprising a data field.

Spatial mapping type/method information subfield 2210 may comprise one or more spatial mapping types/methods. Spatial mapping type/method information subfield 2210 may comprise one or more spatial mapping types. For example, the spatial mapping type may comprise a direct mapping type, an indirect mapping type, and a spatial expansion type. Spatial mapping type/method information subfield 2210 may comprise a method generating one or more orthonormal matrices. The orthonormal matrix may comprise identical matrix, a method using a CSD matrix, a method using Hadamard matrix, and a method using DFT method.

Spatial mapping matrix information subfield 2212 may comprise one or more spatial mapping matrices. Spatial mapping matrix information subfield 2212 may comprise one or more orthonormal matrices. For example, the orthonormal matrix may comprise identical matrix, a method using a CSD matrix, a method using Hadamard matrix, and a method using DFT method. Spatial mapping matrix information subfield 2212 may comprise one or more submatrices of the orthonormal matrices. Spatial mapping matrix information subfield 2212 may further indicate the spatial streams associated with the submatrices for one or more STAs. Spatial mapping matrix information subfield 2212 may also indicate the transmit chains associated with the submatrices for one or more transmitters. The transmitter may be an AP or a non-AP STA. First frame 1812 described in FIG. 18 may comprise a data frame. The data frame may comprise a QoS null frame.

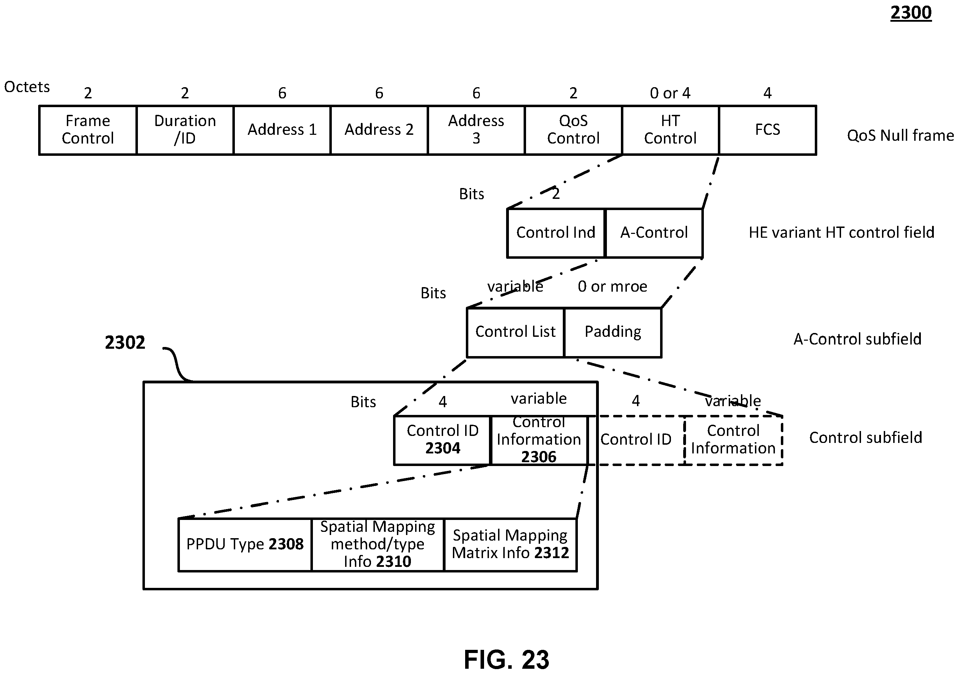

FIG. 23 shows an example QoS null frame 2300 which may be used. For example, QoS null frame 2300 may be frame 1812 described in FIG. 18.

QoS null frame 2300 may include information supporting spatial mapping coordination. Information supporting spatial mapping coordination may comprise an indication of a type of PPDU for which a spatial mapping is used. Information supporting spatial mapping coordination may comprise an indication of the spatial mapping. Indication of the spatial mapping may comprise an indication of one or more spatial mapping types. Indication of the spatial mapping may further comprise an indication of one or more spatial mapping matrices.

QoS null frame 2300 may be received by a first AP from a second AP. For example, the first AP may be AP 1702 described with respect to FIG. 17, AP 1802 described with respect to FIG. 18, or AP 1902 described with respect to FIG. 19. The second AP may be AP 1704 described in FIG. 17, AP 1804 described in FIG. 18, or APs 1904 described with respect to FIG. 19.

The spatial mapping may be for a transmission of a PPDU. For example, the transmission of the PPDU may be from the second AP to a STA. The STA may be STA 1708 described with respect to FIG. 17, STA 1808 described with respect to FIG. 18. The transmission of the PPDU may be from the STA to the second AP. The STA may be STA 1908 described with respect to FIG. 19.

QoS null frame 2300 may indicate the second AP to use a spatial mapping for the transmission. QoS null frame 2300 may comprise a spatial mapping coordination notification frame. The spatial mapping coordination notification frame may be an unsolicited frame, such as frame 1710 or 1910, that indicates a spatial mapping for the transmission.

QoS null frame 2300 may include feedback to the first AP. QoS null frame 2300 may include feedback to the first AP, for example, (e.g., in response to) a solicitation from the first AP for the second AP to use a spatial mapping for the transmission. QoS null frame 2300 may comprise a spatial mapping coordination feedback frame. The spatial mapping coordination feedback frame may be an solicited frame, such as frame 1812, that responds to a trigger frame that solicits the use of a spatial mapping for the transmission. QoS null frame 2300, as shown in FIG. 23, may include a frame control field, a duration field, one or more address fields, a QoS control field, an HT control field, and an FCS field.

QoS null frame 2300, as shown by FIG. 23, may include an HT control field. HT control field may include an A-Control subfield. The A-Control subfield may include a control list subfield including one or more control subfields. A control subfield 2302 of the control list subfield may include information supporting spatial mapping coordination. The information supporting spatial mapping coordination may indicate a spatial mapping for the transmission. Control subfield 2306 may indicate feedback to a solicitation from the first AP for the second AP to use the spatial mapping for the transmission. Control subfield 2306 may be a spatial mapping coordination control subfield.

Control subfield 2302 may include a control ID subfield 2304 that indicates that QoS null frame 2300 is for spatial mapping coordination. Control subfield 2302 may include a control information subfield 2306 that may include a PPDU type subfield 2308, a spatial mapping type information subfield 2310, and a spatial mapping matrix information subfield 2312.

PPDU type subfield 2308 may indicate a type of PPDU of which a spatial mapping is supported for. The PPDU may comprise a sounding PPDU. For example, the sounding PPDU may comprise a NDP. PPDU type subfield 2308 may take a 0 or 1 value. A value of 1 may indicate that the capability information indicated in subfields 2310, 2312, and 2314 dedicated for sending (e.g., transmitting) the sounding PPDU. A value of 0 may indicate that the capability information indicated in subfields 2310, 2312, and 2314 dedicated for sending (e.g., transmitting) a PPDU comprising a data field.

Spatial mapping type/method information subfield 2310 may comprise one or more spatial mapping types/methods. Spatial mapping type/method information subfield 2310 may comprise one or more spatial mapping types. For example, the spatial mapping type may comprise a direct mapping type, an indirect mapping type, and a spatial expansion type. Spatial mapping type/method information subfield 2310 may comprise a method generating one or more orthonormal matrices. The orthonormal matrix may comprise identical matrix, a method using a CSD matrix, a method using Hadamard matrix, and a method using DFT method.

Spatial mapping matrix information subfield 2312 may comprise one or more spatial mapping matrices. Spatial mapping matrix information subfield 2312 may comprise one or more orthonormal matrices. For example, the orthonormal matrix may comprise identical matrix, a method using a CSD matrix, a method using Hadamard matrix, and a method using DFT method. Spatial mapping matrix information subfield 2312 may comprise one or more submatrices of the orthonormal matrices. Spatial mapping matrix information subfield 2312 may further indicate the spatial streams associated with the submatrices for one or more STAs. Spatial mapping matrix information subfield 2312 may also indicate the transmit chains associated with the submatrices for one or more transmitters. The transmitter may be an AP or a non-AP STA.

As would be understood by a person of skill in the art based on the teachings herein, the examples described herein may be readily extended to cases including more than two STAs. As would be understood by a person of skill in the art based on the teachings herein, the examples described herein may be readily extended to cases including more than two APs. As would be understood by a person of skill in the art based on the teachings herein, the examples described herein may be readily extended to scenarios in which any of the APs or any of the STAs may comprise an MLD, comprising at least one affiliated AP or affiliated STA.

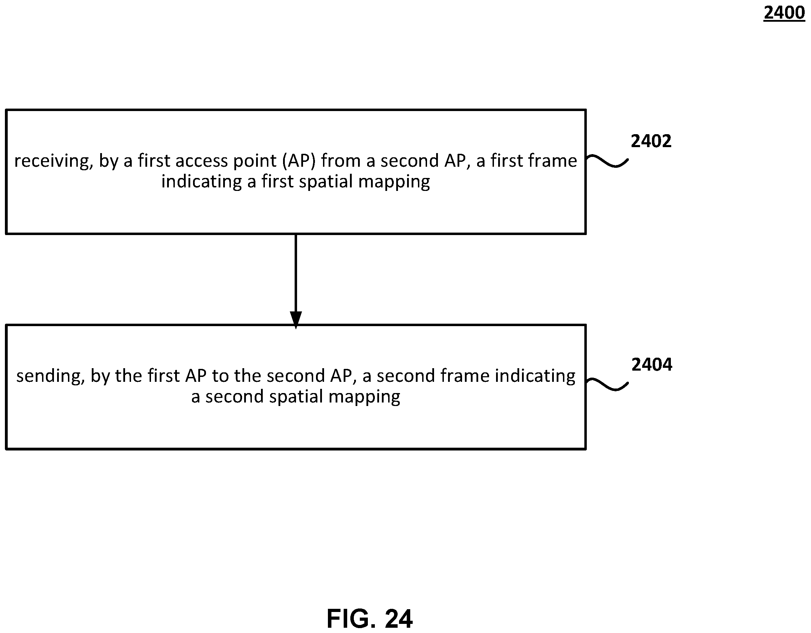

FIG. 24 shows an example process 2400 of spatial mapping. Example process 2400 is provided for the purpose of illustration only and is not limiting. Process 2400 may be performed by a first AP.

As shown in FIG. 24, process 2400 begins in step 2402, which may include receiving, by the first AP from a second AP, a first frame indicating a first spatial mapping. In step 2404, process 2400 may include sending (e.g., transmitting), by the first AP to the second AP, a second frame indicating a second spatial mapping.

The second spatial mapping may be based on the first spatial mapping. Process 2400 may further comprise determining, based on the first spatial mapping, the second spatial mapping. The first spatial mapping or the second spatial mapping may comprise an orthonormal matrix

The first spatial mapping or the second spatial mapping may be for a transmission of a physical layer protocol data unit (PPDU) from the second AP to a station (STA). The PPDU may be a sounding PPDU. The PPDU may comprise a null data PPDU (NDP). The first spatial mapping or the second spatial mapping may be for a training field of the PPDU.

The transmission of the PPDU may use the second spatial mapping. The transmission of the PPDU may be scheduled during a transmission opportunity (TXOP) of the first AP. The transmission may be part of a multi-AP sounding procedure. The multi-AP sounding procedure may be initiated by the first AP and may comprise the second AP.

Process 2400 may further comprise: sending (e.g., transmitting), by the first AP to the second AP, a third frame soliciting the first frame. Process 2400 may further comprise: sending (e.g., transmitting), by the first AP to the second AP, a third frame requesting that the second AP use a third spatial mapping for the transmission of the PPDU.

The first frame may comprise a response to the third frame. The first spatial mapping or the second spatial mapping may be for a transmission of a PPDU from a STA to the second AP.

The PPDU may be a sounding PPDU. The PPDU may comprise a null data PPDU (NDP). The first spatial mapping or the second spatial mapping may be for a training field of the PPDU. The first frame may comprise capability information indicating support of the first spatial mapping by the second AP.

The second frame may comprise capability information indicating support of the second spatial mapping by the first AP. The first spatial mapping or the second spatial mapping may comprise an orthonormal matrix.

The first frame may comprise a management frame. The management frame may comprise a field or element indicating the first spatial mapping.

The first frame may comprise a data frame. The data frame may comprise a field indicating the first spatial mapping.

Process 2400 may further comprise: receiving, by the first AP from the second AP, a first indication of support by the second AP of a spatial mapping coordination capability; and sending (e.g., transmitting), by the first AP to the second AP, a second indication of support by the first AP of the spatial mapping coordination capability.

The first AP and the second AP may form a multi-AP group. The first AP may belong to a basic service set (BSS) and the second AP may belong to an overlapping basic service set (OBSS) relative to the BSS.

Process 2400 may further comprise: receiving, by a first access point (AP) from a second AP, a first frame indicating a first spatial mapping for a transmission from the second AP to a station (STA); and sending (e.g., transmitting), by the first AP to the second AP, a second frame indicating a second spatial mapping for a multi-AP sounding transmission comprising the transmission from the second AP to the STA, the second spatial mapping based on the first spatial mapping.

Process 2400 may further comprise: receiving, by a first access point (AP) from a second AP, a first frame indicating a first spatial mapping for a transmission, by the second AP to a station (STA), of a sounding physical layer protocol data unit (PPDU) during a transmission opportunity (TXOP) of the first AP; and sending (e.g., transmitting), by the first AP from the second AP, a second frame indicating a second spatial mapping for transmission, the second spatial mapping based on the first spatial mapping.

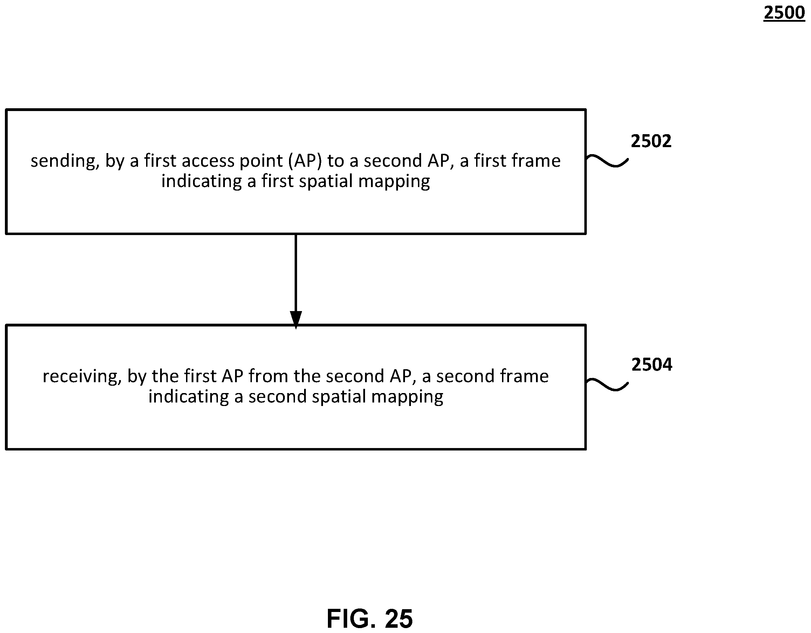

FIG. 25 shows an example process 2500 of spatial mapping. Example process 2500 is provided for the purpose of illustration only and is not limiting. Process 2500 may be performed by a first AP.

Process 2500, as shown in FIG. 25, may begin in step 2502, which may include sending (e.g., transmitting), by a first access point (AP) to a second AP, a first frame indicating a first spatial mapping. In step 2504, process 2500 may include receiving, by the first AP from the second AP, a second frame indicating a second spatial mapping.

The second spatial mapping may be based on the first spatial mapping. The first spatial mapping or the second spatial mapping may comprise an orthonormal matrix

The first spatial mapping or the second spatial mapping may be for a transmission of a physical layer protocol data unit (PPDU) from the first AP to a station (STA). The PPDU may be a sounding PPDU. The PPDU comprises a null data PPDU (NDP). The first spatial mapping or the second spatial mapping is for a training field of the PPDU.

Process 2500 may further comprise: sending (e.g., transmitting), by the first AP to the STA, the transmission of the PPDU using the second spatial mapping. The transmission of the PPDU may be scheduled during a transmission opportunity (TXOP) of the second AP.

The transmission may be part of a multi-AP sounding procedure. The multi-AP sounding procedure may be initiated by the second AP and may comprise the first AP.

Process 2500 may further comprise: receiving, by the first AP from the second AP, a third frame soliciting the first frame. Process 2500 may further comprise: receiving, by the first AP from the second AP, a third frame requesting that the first AP use a third spatial mapping for the transmission of the PPDU. The first frame may comprise a response to the third frame.

The first spatial mapping or the second spatial mapping may be for a transmission of a PPDU from a STA to the first AP. The PPDU may be a sounding PPDU. The PPDU may comprise a null data PPDU (NDP). The first spatial mapping or the second spatial mapping may be for a training field of the PPDU.

Process 2500 may further comprise: sending (e.g., transmitting), by the first AP to the STA, a third frame indicating the second spatial mapping. The third frame may solicit the transmission of the PPDU from the STA to the first AP. The transmission of the PPDU may use the second spatial mapping. The transmission of the PPDU may be scheduled during a TXOP of the first AP.

Process 2500 may further comprise: receiving, by the first AP from the STA, a fourth frame comprising a third spatial mapping for the transmission of the PPDU. The first spatial mapping may be based on the third spatial mapping. The fourth frame may comprise capability information indicating support of the third spatial mapping by the STA.

The first frame may comprise capability information indicating support of the first spatial mapping by the first AP. The second frame may comprise capability information indicating support of the second spatial mapping by the second AP. The first spatial mapping or the second spatial mapping may comprise an orthonormal matrix. The first frame may comprise a management frame. The management frame may comprise a field or element indicating the first spatial mapping. The first frame may comprise a data frame. The data frame may comprise a field indicating the first spatial mapping.

Process 2500 may further comprise: sending (e.g., transmitting), by the first AP to the second AP, a first indication of support by the first AP of a spatial mapping coordination capability; and receiving, by the first AP from the second AP, a second indication of support by the second AP of the spatial mapping coordination capability.

The first AP and the second AP may form a multi-AP group. The first AP may belong to a basic service set (BSS) and the second AP belongs to an overlapping basic service set (OBSS) relative to the BSS.

Process 2500 may further comprise: sending (e.g., transmitting), by a first access point (AP) to a second AP, a first frame indicating a first spatial mapping for a transmission from the first AP to a station (STA); receiving, by the first AP to the second AP, a second frame indicating a second spatial mapping for a multi-AP sounding transmission comprising the transmission from the first AP to the STA, the second spatial mapping based on the first spatial mapping; and sending (e.g., transmitting), by the first AP to the STA and using the second spatial mapping, the transmission for the multi-AP sounding.

Process 2500 may further comprise: sending (e.g., transmitting), by a first access point (AP) to a second AP, a first frame indicating a first spatial mapping for a transmission, by the first AP to a station (STA), of a sounding physical layer protocol data unit (PPDU) during a transmission opportunity (TXOP) of the second AP; receiving, by the first AP from the second AP, a second frame indicating a second spatial mapping for transmission of the sounding PPDU, the second spatial mapping based on the first spatial mapping; and sending (e.g., transmitting), by the first AP to the STA, the sounding PPDU using the second spatial mapping.

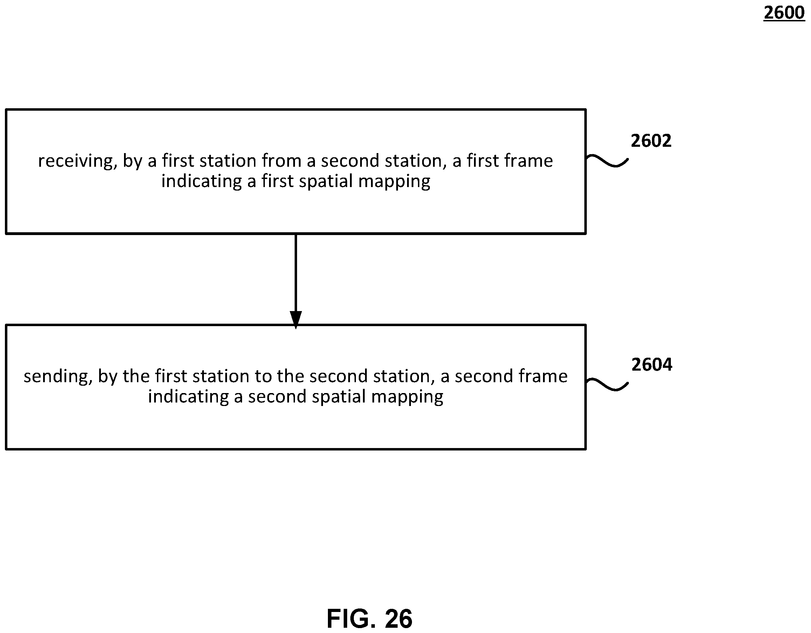

As would be understood by a person of skill in the art based on the teachings herein, examples described herein are not limited to AP-to-AP communication. Instead, examples may be extended to AP to non-AP, non-AP to AP, and non-AP to non-AP communication. For illustration, FIG. 26 shows an example process 2600 of spatial mapping. Example process 2600 may be performed by a first station, which may comprise an AP STA or a non-AP STA. Process 2600, as shown in FIG. 26, may include steps 2602 and 2604.

Step 2602 may include receiving, by the first station from a second station, a first frame indicating a first spatial mapping. The second station may comprise an AP STA or a non-AP STA. The first spatial mapping may be for a first transmission of a physical layer protocol data unit (PPDU). The first transmission of the PPDU may be sent (e.g., transmitted) from the second station to a third station or from the third station to the second station. The PPDU may comprise a sounding PPDU. The third station may comprise an AP STA or a non-AP STA. The third station may be the same as the first station. The first transmission of the PPDU may be part of a multi-station transmission comprising the first station and the second station.

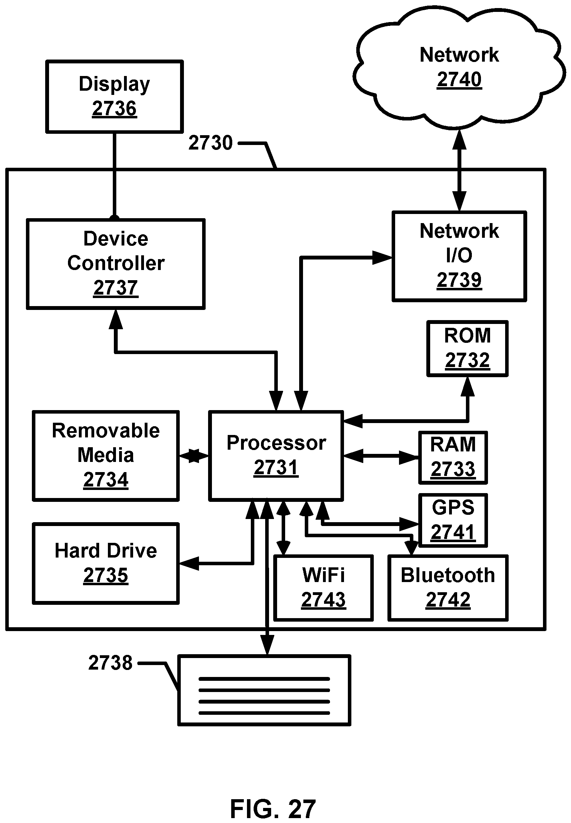

Step 2604 may include sending (e.g., transmitting), by the first station to the second station, a second frame indicating a second spatial mapping. The second spatial mapping may be for the first transmission of the PPDU. The second station may use the second spatial mapping for the first transmission of the PPDU. FIG. 27 shows example elements of a computing device that may be used to implement any of the various devices described herein, including, for example, a STA, an AP, communication devices, and/or any computing and/or communication device described herein. The computing device 2730 may comprise one or more processors 2731, which may execute instructions stored in the random-access memory (RAM) 2733, the removable media 2734 (such as a Universal Serial Bus (USB) drive, compact disk (CD) or digital versatile disk (DVD), or floppy disk drive), or any other desired storage medium. Instructions may also be stored in an attached (or internal) hard drive 2735. The computing device 2730 may also comprise a security processor (not shown), which may execute instructions of one or more computer programs to monitor the processes executing on the processor 2731 and any process that requests access to any hardware and/or software components of the computing device 2730 (e.g., ROM 2732, RAM 2733, the removable media 2734, the hard drive 2735, the device controller 2737, a network interface 2739, a GPS 2741, a Bluetooth interface 2742, a WiFi interface 2743, etc.). The computing device 2730 may comprise one or more output devices, such as the display 2736 (e.g., a screen, a display device, a monitor, a television, etc.), and may comprise one or more output device controllers 2737, such as a video processor. There may also be one or more user input devices 2738, such as a remote control, keyboard, mouse, touch screen, microphone, etc. The computing device 2730 may also comprise one or more network interfaces, such as a network interface 2739, which may be a wired interface, a wireless interface, or a combination of the two. The network interface 2739 may provide an interface for the computing device 2730 to communicate with a network 2740 (e.g., a RAN, or any other network). The network interface 2739 may comprise a modem (e.g., a cable modem), and the external network 2740 may comprise communication links, an external network, an in-home network, a provider's wireless, coaxial, fiber, or hybrid fiber/coaxial distribution system (e.g., a DOCSIS network), or any other desired network. Additionally, the computing device 2730 may comprise a location-detecting device, such as a global positioning system (GPS) microprocessor 2741, which may be configured to receive and process global positioning signals and determine, with possible assistance from an external server and antenna, a geographic position of the computing device 2730.

The example in FIG. 27 may be a hardware configuration, although the components shown may be implemented as software as well. Modifications may be made to add, remove, combine, divide, etc. components of the computing device 2730 as desired. Additionally, the components may be implemented using basic computing devices and components, and the same components (e.g., processor 2731, ROM storage 2732, display 2736, etc.) may be used to implement any of the other computing devices and components described herein. For example, the various components described herein may be implemented using computing devices having components such as a processor executing computer-executable instructions stored on a computer-readable medium, as shown in FIG. 27. Some or all of the entities described herein may be software based, and may co-exist in a common physical platform (e.g., a requesting entity may be a separate software process and program from a dependent entity, both of which may be executed as software on a common computing device).

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.

Clause 1A. A method comprising: receiving, by a first access point from a second access point, a first frame indicating a first spatial mapping for a transmission of a physical layer protocol data unit (PPDU), from the second access point to a station, in a transmission opportunity (TXOP) of the first access point.

Clause 1B. The method of clause 1A, further comprising: sending, by the first access point to the second access point and based on the received first frame, a second frame indicating a second spatial mapping for the transmission. Reference to clause 1 herein may refer to one or each of clause 1A and clause 1B.

Clause 2. The method of clause 1, wherein: the transmission of the PPDU is a part of a multi-access point sounding transmission comprising the transmission from the second access point to the station; and the second spatial mapping for the transmission of the PPDU is based on the first spatial mapping.

Clause 3. The method of any one of clauses 1-2, further comprising: determining, based on the first spatial mapping, the second spatial mapping.

Clause 4. The method of any one of clauses 1-3, further comprising: sending, by the first access point to the second access point, a third frame soliciting the first frame.

Clause 5. The method of any one of clauses 1-4, further comprising: sending, by the first access point to the second access point, a third frame requesting that the second access point use a third spatial mapping for the transmission of the PPDU.

Clause 6. The method of any one of clauses 1-5, further comprising: receiving, by the first access point from the second access point, a first indication of supporting a spatial mapping coordination capability by the second access point; and sending, by the first access point to the second access point, a second indication of supporting the spatial mapping coordination capability by the first access point.

Clause 7. The method of any one of clauses 1-6, further comprising: training symbols in a training field of the PPDU by using the first spatial mapping or the second spatial mapping.

Clause 8. The method of any one of clauses 1-7, wherein the first spatial mapping or the second spatial mapping comprises an orthonormal matrix.

Clause 9. The method of any one of clauses 1-8, wherein the PPDU is a sounding PPDU.

Clause 10. The method of any one of clauses 1-9, wherein the PPDU comprises a null data PPDU (NDP).

Clause 11. The method of any one of clauses 1-10, wherein the transmission of the PPDU uses the second spatial mapping.

Clause 12. The method of any one of clauses 1-11, wherein the multi-access point sounding procedure is initiated by the first access point and comprises the second access point.

Clause 13. The method of any one of clauses 1-12, wherein the first frame comprises a response to the third frame.

Clause 14. The method of any one of clauses 1-13, wherein the first spatial mapping or the second spatial mapping is for a transmission of a PPDU from a station to the second access point.

Clause 15. The method of any one of clauses 1-14, wherein the PPDU is a sounding PPDU.

Clause 16. The method of any one of clauses 1-15, wherein the PPDU comprises a null data PPDU (NDP).

Clause 17. The method of any one of clauses 1-16, wherein the first spatial mapping or the second spatial mapping is for a training field of the PPDU.

Clause 18. The method of any one of clauses 1-17, wherein the first spatial mapping or the second spatial mapping comprises an orthonormal matrix

Clause 19. The method of any one of clauses 1-18, wherein the first frame comprises a data frame.

Clause 20. The method of any one of clauses 1-19, wherein the data frame comprises a field indicating the first spatial mapping.

Clause 21. The method of any one of clauses 1-20, wherein the first access point belongs to a basic service set (BSS) and the second access point belongs to an overlapping basic service set (OBSS) relative to the BSS.

Clause 22A. A method comprising: receiving, by a first access point from a second access point, a first frame indicating a first spatial mapping for a transmission from the second access point to a station.

Clause 22B. The method of clause 22A, further comprising: sending, by the first access point to the second access point, a second frame indicating a second spatial mapping for a multi-access point sounding transmission comprising the transmission from the second access point to the station, wherein the second spatial mapping is based on the first spatial mapping. Reference to clause 22 herein may refer to one or each of clause 22A and clause 22B.

Clause 23. The method of any one of clauses 1-22, wherein the first spatial mapping or the second spatial mapping is for a transmission of a physical layer protocol data unit (PPDU) from the second access point to the station.

Clause 24. The method of any one of clauses 1-23, wherein the transmission from the second access point to the station is scheduled in a transmission opportunity (TXOP) of the first access point.

Clause 25. The method of any one of clauses 1-24, wherein: the first frame comprises capability information indicating support of the first spatial mapping by the second access point; and the second frame comprises capability information indicating support of the second spatial mapping by the first access point.

Clause 26. The method of any one of clauses 1-25, wherein: the first frame comprises a management frame; and the management frame comprises a field indicating the first spatial mapping.

Clause 27. The method of any one of clauses 1-26, wherein: the first access point belongs to a basic service set (BSS); and the second access point belongs to an overlapping basic service set (OBSS) relative to the BSS.

Clause 28A. A method comprising: sending, by a second access point to a first access point, a first frame indicating a first spatial mapping for a transmission of a physical layer protocol data unit (PPDU), from the second access point to a station, in a transmission opportunity (TXOP) of the first access point.

Clause 28B. The method of clause 28A, further comprising: receiving, by the second access point from the first access point and after sending the first frame, a second frame indicating a second spatial mapping for the transmission of the PPDU.

Clause 28C. The method of clause 28C, further comprising: sending, by the second access point to the station, the transmission of the PPDU using the second spatial mapping. Reference to clause 28 herein may refer to one or each of clause 28A, clause 28B and clause 28C.

Clause 29. The method of clause 28, wherein: the transmission of the PPDU is a part of a multi-access point sounding procedure; and the multi-access point sounding procedure is initiated by the first access point and associated with the second access point.

Clause 30. The method of any one of clauses 28-29, further comprising: receiving, by the second access point from the first access point, a third frame soliciting the first frame.

Clause 31. The method of any one of clauses 28-30, further comprising: receiving, by the second access point from the first access point, a third frame requesting that the second access point uses a third spatial mapping for the transmission of the PPDU.

Clause 32. The method of any one of clauses 28-31, further comprising: receiving, by the second access point from the station, a fourth frame comprising a third spatial mapping for the transmission of the PPDU, wherein: the first spatial mapping is based on the third spatial mapping; and the fourth frame comprises capability information indicating support of the third spatial mapping by the station.

Clause 33. The method of any one of clauses 28-32, further comprising: sending, by the second access point to the first access point, a first indication of support of a spatial mapping coordination capability by the second access point; and receiving, by the second access point from the first access point, a second indication of support of the spatial mapping coordination capability by the second access point.

Clause 34. The method of any one of clauses 28-33, wherein: the second access point belongs to a basic service set (BSS); and the first access point belongs to an overlapping basic service set (OBSS) relative to the BSS.

Clause 35. The method of any one of clauses 28-34, wherein the second spatial mapping is based on the first spatial mapping.

Clause 36. The method of any one of clauses 28-35, wherein the first spatial mapping or the second spatial mapping comprises an orthonormal matrix

Clause 37. The method of any one of clauses 28-36, wherein the first spatial mapping or the second spatial mapping is for a transmission of a physical layer protocol data unit (PPDU) from the second access point to a station.

Clause 38. The method of any one of clauses 28-37, wherein the PPDU is a sounding PPDU.

Clause 39. The method of any one of clauses 28-38, wherein the PPDU comprises a null data PPDU (NDP).

Clause 40. The method of any one of clauses 28-39, wherein the first spatial mapping or the second spatial mapping is for a training field of the PPDU.

Clause 41. The method of any one of clauses 28-40, further comprising: sending, by the second access point to the station, the transmission of the PPDU using the second spatial mapping.

Clause 42. The method of any one of clauses 28-41, wherein the transmission of the PPDU is scheduled during a transmission opportunity (TXOP) of the first access point.

Clause 43. The method of any one of clauses 28-42, wherein the first frame comprises a response to the third frame.

Clause 44. The method of any one of clauses 28-43, wherein the first spatial mapping or the second spatial mapping is for a transmission of a PPDU from a station to the second access point.

Clause 45. The method of any one of clauses 28-44, wherein the PPDU is a sounding PPDU.

Clause 46. The method of any one of clauses 28-45, wherein the PPDU comprises a NDP.

Clause 47. The method of any one of clauses 28-46, wherein the first spatial mapping or the second spatial mapping is for a training field of the PPDU.

Clause 48. The method of any one of clauses 28-47, further comprising sending, by the second access point to the station, a third frame indicating the second spatial mapping.

Clause 49. The method of any one of clauses 28-48, wherein the third frame solicits the transmission of the PPDU from the station to the second access point.

Clause 50. The method of any one of clauses 28-49, wherein the transmission of the PPDU uses the second spatial mapping.

Clause 51. The method of any one of clauses 28-50, wherein the transmission of the PPDU is scheduled during a TXOP of the second access point.

Clause 52. The method of any one of clauses 28-51, wherein the first frame comprises capability information indicating support of the first spatial mapping by the second access point.

Clause 53. The method of any one of clauses 28-52, wherein the second frame comprises capability information indicating support of the second spatial mapping by the first access point.

Clause 54. The method of any one of clauses 28-53, wherein the first spatial mapping or the second spatial mapping comprises an orthonormal matrix

Clause 55. The method of any one of clauses 28-54, wherein the first frame comprises a management frame.

Clause 56. The method of any one of clauses 28-55, wherein the management frame comprises a field or element indicating the first spatial mapping.

Clause 57. The method of any one of clauses 28-56, wherein the first frame comprises a data frame.

Clause 58. The method of any one of clauses 28-57, wherein the data frame comprises a field indicating the first spatial mapping.

Clause 59. The method of any one of clauses 28-58, wherein the first access point and the second access point form a multi-access point group.

A first access point may perform a method comprising multiple operations. The first access point may receive, from a second access point, a first frame indicating a first spatial mapping for a transmission of a physical layer protocol data unit (PPDU), from the second access point to a station, in a transmission opportunity (TXOP) of the first access point. The first access point may send, to the second access point and based on the received first frame, a second frame indicating a second spatial mapping for the transmission, wherein: the transmission of the PPDU may be a part of a multi-access point sounding transmission comprising the transmission from the second access point to the station; and the second spatial mapping for the transmission of the PPDU may be based on the first spatial mapping. The first access point may determine, based on the first spatial mapping, the second spatial mapping. The first access point may send, to the second access point, a third frame soliciting the first frame. The first access point may send, to the second access point, a third frame requesting that the second access point use a third spatial mapping for the transmission of the PPDU. The first access point may receive, from the second access point, a first indication of supporting a spatial mapping coordination capability by the second access point; and may send, to the second access point, a second indication of supporting the spatial mapping coordination capability by the first access point. The first access point may train symbols in a training field of the PPDU by using the first spatial mapping or the second spatial mapping, wherein the first spatial mapping or the second spatial mapping may comprise an orthonormal matrix; wherein the PPDU may be a sounding PPDU; wherein the PPDU may comprise a null data PPDU (NDP); wherein the transmission of the PPDU may use the second spatial mapping; wherein the multi-access point sounding procedure may be initiated by the first access point and comprises the second access point; wherein the first frame may comprise a response to the third frame; wherein the first spatial mapping or the second spatial mapping may be for a transmission of a PPDU from a station to the second access point; wherein the PPDU may be a sounding PPDU; wherein the PPDU may comprise a null data PPDU (NDP); wherein the first spatial mapping or the second spatial mapping may be for a training field of the PPDU; wherein the first spatial mapping or the second spatial mapping may comprise an orthonormal matrix; wherein the first frame may comprise a data frame; wherein the data frame may comprise a field indicating the first spatial mapping; wherein the first access point may belong to a basic service set (BSS) and the second access point belongs to an overlapping basic service set (OBSS) relative to the BSS. A computing device may comprise: one or more processors; and memory storing instructions that, when executed by the one or more processors, cause the computing device to perform the described method, additional operations and/or include the additional elements. A system comprising: a first access point configured to perform the described method, additional operations and/or include the additional elements; and a second access point configured to send the first frame. A computer-readable medium storing instructions that, when executed, cause performance of the described method, additional operations and/or include the additional elements.

A first access point may perform a method comprising multiple operations. The first access point may receive, from a second access point, a first frame indicating a first spatial mapping for a transmission from the second access point to a station. The first access point may send, to the second access point, a second frame indicating a second spatial mapping for a multi-access point sounding transmission comprising the transmission from the second access point to the station, wherein the second spatial mapping may be based on the first spatial mapping; wherein the first spatial mapping or the second spatial mapping may be for a transmission of a physical layer protocol data unit (PPDU) from the second access point to the station; wherein the transmission from the second access point to the station may be scheduled in a transmission opportunity (TXOP) of the first access point; wherein: the first frame comprises capability information may indicate support of the first spatial mapping by the second access point; and the second frame comprises capability information may indicate support of the second spatial mapping by the first access point; wherein: the first frame may comprise a management frame; and the management frame may comprise a field indicating the first spatial mapping; wherein: the first access point may belong to a basic service set (BSS); and the second access point may belong to an overlapping basic service set (OBSS) relative to the BSS. A computing device may comprise: one or more processors; and memory storing instructions that, when executed by the one or more processors, cause the computing device to perform the described method, additional operations and/or include the additional elements. A system comprising: a first access point configured to perform the described method, additional operations and/or include the additional elements; and a second access point configured to send the first frame. A computer-readable medium storing instructions that, when executed, cause performance of the described method, additional operations and/or include the additional elements.

A second access point may perform a method comprising multiple operations. The second access point may send, to a first access point, a first frame indicating a first spatial mapping for a transmission of a physical layer protocol data unit (PPDU), from the second access point to a station, in a transmission opportunity (TXOP) of the first access point. The second access point may receive, from the first access point and after sending the first frame, a second frame indicating a second spatial mapping for the transmission of the PPDU. The second access point may send, to the station, the transmission of the PPDU using the second spatial mapping, wherein: the transmission of the PPDU may be a part of a multi-access point sounding procedure; and the multi-access point sounding procedure may be initiated by the first access point and associated with the second access point. The second access point may receive, from the first access point, a third frame soliciting the first frame. The second access point may receive, from the first access point, a third frame requesting that the second access point uses a third spatial mapping for the transmission of the PPDU. The second access point may receive, from the station, a fourth frame comprising a third spatial mapping for the transmission of the PPDU, wherein: the first spatial mapping may be based on the third spatial mapping; and the fourth frame comprises capability information may indicate support of the third spatial mapping by the station. The second access point may send, to the first access point, a first indication of support of a spatial mapping coordination capability by the second access point; and may receive, by the second access point from the first access point, a second indication of support of the spatial mapping coordination capability by the second access point, wherein: the second access point may belong to a basic service set (BSS); and the first access point may belong to an overlapping basic service set (OBSS) relative to the BSS, wherein the second spatial mapping may be based on the first spatial mapping; wherein the first spatial mapping or the second spatial mapping may comprise an orthonormal matrix; wherein the first spatial mapping or the second spatial mapping may be for a transmission of a physical layer protocol data unit (PPDU) from the second access point to a station; wherein the PPDU may be a sounding PPDU; wherein the PPDU may comprise a null data PPDU (NDP); wherein the first spatial mapping or the second spatial mapping may be for a training field of the PPDU. The second access point may send, to the station, the transmission of the PPDU using the second spatial mapping; wherein the transmission of the PPDU may be scheduled during a transmission opportunity (TXOP) of the first access point; wherein the first frame may comprise a response to the third frame; wherein the first spatial mapping or the second spatial mapping may be for a transmission of a PPDU from a station to the second access point; wherein the PPDU may be a sounding PPDU; wherein the PPDU may comprise a NDP; wherein the first spatial mapping or the second spatial mapping may be for a training field of the PPDU. The second access point may send, to the station, a third frame indicating the second spatial mapping, wherein the third frame may solicit the transmission of the PPDU from the station to the second access point; wherein the transmission of the PPDU may use the second spatial mapping; wherein the transmission of the PPDU may be scheduled during a TXOP of the second access point; wherein the first frame may comprise capability information indicating support of the first spatial mapping by the second access point; wherein the second frame may comprise capability information indicating support of the second spatial mapping by the first access point; wherein the first spatial mapping or the second spatial mapping may comprise an orthonormal matrix; wherein the first frame may comprise a management frame; wherein the management frame may comprise a field or element indicating the first spatial mapping; wherein the first frame may comprise a data frame; wherein the data frame may comprise a field indicating the first spatial mapping; wherein the first access point and the second access point may form a multi-access point group. A computing device may comprise: one or more processors; and memory storing instructions that, when executed by the one or more processors, cause the computing device to perform the described method, additional operations and/or include the additional elements. A system comprising: a second access point configured to perform the described method, additional operations and/or include the additional elements; and a first access point configured to receive the first frame. A computer-readable medium storing instructions that, when executed, cause performance of the described method, additional operations and/or include the additional elements.

One or more of the operations described herein may be conditional. For example, one or more operations may be performed if certain criteria are met, such as in a wireless device, a base station, a radio environment, a network, a combination of the above, and/or the like. Example criteria may be based on one or more conditions such as wireless device and/or network node configurations, traffic load, initial system set up, packet sizes, traffic characteristics, a combination of the above, and/or the like. If the one or more criteria are met, various examples may be used. It may be possible to implement any portion of the examples described herein in any order and based on any condition.

An access point (and an AP MLD) may communicate with one or more wireless devices (e.g., computing device(s), non-AP MLD(s), station(s), etc.). Computing devices described herein may support multiple technologies, and/or multiple releases of the same technology. Computing devices may have some specific capability(ies) depending on wireless device category and/or capability(ies). Computing devices referred to herein may correspond to a plurality of computing devices compatible with a given LTE, 5G, 3GPP or non-3GPP release, IEEE 802.11 Standard(s) (e.g., IEEE 802.11be, beyond IEEE 802.11be), or Wi-Fi Alliance (WFA) Standard(s) (e.g., Wi-Fi 7, Wi-Fi 8) technology. A plurality of computing devices may refer to a selected plurality of wireless devices, a subset of total wireless devices in a coverage area, and/or any group of wireless devices. Such devices may operate, function, and/or perform based on or according to drawings and/or descriptions herein, and/or the like. There may be a plurality of access points and/or a plurality of wireless devices in a coverage area that may not comply with the disclosed methods, for example, because those wireless devices and/or access points may perform based on other (e.g., older or newer) releases of LTE, 5G, 3GPP or non-3GPP, IEEE 802.11 Standards (e.g., IEEE 802.11be, beyond IEEE 802.11be), or Wi-Fi Alliance (WFA) Standards (e.g., Wi-Fi 7, Wi-Fi 8) technology.

One or more parameters, fields, and/or Information elements (IEs), may comprise one or more information objects, values, and/or any other information. An information object may comprise one or more other objects. At least some (or all) parameters, fields, IEs, and/or the like may be used and can be interchangeable depending on the context. If a meaning or definition is given, such meaning or definition controls.

One or more elements in examples described herein may be implemented as modules. A module may be an element that performs a defined function and/or that has a defined interface to other elements. The modules may be implemented in hardware, software in combination with hardware, firmware, wetware (e.g., hardware with a biological element) or a combination thereof, all of which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or Lab-VIEWMathScript. Additionally or alternatively, it may be possible to implement modules using physical hardware that incorporates discrete or programmable analog, digital and/or quantum hardware. Examples of programmable hardware may comprise: computers, microcontrollers, microprocessors, application-specific integrated circuits (ASICs); field programmable gate arrays (FPGAs); and/or complex programmable logic devices (CPLDs). Computers, microcontrollers and/or microprocessors may be programmed using languages such as assembly, C, C++ or the like. FPGAs, ASICs and CPLDs are often programmed using hardware description languages (HDL), such as VHSIC hardware description language (VHDL) or Verilog, which may configure connections between internal hardware modules with lesser functionality on a programmable device. The above-mentioned technologies may be used in combination to achieve the result of a functional module.

One or more features described herein may be implemented in a computer-usable data and/or computer-executable instructions, such as in one or more program modules, executed by one or more computers or other devices. Generally, program modules include routines, programs, objects, components, data structures, etc. that perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired. The functionality may be implemented in whole or in part in firmware or hardware equivalents such as integrated circuits, field programmable gate arrays (FPGA), and the like. Particular data structures may be used to more effectively implement one or more features described herein, and such data structures are contemplated within the scope of computer executable instructions and computer-usable data described herein.

A non-transitory tangible computer readable media may comprise instructions executable by one or more processors configured to cause operations of multi-carrier communications described herein. An article of manufacture may comprise a non-transitory tangible computer readable machine-accessible medium having instructions encoded thereon for enabling programmable hardware to cause a device (e.g., a wireless device, wireless communicator, a wireless device, a base station, and the like) to allow operation of multi-carrier communications described herein. The device, or one or more devices such as in a system, may include one or more processors, memory, interfaces, and/or the like. Other examples may comprise communication networks comprising devices such as access points (APs), AP multi-link devices(MLDs), stations (STAs), non-AP STAs, non-AP MLDs, base stations, wireless devices or user equipment (wireless device), servers, switches, antennas, and/or the like. A network may comprise any wireless technology, including but not limited to, cellular, wireless, WiFi, 4G, 5G, 6G, any generation of 3GPP or other cellular standard or recommendation, any non-3GPP network, wireless local area networks, wireless personal area networks, wireless ad hoc networks, wireless metropolitan area networks, wireless wide area networks, global area networks, satellite networks, space networks, and any other network using wireless communications. Any device (e.g., a wireless device, a base station, or any other device) or combination of devices may be used to perform any combination of one or more of steps described herein, including, for example, any complementary step or steps of one or more of the above steps.

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the descriptions herein. Accordingly, the foregoing description is by way of example only, and is not limiting.

**Claims**

1. A method comprising:

   receiving, by a first access point from a second access point, a first frame indicating a first spatial mapping for a transmission of a physical layer protocol data unit (PPDU), from the second access point to a station, in a transmission opportunity (TXOP) of the first access point; and
   sending, by the first access point to the second access point and based on the received first frame, a second frame indicating a second spatial mapping for the transmission.

2. The method of claim 1, further comprising:
   determining, based on the first spatial mapping, the second spatial mapping.

3. The method of any one of claims 1-2, further comprising:
   sending, by the first access point to the second access point, a third frame soliciting the first frame.

4. The method of any one of claims 1-3, further comprising:
   sending, by the first access point to the second access point, a third frame requesting that the second access point use a third spatial mapping for the transmission of the PPDU.

5. The method of any one of claims 1-4, further comprising:

   receiving, by the first access point from the second access point, a first indication of supporting a spatial mapping coordination capability by the second access point; and
   sending, by the first access point to the second access point, a second indication of supporting the spatial mapping coordination capability by the first access point.

6. The method of any one of claims 1-5, further comprising:
   training symbols in a training field of the PPDU by using the first spatial mapping or the second spatial mapping.

7. The method of any one of claims 1-6, wherein the first spatial mapping or the second spatial mapping is for a transmission of a physical layer protocol data unit (PPDU) from the second access point to the station.

8. The method of any one of claims 1-7, wherein the transmission from the second access point to the station is scheduled in a transmission opportunity (TXOP) of the first access point.

9. The method of any one of claims 1-8, wherein:

   the first frame comprises capability information indicating support of the first spatial mapping by the second access point; and
   the second frame comprises capability information indicating support of the second spatial mapping by the first access point.

10. The method of any one of claims 1-9, wherein:

    the first frame comprises a management frame; and
    the management frame comprises a field indicating the first spatial mapping.

11. The method of any one of claims 1-10, wherein:
    the first access point belongs to a basic service set (BSS); and
    the second access point belongs to an overlapping basic service set (OBSS) relative to the BSS.

12. The method of any of claims 1-11, wherein the first spatial mapping or the second spatial mapping comprises an orthonormal matrix.

13. A computing device comprising:

    one or more processors; and
    memory storing instructions that, when executed by the one or more processors, cause the computing device to perform the method of any one of claims 1-12.

14. A system comprising:

    a first access point configured to perform the method of any one of claims 1-12; and
    a second access point configured to send the first frame.

15. A computer-readable medium storing instructions that, when executed, cause performance of the method of any one of claims 1-12.

**FIG. 1**

FIG. 2

MAC frame format

| Bits | 2 | 2 | 4 | 1 | 1 | 1 | 1 | 1 | 1 | 1 | 1 |
|------|---|---|---|---|---|---|---|---|---|---|---|
| | Protocol Version | Type | Subtype | To DS | From DS | More Fragments | Retry | Power Management | More Data | Protected Frame | +HTC |

| Octets | 2 | 2 | 6 | 0 or 6 | 0 or 6 | 0 or 6 | 0 or 2 | 0 or 4 | variable | 4 |
|--------|---|---|---|--------|--------|--------|--------|--------|----------|---|
| | Frame Control | Duration /ID | Address 1 | Address 2 | Address 3 | Sequence Control | QoS Control | HT Control | Frame Body | FCS |

MAC Header

**FIG. 3**

EP 4 539 349 A1

**400**

Octets:

| 2 | 2 | 6 | 6 | 6 | 2 | 0 or 4 | variable | 4 |
|---|---|---|---|---|---|---|---|---|
| Frame Control | Duration | Address 1 | Address 2 | Address 3 | Sequence Control | HT Control | Frame Body | FCS |

Management frame format

← MAC Header →

| Action | ... | Vendor Specific elements | MME | MIC | Authenticated Mesh Peering Exchange |
|---|---|---|---|---|---|

Action frame format

Octets:

| 1 | variable |
|---|---|
| Category | Action Details |

Action field format

Octets:

| 1 | variable |
|---|---|
| Public Action | Public Action Details |

Public action frame format

**FIG. 4**

EP 4 539 349 A1

**500**

| B0   B3 | B4   B15 | B16 | B17 | B18   B19 | B20   B21 | B22 | B23   B25 |
|---|---|---|---|---|---|---|---|
| Trigger Type | UL Length | More TF | CS Required | UL BW | GI And HE/EHT-LTF Type/Triggered TXOP Sharing Mode | Reserved | Number of HE-LTF Symbols And Midamble Periodicity |

Bits:  4   12   1   1   2   2   1   3

| B26 | B27 | B28   B33 | B34   B35 | B36 | B37   B52 | B53 | B54 |
|---|---|---|---|---|---|---|---|
| Reserved | LDPC Extra Symbol Segment | Ap Tx Power | Pre-FEC Padding Factor | PE Disambiguity | UL Spatial Reuse | Reserved | HE/EHT P160 |

Bits:  1   1   6   2   1   16   1   1

| B55 | B56   B62 | B63 | |
|---|---|---|---|
| Special User Info Field Flag | EHT Reserved | Reserved | Trigger Dependent Common Info |

Bits:  1   7   1   variable

| Frame Control | Duration | RA | TA | Common Info | User Info List | Padding | FCS |
|---|---|---|---|---|---|---|---|

Octets:  2   2   6   6   8 or more   variable   variable   4

EHT variant User info field format

| B0   B11 | B12   B19 | B20 | B21   B24 | B25 | B26   B31 | B32   B38 | B39 | |
|---|---|---|---|---|---|---|---|---|
| AID12 | RU Allocation | UL FEC Coding Type | UL FEC-MCS | Reserved | SS Allocation/ RA-RU Information | UL Target Receive Power | PS160 | Trigger Dependent User Info |

Bits:  12   8   1   4   1   6   7   1   variable

**FIG. 5**

EP 4 539 349 A1

EP 4 539 349 A1

Bits 4 1 2 1 8 **600**

| TID | 1 | Ack Policy Indicator | Reserved | Queue Size |

QoS Control field

612 610

Octets 2 2 6 6 6 2 0 or 4 4

| Frame Control | Duration /ID | Address 1 | Address 2 | Address 3 | QoS Control | HT Control | FCS |

QoS Null frame

620

Bits 2

| Control Ind | A-Control |

HE variant HT control field

Bits variable 0 or mroe

| Control List | Padding |

A-Control subfield

Bits 4 variable 4 variable

| Control ID | Control Information | Control ID | Control Information |

Control subfield

622

Bits 4 2 2 2 8 8

| ACI Bitmap | Delta TID | ACI High | Scaling Factor | Queue Size High | Queue Size All |

BSR A-Control

**FIG. 6**

**700**

**FIG. 7**

**800**

Multi-AP Controller **802**

AP1

Multi-AP group **804**

AP4

Multi-AP group **806**

AP2

AP3

Multi-AP group **808**

AP7

AP5

AP6

**FIG. 8**

EP 4 539 349 A1

900

902-1    902-2

908

910    912

904-1    904-2

**FIG. 9**

EP 4 539 349 A1

FIG. 10

EP 4 539 349 A1

**FIG. 11**

FIG. 12

1300

**1312**

**1314**

**1324**

AP
**1302**

| Multi-AP Trigger | Trigger | Multi-STA BA |

**1316**

**1326**

AP
**1304**

| Trigger | BA |

**1318**

STA
**1306**

| DATA |

**1320**

STA
**1308**

| DATA |

**1322**

STA
**1310**

| DATA |

**FIG. 13**

**1400**

EHT sounding null data  PPDU (NDP) format

FIG. 14

EP 4 539 349 A1

FIG. 15

**FIG. 16**

EP 4 539 349 A1

**FIG. 17**

EP 4 539 349 A1

**FIG. 18**

1900

FIG. 19

FIG. 20

EP 4 539 349 A1

Octets: 2 2 6 6 6 2 0 or 4 variable 4

| Frame Control | Duration | Address 1 | Address 2 | Address 3 | Sequence Control | HT Control | Frame Body | FCS |

Management frame format

←——————————————— MAC Header ———————————————→

2102

| Fields | Element | Element |

| Element ID **2104** | Length | Element ID Extension | Information **2106** |

| PPDU Type **2108** | Spatial Mapping Type/Method Info **2110** | Spatial Mapping Matrix Info **2112** |

**FIG. 21**

EP 4 539 349 A1

**2200**

Octets: 2 | 2 | 6 | 6 | 6 | 2 | 0 or 4 | variable | 4

| Frame Control | Duration | Address 1 | Address 2 | Address 3 | Sequence Control | HT Control | Frame Body | FCS |

Management frame format

MAC Header

| Action | Vendor Specific elements | MME | MIC | Authenticated Mesh Peering Exchange |

Action frame format

**2202**

Octets: 1 | variable

| Category **2204** | Action Details **2206** |

| PPDU Type **2208** | Spatial Mapping method/type Info **2210** | Spatial Mapping Matrix Info **2212** |

**FIG. 22**

EP 4 539 349 A1

**FIG. 23**

```
┌────────────────────────────────────────────────┐
│ receiving, by a first access point (AP) from a │      2402
│ second AP, a first frame indicating a first    │
│ spatial mapping                                │
└────────────────────────────────────────────────┘
                        │
                        ▼
┌────────────────────────────────────────────────┐
│ sending, by the first AP to the second AP, a   │      2404
│ second frame indicating a second spatial       │
│ mapping                                         │
└────────────────────────────────────────────────┘
```

**FIG. 24**

EP 4 539 349 A1

EP 4 539 349 A1

**2500**

```
sending, by a first access point (AP) to a second AP, a first frame
          indicating a first spatial mapping
```
**2502**

```
receiving, by the first AP from the second AP, a second frame
          indicating a second spatial mapping
```
**2504**

FIG. 25

... 

**2600**

```
┌────────────────────────────────────────────┐
│  receiving, by a first station from a       │          2602
│  second station, a first frame              │
│  indicating a first spatial mapping         │
└────────────────────────────────────────────┘
                     │
                     ▼
┌────────────────────────────────────────────┐
│  sending, by the first station to the       │          2604
│  second station, a second frame             │
│  indicating a second spatial mapping        │
└────────────────────────────────────────────┘
```

**FIG. 26**

**FIG. 27**

Europäisches
Patentamt

European
Patent Office

Office européen
des brevets

# EUROPEAN SEARCH REPORT

**Application Number**

EP 24 20 4705

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 116 390 215 A (HUAWEI TECH CO LTD) 4 July 2023 (2023-07-04) | 1,2,4,7, 8,10,11, 13-15 | INV. H04B7/024 H04W84/12 |
| Y | * paragraphs [0066] - [0071], [0108]; figures 1, 7A * | 12 | H04W92/20 H04B7/06 |
| X | US 2021/120427 A1 (WANG JAMES JUNE-MING [US] ET AL) 22 April 2021 (2021-04-22) | 1-9,11, 13-15 | |
| Y | * paragraphs [0051], [0076] - [0077]; figures 24-25 * | 12 | |
| Y | WO 2023/048636 A2 (PANASONIC IP CORP AMERICA [US]) 30 March 2023 (2023-03-30) * paragraph [0060] * | 12 | |

**TECHNICAL FIELDS
SEARCHED (IPC)**

H04B
H04W

The present search report has been drawn up for all claims

| Place of search | Date of completion of the search | Examiner |
|---|---|---|
| Munich | 18 February 2025 | Ganis, Alexander |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    .................................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 20 4705

This annex lists the patent family members relating to the patent documents cited in the above-mentioned European search report.
The members are as contained in the European Patent Office EDP file on
The European Patent Office is in no way liable for these particulars which are merely given for the purpose of information.

18-02-2025

| Patent document cited in search report | | Publication date | Patent family member(s) | | Publication date |
|---|---|---|---|---|---|
| CN 116390215 | A | 04-07-2023 | AU | 2022247599 A1 | 04-05-2023 |
| | | | AU | 2024278511 A1 | 09-01-2025 |
| | | | BR | 112023008540 A2 | 31-10-2023 |
| | | | CA | 3197153 A1 | 06-10-2022 |
| | | | CN | 115190573 A | 14-10-2022 |
| | | | CN | 116390215 A | 04-07-2023 |
| | | | CN | 117956559 A | 30-04-2024 |
| | | | EP | 4210401 A1 | 12-07-2023 |
| | | | JP | 2023552271 A | 15-12-2023 |
| | | | KR | 20230069988 A | 19-05-2023 |
| | | | US | 2024031828 A1 | 25-01-2024 |
| | | | WO | 2022206239 A1 | 06-10-2022 |
| US 2021120427 | A1 | 22-04-2021 | CN | 112689289 A | 20-04-2021 |
| | | | CN | 116600303 A | 15-08-2023 |
| | | | EP | 3809735 A1 | 21-04-2021 |
| | | | TW | 202118317 A | 01-05-2021 |
| | | | US | 2021120427 A1 | 22-04-2021 |
| | | | US | 2023269592 A1 | 24-08-2023 |
| WO 2023048636 | A2 | 30-03-2023 | CN | 118160245 A | 07-06-2024 |
| | | | EP | 4406155 A2 | 31-07-2024 |
| | | | JP | 2024535196 A | 30-09-2024 |
| | | | US | 2024406990 A1 | 05-12-2024 |
| | | | WO | 2023048636 A2 | 30-03-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63542328